# EUROPEAN PATENT APPLICATION

(11) **EP 4 485 999 A1**
(43) Date of publication of application: **01.01.2025**
(21) Application number: 23777943.4
(22) Date of filing: 22.03.2023
(51) Int. Cl.: H04W 28/08

(54) **COMMUNICATION METHOD AND APPARATUS**

(30) Priority: 28.03.2022 CN 202210313571
(71) Applicant: Huawei Technologies Co., Ltd., Shenzhen, Guangdong 518129 (CN)
(72) Inventor: HU, Yajie, Shenzhen, Guangdong 518129 (CN); YANG, Yanmei, Shenzhen, Guangdong 518129 (CN)
(74) Representative: Maiwald GmbH
(86) International application number: PCT/CN2023/083031
(87) International publication number: WO 2023/185572

(57) **Abstract**

Embodiments of this application provide a communication method and apparatus. The method may include: A first device obtains reference information, where the reference information includes at least one of the following information: a type of an application, a service continuity requirement of the application, an application context relocation ACR mode indicated by a client, an ACR mode indicated by a server, an ACR scenario indicated by the client, and an ACR scenario indicated by the server; and the first device determines an ACR mode for the application based on the reference information, where the ACR mode is a single-ACR mode or a multi-ACR mode. In this application, the first device selects, based on the reference information, whether an ACR mode is a single-ACR mode or a multi-ACR mode for an application, so that an appropriate ACR mode can be selected for an application based on an actual situation, to achieve a balance between signaling overheads and an interruption delay.

## Description

This application claims priority to Chinese Patent Application No. 202210313571.5, filed with the China National Intellectual Property Administration on March 28, 2022 and entitled "COMMUNICATION METHOD AND APPARATUS", which is incorporated herein by reference in its entirety.

### TECHNICAL FIELD

Embodiments of this application relate to the field of communication technologies, and more specifically, to a communication method and apparatus.

### BACKGROUND

In an edge computing (edge computing, EC) deployment scenario, a plurality of edge application servers (edge application servers, EASs) deployed at a network edge may provide edge application services for some services. In a running process of an edge application, in some cases, for example, when a terminal moves out of a current service area, an EAS that currently provides a service may not continue to provide a service for the currently running application, or an EAS that currently provides a service is no longer an optimal EAS that can provide a service for the terminal, and another EAS may be more suitable for serving the terminal. In this case, a new EAS may be selected to provide a service for the terminal, and application context relocation (application context relocation, ACR) is performed. Currently, a plurality of ACR scenarios are defined. To be specific, a plurality of function entities can detect and initiate ACR.

### SUMMARY

This application provides a communication method and apparatus. Whether an ACR mode is a single-ACR mode or a multi-ACR mode is selected for an application by considering some reference information, so that an appropriate ACR mode can be selected for the application according to an actual situation.

According to a first aspect, a communication method is provided. The method may be performed by a first device, or may be performed by a component (for example, a chip or a circuit) of the first device. This is not limited herein. For ease of description, the following uses an example in which the method is performed by the first device for description.

The method may include: A first device obtains reference information, where the reference information includes at least one of the following information: a type of an application, a service continuity requirement of the application, an application context relocation ACR mode indicated by a client, an ACR mode indicated by a server, an ACR scenario indicated by the client, and an ACR scenario indicated by the server; and the first device determines a first ACR mode for the application based on the reference information, where the first ACR mode is a single-ACR mode or a multi-ACR mode.

Based on the foregoing technical solution, the first device obtains the reference information, and determines, for an application based on the reference information, whether an ACR mode (for example, referred to as the first ACR mode) is a single-ACR mode or a multi-ACR mode, so that the first device can select an appropriate ACR mode for an application based on an actual situation. In this way, the selected ACR mode matches a capability of the application or a function entity, to achieve a balance between signaling overheads and an interruption delay. This can avoid, as much as possible, excessive signaling overheads caused by using a plurality of ACR scenarios for each application, and a large interruption delay caused by using one ACR scenario for each application. For example, if the reference information includes the type of the application and/or the service continuity requirement of the application, when determining an ACR mode for the application, the first device may determine the ACR mode for the application based on the type of the application and/or the service continuity requirement of the application. In this way, the ACR mode suitable for the application can be selected by considering a characteristic of the application and/or the service continuity requirement of the application. For another example, if the reference information includes the ACR mode indicated by the client and/or the server or the ACR scenario indicated by the client and/or the server, when determining an ACR mode for the application, the first device may determine the ACR mode for the application based on an ACR mode preferred by or an ACR scenario (for example, an ACR scenario supported by a capability of each function entity or a preferred ACR scenario) indicated by each function entity (for example, the client and/or the server). In this way, the determined ACR mode matches the capability of each function entity. This prevents a large interruption delay caused by untimely triggering.

With reference to the first aspect, in some implementations of the first aspect, the first ACR mode is the multi-ACR mode, and the method further includes: The first device determines at least two ACR scenarios in the multi-ACR mode for the application based on the reference information. Alternatively, the first ACR mode is the single-ACR mode, and the method further includes: The first device determines one ACR scenario in the single-ACR mode for the application based on the reference information.

Based on the foregoing technical solution, after the first device determines the ACR mode for the application, if the ACR mode is the single-ACR mode, the one ACR scenario in the single-ACR mode may be determined for the application based on the reference information; or if the ACR mode is the multi-ACR mode, the at least two ACR scenarios in the multi-ACR mode may be determined for the application based on the reference information.

With reference to the first aspect, in some implementations of the first aspect, the method further includes: The first device determines the at least two ACR scenarios in the multi-ACR mode for the application based on the reference information, where the method further includes: The first device sends the at least two ACR scenarios. Alternatively, the first device determines the one ACR scenario in the single-ACR mode for the application based on the reference information, where the method further includes: The first device sends the ACR scenario.

Based on the foregoing technical solution, after determining the one ACR scenario in the single-ACR mode or the at least two ACR scenarios in the multi-ACR mode for the application, the first device sends the determined ACR scenario.

With reference to the first aspect, in some implementations of the first aspect, the method further includes: The first device sends the first ACR mode.

Based on the foregoing technical solution, the first device may further send the ACR mode determined for the application.

With reference to the first aspect, in some implementations of the first aspect, the ACR scenario indicated by the client and/or the server is related to the type of the application and/or the service continuity requirement of the application.

Based on the foregoing technical solution, the ACR scenario indicated by the client and/or the server is related to the type of the application and/or the service continuity requirement of the application. In this way, when determining the ACR mode for the application, the first device may consider information related to the type of the application and/or the service continuity requirement of the application, so that the determined ACR mode matches the type of the application or the service continuity requirement of the application.

With reference to the first aspect, in some implementations of the first aspect, the ACR mode indicated by the client and/or the server is related to the type of the application and/or the service continuity requirement of the application.

With reference to the first aspect, in some implementations of the first aspect, the ACR scenario indicated by the client includes at least one of the following: an ACR scenario supported by the client, an ACR scenario determined based on the ACR scenario supported by the client, and an ACR scenario determined based on the type of the application and/or the service continuity requirement of the application; and/or the ACR scenario indicated by the server includes at least one of the following: an ACR scenario supported by the server, an ACR scenario determined based on the ACR scenario supported by the server, and an ACR scenario determined based on the type of the application and/or the service continuity requirement of the application.

With reference to the first aspect, in some implementations of the first aspect, the reference information includes information about at least one ACR scenario. That the first device determines a first ACR mode for the application based on the reference information includes: If an intersection set of the at least one ACR scenario includes a plurality of ACR scenarios, the first device determines, based on the reference information for the application, that the first ACR mode is the multi-ACR mode. Alternatively, if an intersection set of the at least one ACR scenario includes one ACR scenario, the first device determines, based on the reference information for the application, that the first ACR mode is the single-ACR mode.

Based on the foregoing technical solution, when the first device determines the ACR mode for the application based on the at least one ACR scenario, if the intersection set of the at least one ACR scenario includes a plurality of ACR scenarios, the first device determines, based on the reference information for the application, that the ACR mode is the multi-ACR mode; or if the intersection set of the at least one ACR scenario includes one ACR scenario, the first device determines, based on the reference information for the application, that the ACR mode is the single-ACR mode. In this way, requirements of each function entity (such as the client and/or the server) can be met.

With reference to the first aspect, in some implementations of the first aspect, the first device is an edge enabler server (edge enabler server, EES).

Based on the foregoing technical solution, the EES may determine the ACR mode for the application based on the reference information.

With reference to the first aspect, in some implementations of the first aspect, the obtaining, by a first device, reference information includes at least one of the following: The EES receives at least one of the following information from an edge enabler client (edge enabler client, EEC): the type of the application, the service continuity requirement of the application, the ACR mode indicated by the client, or the ACR scenario indicated by the client, where the client is the EEC and/or an application client (application client, AC); the EES receives the ACR scenario indicated by the server and/or the ACR mode indicated by the server from an edge application server (edge application server, EAS), where the server is the EAS; or the EES configures the ACR scenario indicated by the server and/or the ACR mode indicated by the server, where the server is the EES.

For example, the reference information provided by the EEC to the EES may include information configured by the EEC and/or information received by the EEC. For example, the reference information provided by the EEC is configured by the EEC. For another example, in the reference information provided by the EEC, the type of the application, the service continuity requirement of the application, the ACR scenario indicated by the AC, and the ACR mode indicated by the AC may be received by the EEC from an AC side.

Based on the foregoing technical solution, the EES may receive the reference information from the EEC and/or reference information of the EAS, or may configure reference information by itself. When the EES obtains reference information in different manners, the obtained reference information may be different.

With reference to the first aspect, in some implementations of the first aspect, the method further includes at least one of the following: The EES sends the first ACR mode to the EAS and/or the EEC; the EES sends the first ACR mode to the AC via the EEC; the EES sends the at least two ACR scenarios in the multi-ACR mode to the EAS and/or the EEC, or the EES sends the one ACR scenario in the single-ACR mode to the EAS and/or the EEC; or the EES sends the at least two ACR scenarios in the multi-ACR mode to the AC via the EEC, or the EES sends the one ACR scenario in the single-ACR mode to the AC via the EEC.

That the EES sends the ACR scenario to the AC via the EEC may be understood as that the EES sends the ACR scenario to the EEC and the EEC sends the ACR scenario to the AC. For example, after receiving the ACR scenario, the EEC directly forwards the ACR scenario to the AC. For another example, after receiving the ACR scenario, the EEC forwards the ACR scenario to the AC when determining (or determining) that the AC needs the ACR scenario.

Based on the foregoing technical solution, the EES may send the ACR mode determined for the application to at least one of the EEC, the EAS, and the AC, or the EES may send the ACR scenario in the ACR mode determined for the application to at least one of the EEC, the EAS, and the AC.

With reference to the first aspect, in some implementations of the first aspect, the first device is an edge enabler client EEC.

Based on the foregoing technical solution, the EEC may determine the ACR mode for the application based on the reference information.

With reference to the first aspect, in some implementations of the first aspect, that a first device obtains reference information includes at least one of the following: The EEC receives the ACR mode indicated by the server and/or the ACR scenario indicated by the server from an edge enabler server EES, where the server is the EES and/or an edge application server EAS; the EEC receives at least one of the following information from an application client AC: the type of the application, the service continuity requirement of the application, the ACR mode indicated by the client, or the ACR scenario indicated by the client, where the client is the AC; or the EEC configures the ACR scenario indicated by the client and/or the ACR mode indicated by the server, where the client is the EEC.

For example, the reference information provided by the EES to the EEC may include information configured by the EES and/or information received by the EES. For example, the reference information provided by the EES is configured by the EES. For another example, in the foregoing reference information provided by the EES, the ACR scenario indicated by the EAS and the ACR mode indicated by the EAS may be received by the EES from an EAS side.

Based on the foregoing technical solution, the EEC may receive the reference information from the EES and/or reference information of the AC, or the EEC may configure reference information by itself. When the EEC obtains reference information in different manners, the obtained reference information may be different.

With reference to the first aspect, in some implementations of the first aspect, the method further includes at least one of the following: The EEC sends the first ACR mode to the EES and/or the AC; the EEC sends the first ACR mode to the EAS via the EES; the EEC sends the at least two ACR scenarios in the multi-ACR mode to the EES and/or the AC, or the EEC sends the one ACR scenario in the single-ACR mode to the EES and/or the AC; or the EEC sends the at least two ACR scenarios in the multi-ACR mode to the EAS via the EES, or the EEC sends the one ACR scenario in the single-ACR mode to the EAS via the EES.

That the EEC sends the ACR scenario to the EAS via the EES may be understood as that the EEC sends the ACR scenario to the EES and the EES sends the ACR scenario to the EAS. For example, after receiving the ACR scenario, the EES directly forwards the ACR scenario to the EAS. For another example, after receiving the ACR scenario, the EES forwards the ACR scenario to the EAS when determining (or determining) that the EAS needs the ACR scenario.

Based on the foregoing technical solution, the EEC may send the ACR mode determined for the application to at least one of the EES, the AC, and the EAS, or the EEC may send the ACR scenario in the ACR mode determined for the application to at least one of the EES, the AC, and the EAS.

With reference to the first aspect, in some implementations of the first aspect, the first device is an edge application server EAS.

Based on the foregoing technical solution, the EAS may determine the ACR mode for the application based on the reference information.

With reference to the first aspect, in some implementations of the first aspect, that a first device obtains reference information includes: The EAS receives at least one of the following information from an edge enabler server EES: the type of the application, the service continuity requirement of the application, the ACR mode indicated by the client, the ACR mode indicated by the server, the ACR scenario indicated by the client, and the ACR scenario indicated by the server, where the client is an application client AC and/or an edge enabler client ECS, and the server is the EES; and/or the EAS configures the ACR mode indicated by the server and/or the ACR scenario indicated by the server, where the server is the EAS.

For example, the reference information provided by the EES to the EAS may include information configured by the EES and/or information received by the EES. For example, the reference information provided by the EES is configured by the EES. For another example, in the foregoing reference information provided by the EES, the type of the application, the service continuity requirement of the application, the ACR mode indicated by the AC, the ACR mode indicated by the EEC, the ACR scenario indicated by the AC, and the ACR scenario indicated by the EEC may be received by the EES from an EEC side.

Based on the foregoing technical solution, the EAS may receive reference information from the EES, or the EAS may configure reference information by itself. When the EAS obtains reference information in different manners, the obtained reference information may be different.

With reference to the first aspect, in some implementations of the first aspect, the method further includes at least one of the following: The EAS sends the first ACR mode to the EES; the EAS sends the first ACR mode to the EEC via the EES; the EAS sends the first ACR mode to the AC via the EES and the EEC; the EAS sends the at least two ACR scenarios in the multi-ACR mode to the EES, or the EAS sends the one ACR scenario in the single-ACR mode to the EES; the EAS sends the at least two ACR scenarios in the multi-ACR mode to the EEC via the EES, or the EAS sends the one ACR scenario in the single-ACR mode to the EEC via the EES; or the EAS sends the at least two ACR scenarios in the multi-ACR mode to the AC via the EES and the EEC, or the EAS sends the one ACR scenario in the single-ACR mode to the AC via the EES and the EEC.

That the EAS sends the ACR scenario to the AC via the EES and the EEC may be understood as that the EAS sends the ACR scenario to the EES, then the EES sends the ACR scenario to the EEC, and then the EEC sends the ACR scenario to the AC.

Based on the foregoing technical solution, the EAS may send the ACR mode determined for the application to the EES, and after receiving the ACR mode, the EES may send the ACR mode to the EEC and/or send the ACR mode to the AC via the EEC; or the EAS may send the ACR scenario in the ACR mode determined for the application to the EES, and after receiving the ACR scenario in the ACR mode, the EES may send the ACR scenario in the ACR mode to the EEC and/or send the ACR scenario to the AC via the EEC.

With reference to the first aspect, in some implementations of the first aspect, the method further includes: The first device receives an ACR mode subscription request from a second device; and the first device sends the first ACR mode determined for the application to the second device.

Optionally, the first device sends an ACR mode subscription response to the second device, where the ACR mode subscription response includes the first ACR mode.

The ACR mode subscription request, for example, may also be referred to as ACR mode selection subscription (ACR mode selection subscription).

Optionally, the first device further sends an ACR scenario in the first ACR mode (for example, the one ACR scenario in the single-ACR mode, or the at least two ACR scenarios in the multi-ACR mode) to the second device. For example, the first device sends the ACR mode subscription response to the second device, where the ACR mode subscription response includes the ACR scenario in the first ACR mode.

For example, the second device is an AC, and the first device is an EEC.

For example, the second device is an EAS, and the first device is an EES.

For example, the second device is an EEC, and the first device is an EES.

For example, the second device is an AC, and the first device is an EES or an EAS. For example, the AC sends an ACR mode subscription request to the EEC, and the EEC sends the ACR mode subscription request to the EES. Correspondingly, after receiving the first ACR mode from the EES, the EEC sends the first ACR mode to the AC.

Based on the foregoing technical solution, after receiving the ACR mode subscription request from the second device, the first device may determine the first ACR mode for an application based on the reference information, and may notify the second device of the first ACR mode and/or the ACR scenario in the first ACR mode, for example, may notify the second device in an ACR mode subscription procedure. In this way, the ACR mode may be determined for the application when necessary, thereby reducing a waste of resources.

With reference to the first aspect, in some implementations of the first aspect, that the first device determines the first ACR mode for the application based on the reference information includes: If the application has a high service continuity requirement, the first device determines that the first ACR mode is the multi-ACR mode.

As an example, the service continuity requirement of the application may be represented by maximum tolerance time of the application for service interruption. For example, if the maximum tolerance time of the application for the service interruption is less than a preset threshold, it may be understood as that the application has a high service continuity requirement. In other words, that the application has a high service continuity requirement may be replaced with that the maximum tolerance time of the application for the service interruption is less than the preset threshold.

In another example, the service continuity requirement of the application may be represented by an application type. In other words, the application type may reflect the service continuity requirement of the application. For example, if the application is a game application, it may be understood as that the application has a high service continuity requirement. Specifically, the game application may be considered to have a high service continuity requirement, and service interruption for a period of time has obvious impact on user experience. For another example, if the application is a chat application, it may be understood as that the application has a low service continuity requirement. Specifically, the chat application may be considered to have a low service continuity requirement, and service interruption for a period of time has no obvious impact on user experience.

In another example, the service continuity requirement of the application may be represented by a data exchange amount within a unit time (which may also be considered as a bandwidth, where a larger bandwidth indicates faster data transmission). In other words, the data exchange amount within the unit time may reflect the service continuity requirement of the application. For example, if the data exchange amount in the unit time is greater than a preset value, it may be understood as that the application has a high service continuity requirement. In other words, that the application has a high service continuity requirement may be replaced with that the data exchange amount in the unit time is greater than the preset value. Specifically, for an application with a large data exchange amount in a unit time, a large amount of data is lost due to service interruption for a period of time, thereby significantly affecting service quality. For another example, if the data exchange amount in the unit time is less than a preset value, it may be understood as that the application has a low service continuity requirement. In other words, that the application has a low service continuity requirement may be replaced with that the data exchange amount in the unit time is less than the preset value. Specifically, for an application with a small data exchange amount in a unit time, a large amount of data is not lost due to service interruption for a period of time, thereby insignificantly affecting service quality.

Based on the foregoing technical solution, if the application has a high service continuity requirement, the ACR mode determined for the application is the multi-ACR mode, so that a large interruption delay caused by untimely triggering can be avoided.

With reference to the first aspect, in some implementations of the first aspect, that the first device determines the first ACR mode for the application based on the reference information includes: If the application has a low service continuity requirement, the first device determines that the first ACR mode is the single-ACR mode.

As an example, the service continuity requirement of the application may be represented by maximum tolerance time of the application for service interruption. For example, if the maximum tolerance time of the application for the service interruption is greater than a preset threshold, it may be understood as that the application has a low service continuity requirement. In other words, that the application has a low service continuity requirement may be replaced with that the maximum tolerance time of the application for the service interruption is greater than the preset threshold.

Based on the foregoing technical solution, if the application has a low service continuity requirement, the ACR mode determined for the application is the single-ACR mode, so that duplicated detection of an ACR event can be reduced.

With reference to the first aspect, in some implementations of the first aspect, the server includes at least one of the following: an edge configuration server, an edge enabler server, or an edge application server.

With reference to the first aspect, in some implementations of the first aspect, the client includes at least one of the following: an edge enabler client or an application client.

According to a second aspect, a communication method is provided. The method may be performed by a second device, or may be performed by a component (for example, a chip or a circuit) of the second device. This is not limited herein. For ease of description, the following uses an example in which the method is performed by the second device for description.

The method may include: A second device obtains reference information, where the reference information includes at least one of the following: a type of an application, a service continuity requirement of the application, an application context relocation ACR mode indicated by a client, an ACR mode indicated by a server, an ACR scenario indicated by the client, and an ACR scenario indicated by the server; and the second device sends the reference information to the first device.

It may be understood that, that the second device sends the reference information to the first device may be that the second device directly sends the reference information to the first device, or may be that the second device sends the reference information to the first device via another device. This is not limited.

Based on the foregoing technical solution, the second device may provide some reference information for the first device, so that the first device determines, based on the reference information, whether an ACR mode is a single-ACR mode or a multi-ACR mode for the application. In this way, the first device may select an appropriate ACR mode based on an actual situation, so that the selected ACR mode matches a capability of the application or a function entity. This can avoid, as much as possible, duplicated detection of an ACR event and a large interruption delay caused by untimely triggering. For example, if the reference information provided by the second device to the first device includes the type of the application and/or the service continuity requirement of the application, when determining an ACR mode for the application, the first device may determine the ACR mode for the application based on the type of the application and/or the service continuity requirement of the application. In this way, the ACR mode suitable for the application can be selected by considering a characteristic of the application and/or the service continuity requirement of the application. For another example, if the reference information provided by the second device to the first device includes the ACR mode indicated by the client and/or the server or the ACR scenario indicated by the client and/or the server, when determining an ACR mode for the application, the first device may determine the ACR mode for the application based on an ACR mode preferred by or an ACR scenario (for example, an ACR scenario supported by a capability of each function entity or a preferred ACR scenario) indicated by each function entity (for example, the client and/or the server). In this way, the determined ACR mode matches the capability of each function entity. This prevents a large interruption delay caused by untimely triggering.

With reference to the second aspect, in some implementations of the second aspect, the method further includes: The second device receives a first ACR mode from the first device, where the first ACR mode is determined based on the reference information, and the first ACR mode is a single-ACR mode or a multi-ACR mode.

With reference to the second aspect, in some implementations of the second aspect, the first ACR mode is the multi-ACR mode, and the method further includes: The second device receives at least two ACR scenarios in the multi-ACR mode from the first device. Alternatively, the first ACR mode is the single-ACR mode, and the method further includes: The second device receives one ACR scenario in the single-ACR mode from the first device.

With reference to the second aspect, in some implementations of the second aspect, the ACR scenario indicated by the client and/or the server is related to the type of the application and/or the service continuity requirement of the application.

With reference to the second aspect, in some implementations of the second aspect, the ACR scenario indicated by the client includes at least one of the following: an ACR scenario supported by the client, an ACR scenario determined based on the ACR scenario supported by the client, and an ACR scenario determined based on the type of the application and/or the service continuity requirement of the application; and/or the ACR scenario indicated by the server includes at least one of the following: an ACR scenario supported by the server, an ACR scenario determined based on the ACR scenario supported by the server, and an ACR scenario determined based on the type of the application and/or the service continuity requirement of the application.

With reference to the second aspect, in some implementations of the second aspect, the second device is an application client AC.

Based on the foregoing technical solution, the AC may provide the reference information for the first device (for example, any one of an EEC, an EES, or an EAS), so that the first device can determine the ACR mode for the application based on the reference information provided by the AC.

With reference to the second aspect, in some implementations of the second aspect, that a second device obtains reference information includes: The AC configures at least one of the following information: the type of the application, the service continuity requirement of the application, the ACR mode indicated by the client, or the ACR scenario indicated by the client, where the client is the AC.

With reference to the second aspect, in some implementations of the second aspect, the first device is any one of the following: an edge enabler client EEC, an edge enabler server EES, or an edge application server EAS. That the second device sends the reference information to a first device includes at least one of the following: When the first device is the EEC, the AC sends the reference information to the EEC; when the first device is the EES, the AC sends the reference information to the EES via the EEC; or when the first device is the EAS, the AC sends the reference information to the EAS via the EEC and the EES.

That the AC sends the reference information to the EES via the EEC may be understood as that the AC sends the reference information to the EEC and the EEC sends the reference information to the EES.

That the AC sends the reference information to the EAS via the EEC and the EES may be understood as that the AC sends the reference information to the EEC, the EEC sends the reference information to the EES, and the EES sends the reference information to the EAS.

With reference to the second aspect, in some implementations of the second aspect, the first device is any one of the following: an edge enabler client EEC, an edge enabler server EES, or an edge application server EAS. The method further includes: When the first device is the EEC, the AC receives the first ACR mode and/or an ACR scenario in the first ACR mode (for example, the one ACR scenario in the single-ACR mode, or the at least two ACR scenarios in the multi-ACR mode) from the EEC; when the first device is the EES, the AC receives the first ACR mode and/or an ACR scenario in the first ACR mode (for example, the one ACR scenario in the single-ACR mode, or the at least two ACR scenarios in the multi-ACR mode) from the EES via the EEC; or when the first device is the EAS, the AC receives the first ACR mode and/or an ACR scenario in the first ACR mode (for example, the one ACR scenario in the single-ACR mode, or the at least two ACR scenarios in the multi-ACR mode) from the EAS via the EEC and the EES.

Based on the foregoing technical solution, when the first device is the EEC, the AC may directly receive the ACR mode and/or the ACR scenario in the ACR mode from the EEC; when the first device is the EES, the EEC may first obtain the ACR mode and/or the ACR scenario in the ACR mode, and then notify the AC; or when the first device is the EAS, the EES may first obtain the ACR mode and/or the ACR scenario in the ACR mode and send the ACR mode and/or the ACR scenario in the ACR mode to the EEC, and then the EEC notifies the AC.

With reference to the second aspect, in some implementations of the second aspect, the second device is an edge enabler client EEC.

Based on the foregoing technical solution, the EEC may provide the reference information for the first device (for example, the EES or the EAS), so that the first device can determine the ACR mode for the application based on the reference information provided by the EEC.

With reference to the second aspect, in some implementations of the second aspect, that a second device obtains reference information includes: The EEC configures the ACR mode indicated by the client and/or the ACR scenario indicated by the client, where the client is the EEC; and/or the EEC receives the reference information from an application client AC, where the reference information includes at least one of the following: the type of the application, the service continuity requirement of the application, the ACR mode indicated by the client, or the ACR scenario indicated by the client, where the client is the AC.

With reference to the second aspect, in some implementations of the second aspect, the first device is an edge enabler server EES or an edge application server EAS. That the second device sends the reference information to a first device includes: When the first device is the EES, the EEC sends the reference information to the EES; or when the first device is the EAS, the EEC sends the reference information to the EAS via the EES.

For example, that the EEC sends the reference information to the EAS via the EES may be understood as that the EEC sends the reference information to the EES, and after receiving the reference information, the EES sends the reference information to the EAS. For example, after receiving the reference information, the EES directly forwards the reference information to the EAS. For another example, after receiving the reference information, the EES forwards the reference information to the EAS if it is determined (or determined) that the EAS needs the reference information.

With reference to the second aspect, in some implementations of the second aspect, the first device is an edge enabler server EES or an edge application server EAS. The method further includes: When the first device is the EES, the EEC receives the first ACR mode and/or an ACR scenario in the first ACR mode (for example, the one ACR scenario in the single-ACR mode, or the at least two ACR scenarios in the multi-ACR mode) from the EES; or when the first device is the EAS, the EEC receives the first ACR mode and/or an ACR scenario in the first ACR mode (for example, the one ACR scenario in the single-ACR mode, or the at least two ACR scenarios in the multi-ACR mode) from the EAS via the EES.

Based on the foregoing technical solution, when the first device is the EES, the EEC may directly receive the first ACR mode and/or the ACR scenario in the first ACR mode (for example, the one ACR scenario in the single-ACR mode, or the at least two ACR scenarios in the multi-ACR mode) from the EES. When the first device is the EAS, the EES may first obtain the first ACR mode and/or the ACR scenario in the first ACR mode (for example, the one ACR scenario in the single-ACR mode, or the at least two ACR scenarios in the multi-ACR mode), and then notify the EEC.

With reference to the second aspect, in some implementations of the second aspect, after the second device receives the first ACR mode and/or the ACR scenario in the first ACR mode (for example, the one ACR scenario in the single-ACR mode, or the at least two ACR scenarios in the multi-ACR mode) from the first device, the method further includes: The EEC sends the first ACR mode and/or the ACR scenario in the first ACR mode (for example, the one ACR scenario in the single-ACR mode, and the at least two ACR scenarios in the multi-ACR mode) to the AC.

Based on the foregoing technical solution, the EEC may send the ACR mode and/or the ACR scenario in the ACR mode (for example, the one ACR scenario in the single-ACR mode, or the at least two ACR scenarios in the multi-ACR mode) to the AC, where the information may be carried in any message exchanged between the AC and the EEC, for example, a message in a registration procedure, or a message in an ACR mode subscription procedure.

With reference to the second aspect, in some implementations of the second aspect, the second device is an edge application server EAS.

Based on the foregoing technical solution, the EAS may provide the reference information for the first device (for example, the EEC or the EES), so that the first device can determine the ACR mode for the application based on the reference information provided by the EAS.

With reference to the second aspect, in some implementations of the second aspect, that the second device obtains reference information includes: The EAS configures the ACR mode indicated by the server and/or the ACR scenario indicated by the server, where the server is the EAS.

With reference to the second aspect, in some implementations of the second aspect, the first device is an edge enabler server EES or an edge enabler client EEC. That the second device sends the reference information to a first device includes: When the first device is the EES, the EAS sends the reference information to the EES; or when the first device is the EEC, the EAS sends the reference information to the EEC via the EES.

With reference to the second aspect, in some implementations of the second aspect, the first device is an edge enabler server EES or an edge enabler client EEC. The method further includes: When the first device is the EES, the EAS receives the first ACR mode and/or an ACR scenario in the first ACR mode (for example, the one ACR scenario in the single-ACR mode, or the at least two ACR scenarios in the multi-ACR mode) from the EES; or when the first device is the EEC, the EAS receives the first ACR mode and/or an ACR scenario in the first ACR mode (for example, the one ACR scenario in the single-ACR mode, or the at least two ACR scenarios in the multi-ACR mode) from the EEC via the EES.

Based on the foregoing technical solution, when the first device is an EES, the EAS may directly receive the ACR mode and/or the ACR scenario in the ACR mode from the EES; or when the first device is the EEC, the EES may first obtain the ACR mode and/or the ACR scenario in the ACR mode, and then notify the EAS.

With reference to the second aspect, in some implementations of the second aspect, the second device is an edge enabler server EES.

Based on the foregoing technical solution, the EES may provide the reference information for the first device (for example, the EEC or the EAS), so that the first device can determine the ACR mode for the application based on the reference information provided by the EES.

With reference to the second aspect, in some implementations of the second aspect, that the second device obtains reference information includes at least one of the following: The EES configures the ACR mode indicated by the server and/or the ACR scenario indicated by the server, where the server is the EES; the EES receives the ACR mode indicated by the server and/or the ACR scenario indicated by the server from an edge application server EAS, where the server is the EAS; or the EES receives at least one of the following information from an edge enabler client EEC: the type of the application, the service continuity requirement of the application, the ACR mode indicated by the client, or the ACR scenario indicated by the client, where the client is the EEC and/or an application client AC.

With reference to the second aspect, in some implementations of the second aspect, the first device is an edge enabler client EEC or an edge application server EAS. That the second device sends the reference information to a first device includes: The EES sends the reference information to the EEC or the EAS.

With reference to the second aspect, in some implementations of the second aspect, the first device is an edge enabler client EEC or an edge application server EAS. The method further includes: When the first device is the EEC, after the EES receives the first ACR mode and/or the ACR scenario in the first ACR mode (for example, the one ACR scenario in the single-ACR mode, or the at least two ACR scenarios in the multi-ACR mode) from the EEC, the EES sends the first ACR mode and/or the ACR scenario in the first ACR mode (for example, the one ACR scenario in the single-ACR mode, and the at least two ACR scenarios in the multi-ACR mode) to the EAS; or When the first device is the EAS, after the EES receives the first ACR mode and/or the ACR scenario in the first ACR mode (for example, the one ACR scenario in the single-ACR mode, or the at least two ACR scenarios in the multi-ACR mode) from the EAS, the EES sends the first ACR mode and/or the ACR scenario in the first ACR mode (for example, the one ACR scenario in the single-ACR mode, and the at least two ACR scenarios in the multi-ACR mode) to the EEC; and/or the EES ends the first ACR mode and/or the ACR scenario in the first ACR mode (for example, the one ACR scenario in the single-ACR mode, and the at least two ACR scenarios in the multi-ACR mode) to the AC via the EEC.

With reference to the second aspect, in some implementations of the second aspect, the server includes at least one of the following: an edge configuration server, an edge enabler server, or an edge application server.

With reference to the second aspect, in some implementations of the second aspect, the client includes at least one of the following: an edge enabler client or an application client.

With reference to the second aspect, in some implementations of the second aspect, the method further includes: The second device sends an ACR mode subscription request to the first device; and the second device receives the first ACR mode from the first device.

Optionally, the second device receives the ACR scenario (for example, the one ACR scenario in the single-ACR mode, or the at least two ACR scenarios in the multi-ACR mode) in the first ACR mode from the first device.

For example, the second device is an AC, and the first device is an EEC.

For example, the second device is an EAS, and the first device is an EES.

For example, the second device is an EEC, and the first device is an EES.

For example, the second device is an AC, and the first device is an EES or an EAS. For example, the AC sends an ACR mode subscription request to the EEC, and the EEC sends the ACR mode subscription request to the EES. Correspondingly, after receiving the first ACR mode from the EES, the EEC sends the first ACR mode to the AC.

With reference to the second aspect, in some implementations of the second aspect, if the application has a high service continuity requirement, the first ACR mode is the multi-ACR mode.

For a related solution of the service continuity requirement of the application, refer to the descriptions in the first aspect. Details are not described herein again.

With reference to the second aspect, in some implementations of the second aspect, if the application has a low service continuity requirement, the first ACR mode is the single-ACR mode.

For beneficial effects of the second aspect and the possible designs, refer to related descriptions of the first aspect. Details are not described herein again.

According to a third aspect, a communication method is provided. The method may be performed by a second device, or may be performed by a component (for example, a chip or a circuit) of the second device. This is not limited herein. For ease of description, the following uses an example in which the method is performed by the second device for description.

The method may include: A second device sends reference information to a first device, where the reference information includes at least one of the following: a type of an application, a service continuity requirement of the application, an application context relocation ACR mode indicated by a client, an ACR mode indicated by a server, an ACR scenario indicated by the client, and an ACR scenario indicated by the server.

It may be understood that, that the second device sends the reference information to the first device may be that the second device directly sends the reference information to the first device, or may be that the second device sends the reference information to the first device via another device. This is not limited.

With reference to the third aspect, in some implementations of the third aspect, the method further includes: The second device receives a first ACR mode from the first device, where the first ACR mode is determined based on the reference information, and the first ACR mode is a single-ACR mode or a multi-ACR mode.

With reference to the third aspect, in some implementations of the third aspect, the first ACR mode is the multi-ACR mode, and the method further includes: The second device receives at least two ACR scenarios in the multi-ACR mode from the first device. Alternatively, the first ACR mode is the single-ACR mode, and the method further includes: The second device receives one ACR scenario in the single-ACR mode from the first device.

With reference to the third aspect, in some implementations of the third aspect, the method further includes: The second device obtains the reference information.

For possible designs and beneficial effects in the third aspect, refer to related descriptions in the second aspect. Details are not described herein again.

According to a fourth aspect, a communication method is provided. The method may be performed by a second device, or may be performed by a component (for example, a chip or a circuit) of the second device. This is not limited herein. For ease of description, the following uses an example in which the method is performed by the second device for description.

The method may include: A second device obtains reference information, where the reference information includes at least one of the following: a type of an application, a service continuity requirement of the application, an application context relocation ACR mode indicated by a client, an ACR mode indicated by a server, an ACR scenario indicated by the client, and an ACR scenario indicated by the server.

With reference to the fourth aspect, in some implementations of the fourth aspect, the method further includes: The second device receives a first ACR mode from a first device, where the first ACR mode is determined based on the reference information, and the first ACR mode is a single-ACR mode or a multi-ACR mode.

With reference to the fourth aspect, in some implementations of the fourth aspect, the first ACR mode is the multi-ACR mode, and the method further includes: The second device receives at least two ACR scenarios in the multi-ACR mode from the first device. Alternatively, the first ACR mode is the single-ACR mode, and the method further includes: The second device receives one ACR scenario in the single-ACR mode from the first device.

With reference to the fourth aspect, in some implementations of the fourth aspect, the method further includes: The second device sends the reference information.

For possible designs and beneficial effects of the fourth aspect, refer to related descriptions of the second aspect. Details are not described herein again.

According to a fifth aspect, a communication method is provided. The method may be performed by a second device, or may be performed by a component (for example, a chip or a circuit) of the second device. This is not limited herein. For ease of description, the following uses an example in which the method is performed by the second device for description.

The method may include: A second device receives a first ACR mode from a first device, where the first ACR mode is determined based on reference information, the first ACR mode is a single-ACR mode or a multi-ACR mode, and the reference information includes at least one of the following: a type of an application, a service continuity requirement of the application, an application context relocation ACR mode indicated by a client, an ACR mode indicated by a server, an ACR scenario indicated by the client, and an ACR scenario indicated by the server.

With reference to the fifth aspect, in some implementations of the fifth aspect, the first ACR mode is the multi-ACR mode, and the method further includes: The second device receives at least two ACR scenarios in the multi-ACR mode from the first device. Alternatively, the first ACR mode is the single-ACR mode, and the method further includes: The second device receives one ACR scenario in the single-ACR mode from the first device.

With reference to the fifth aspect, in some implementations of the fifth aspect, the method further includes: The second device sends the reference information.

With reference to the fifth aspect, in some implementations of the fifth aspect, the method further includes: The second device obtains the reference information.

For possible designs and beneficial effects of the fifth aspect, refer to related descriptions of the second aspect. Details are not described herein again.

According to a sixth aspect, a communication method is provided. The method may be performed by a second device, or may be performed by a component (for example, a chip or a circuit) of the second device. This is not limited herein. For ease of description, the following uses an example in which the method is performed by the second device for description.

The method may include: A second device obtains reference information, where the reference information includes at least one of the following: a type of an application, a service continuity requirement of the application, an application context relocation ACR mode indicated by a client, an ACR mode indicated by a server, an ACR scenario indicated by the client, and an ACR scenario indicated by the server.

With reference to the sixth aspect, in some implementations of the sixth aspect, the method further includes: The second device receives a first ACR mode from a first device, where the first ACR mode is determined based on the reference information, and the first ACR mode is a single-ACR mode or a multi-ACR mode.

With reference to the sixth aspect, in some implementations of the sixth aspect, the first ACR mode is the multi-ACR mode, and the method further includes: The second device receives at least two ACR scenarios in the multi-ACR mode from the first device. Alternatively, the first ACR mode is the single-ACR mode, and the method further includes: The second device receives one ACR scenario in the single-ACR mode from the first device.

With reference to the sixth aspect, in some implementations of the sixth aspect, the method further includes: The second device sends the reference information.

For possible designs and beneficial effects of the sixth aspect, refer to related descriptions of the second aspect. Details are not described herein again.

According to a seventh aspect, a communication apparatus is provided. The apparatus is configured to perform the method according to any one of the possible implementations of the first aspect to the sixth aspect. Specifically, the apparatus may include units and/or modules configured to perform the method according to any one of the possible implementations of the first aspect to the sixth aspect, for example, a processing unit and/or a communication unit.

In an implementation, the apparatus is a communication device (for example, a first device or a second device). When the apparatus is a core network element, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a first device or a second device). When the apparatus is a chip, a chip system, or a circuit used in a core network element, the communication unit may be an input/output interface, an interface circuit, an output circuit, an input circuit, a pin, a related circuit, or the like on the chip, the chip system, or the circuit. The processing unit may be at least one processor, processing circuit, logic circuit, or the like.

According to an eighth aspect, a communication apparatus is provided. The apparatus includes at least one processor, configured to execute a computer program or instructions stored in a memory, to perform the method according to any one of the possible implementations of the first aspect to the sixth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device (for example, a first device or a second device).

In another implementation, the apparatus is a chip, a chip system, or a circuit used in a communication device (for example, a first device or a second device).

According to a ninth aspect, this application provides a processor, configured to perform the method provided in each of the foregoing aspects.

Unless otherwise specified, or if the operations such as sending and obtaining/receiving related to the processor do not conflict with actual functions or internal logic of the processor in related descriptions, the operations may be understood as operations such as output, receiving, and input of the processor, or may be understood as sending and receiving operations performed by a radio frequency circuit and an antenna. This is not limited in this application.

According to a tenth aspect, a computer-readable storage medium is provided. The computer-readable storage medium stores program code to be executed by a device, and the program code is for performing the method according to any one of the possible implementations of the first aspect to the sixth aspect.

According to an eleventh aspect, a computer program product including instructions is provided. When the computer program product runs on a computer, the computer is enabled to perform the method according to any one of the possible implementations of the first aspect to the sixth aspect.

According to a twelfth aspect, a communication system is provided, and includes the foregoing first device and second device.

### BRIEF DESCRIPTION OF DRAWINGS

FIG. 1 is a schematic diagram of a system architecture to which an embodiment of this application is applicable;
FIG. 2 is an implementation of application context relocation applicable to an embodiment of this application;
FIG. 3 is another implementation of application context relocation applicable to an embodiment of this application;
FIG. 4 is another implementation of application context relocation applicable to an embodiment of this application;
FIG. 5 is another implementation of application context relocation applicable to an embodiment of this application;
FIG. 6 is another implementation of application context relocation applicable to an embodiment of this application;
FIG. 7 is a schematic diagram of a communication method 700 according to an embodiment of this application;
FIG. 8 is a schematic flowchart of a communication method 800 according to an embodiment of this application;
FIG. 9 is a schematic flowchart of a communication method 900 according to an embodiment of this application;
FIG. 10 is a schematic flowchart of a communication method 1000 according to an embodiment of this application;
FIG. 11 is a schematic flowchart of a communication method 1100 according to an embodiment of this application;
FIG. 12 is a schematic flowchart of a communication method 1200 according to an embodiment of this application;
FIG. 13 is a schematic flowchart of a communication method 1300 according to an embodiment of this application;
FIG. 14 is a schematic diagram of subscribing to an ACR mode according to an embodiment of this application;
FIG. 15 is a schematic diagram of a communication apparatus 1500 according to an embodiment of this application;
FIG. 16 is a schematic diagram of another communication apparatus 1600 according to an embodiment of this application; and
FIG. 17 is a schematic diagram of a chip system 1700 according to an embodiment of this application.

### DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system or a long term evolution (long term evolution, LTE) system. The technical solutions provided in this application may be further applied to a future communication system, for example, a 6th generation (6th generation, 6G) mobile communication system. The technical solutions provided in this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

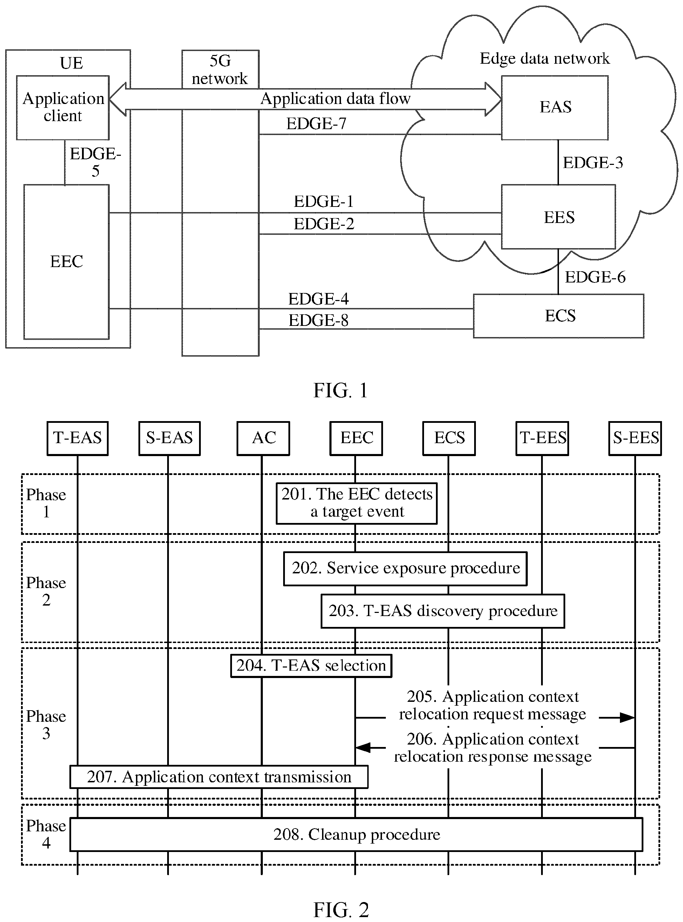

FIG. 1 is a schematic diagram of a system architecture to which an embodiment of this application is applicable. The following separately describes each part in the network architecture shown in FIG. 1.

### 1. Edge data network (edge data network, EDN)

Commonly, an EDN corresponds to a data network and is a special local data network (local DN). The EDN includes an edge enabler function, may be identified by using a data network access identifier (DN Access Identifier, DNAI) and a DNN, and is a network logical concept.

In another understanding of the EDN, the EDN is a peer concept of a central cloud. The EDN may be understood as a local data center (geographical location concept), may be identified by a DNAI, and may include a plurality of local data networks (local DNs).

As shown in FIG. 1, the EDN may include at least one edge enabler server (edge enabler server, EES) and at least one edge application server (edge application server, EAS).

The EES may be a control network element or a management network element in a mobile edge computing (mobile edge computing, MEC) node (where the MEC may also be referred to as multi-access edge computing (multi-access edge computing)), and is responsible for managing each EAS deployed in the EDN (or understood as providing a service for each EAS deployed in the EDN), for example, basic functions such as registration, domain name system (domain name system, DNS) parsing, content routing selection, upper-layer application registration management, and wireless information exchange. In addition, the EES may invoke a capability exposure function network element in a 3rd generation partnership project (3rd generation partnership project, 3GPP) network. The EES network element may be co-located with another network element, or may be an independent network element. A deployment status of the EES network element in the network architecture is not limited in this embodiment of this application. Generally, an EAS is registered with an EES, or information about an EAS is configured on an EES by using a management system. The EES is referred to as an EES associated with the EAS. The EES controls/manages the EAS registered with/configured on the EES.

The EAS may be an application deployed in the edge data network, and is referred to as an application instance. The application instance specifically refers to an instance (instance) of a server application program (for example, social media software, augmented reality (augmented reality, AR), or virtual reality (virtual reality, VR)) deployed and run on the EDN. One or more EASs can be deployed for one application on one or more EDNs. EASs deployed on different EDNs may be considered as different EASs of one application. The EASs can share a domain name, and use one IP address or use different IP addresses. The EAS may also be referred to as an edge application (server), an application instance, an edge application instance, an MEC application (server), an EAS function, or the like.

### 2. Edge data network configuration server

The edge data network configuration server may be a global management network element, and may be referred to as an (edge data network configuration server, EDNCS) or an edge configuration server (edge configuration server, ECS). For ease of description, in this embodiment of this application, an example in which the edge data network configuration server is an ECS is used for description.

The ECS maintains information about each EDN, including a service scope of the edge data network, an EES address, and the like. The service scope of the edge data network may be topology address information (for example, a cell identifier (Cell ID) or a tracking area identify (tracking area identify, TAI)) or geometric address information (for example, information such as province, city, district, or longitude and latitude), and the service scope may be a set of address information. In an implementation, ECS network elements are deployed in a distributed manner, that is, each ECS may manage edge data networks in different areas. The ECS network element may be co-located with another network element, or may be an independent network element. A deployment status of the ECS network element in the network architecture is not limited in this embodiment of this application.

3. User equipment (user equipment, UE) may include various handheld devices having a wireless communication function, vehicle-mounted devices, wearable devices, computing devices, or other processing devices connected to a wireless modem, and various forms of terminals, mobile stations (mobile stations, MSs), terminals (terminals), soft terminals, and the like. For example, the UE may be a water meter, an electricity meter, or a sensor.

Specifically, in the network architecture shown in FIG. 1, the UE may include: an edge enabler client (edge enabler client, EEC) and an application client (application client, AC).

The application client is a peer entity of the edge application on a UE side. The application client is used by an application user (user) to obtain an application service from an application server. The application client is a client program of an application on the terminal side. The application client may be connected to an application server on a cloud to obtain application services, or may be connected to an EAS deployed and running in one or more EDNs to obtain application services. It may be understood that the UE may include at least one application client.

An EEC is a peer entity of an EES on the UE side. The EEC is configured to: register information about the EEC and information about an application client with the EES, perform security authentication and authorization, obtain an EAS IP address from the EES, and provide an edge computing enabler capability for the application client. For example, the EEC uses an EAS discovery service to return an EAS IP address to the application client.

The EEC provides necessary support for the application client on the UE. Functions of the EEC include: retrieving EDN information through EDGE-4, registering the UE with the EES, retrieving an available EAS, notifying the EEC of an EAS availability change, and notifying the EEC of EAS relocation.

The application user signs a service agreement with an application provider, to provide a service for the application user. The application user logs in to an application client on a terminal and communicates with the EAS through a connection between the application client and the EAS. The enabler client is a middleware layer, and is usually located in an operating system, or is located between the application client and the operating system. The application client may obtain an edge enabling service from the enabler client through an application programming interface (application programming interface, API).

For example, the UE in embodiments of this application may be referred to as a terminal device, an access terminal, a subscriber unit, a subscriber station, a mobile station, a mobile console, a remote station, a remote terminal, a mobile device, a user terminal, a terminal, a wireless communication device, a user agent, or a user apparatus. Some examples of the terminal (UE) may be: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device or wearable device connected to a wireless modem, a terminal device in a 5G network, or a terminal device in a future evolved public land mobile network (public land mobile network, PLMN). This is not limited in embodiments of this application.

By way of example, and not limitation, in embodiments of this application, the wearable device may alternatively be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. Generic wearable smart devices include full-featured and large-size devices that can implement complete or partial functions without depending on smartphones, such as smart watches or smart glasses, and devices that focus only on a type of application function and need to work with other devices such as smartphones, such as various smart bands or smart jewelry for monitoring physical symptoms.

In addition, the terminal device in embodiments of this application may alternatively be user equipment in an IoT system. IoT is an important part in future development of information technologies. A main technical feature of IoT is to connect things to a network by using a communication technology, to implement an intelligent network for human-machine interconnection and thing-thing interconnection. In embodiments of this application, an IoT technology may implement massive connections, deep coverage, and terminal power saving by using, for example, a narrow band (narrow band, NB) technology. In addition, in embodiments of this application, the UE may further include sensors such as a smart printer, a train detector, and a gas station. Main functions include collecting data (for some user equipments), receiving control information and downlink data of an access network device, sending an electromagnetic wave, and transmitting uplink data to the access network device.

It may be understood that the user equipment may be deployed on land, including indoor user equipment, outdoor user equipment, handheld user equipment, or vehicle-mounted user equipment, may be deployed on a water surface, or may be deployed on an airplane, a balloon, or a satellite in the air. A scenario in which the user equipment is located is not limited in embodiments of this application.

### 4. 5G mobile network

A structure of the 5G network is not limited in embodiments of this application. For details, refer to descriptions of a current conventional technology, including a radio access network (radio access network, (R)AN) device and a 5G core network (5G core, 5GC).

The (R)AN is configured to provide a network access function for authorized user equipment in a specific area, and can use transmission tunnels of different quality based on a level of the user equipment, a service requirement, and the like.

The (R)AN can be responsible for functions such as radio resource management, quality of service (quality of service, QoS) management, and data compression and encryption on an air interface side. The (R)AN provides an access service for the user equipment, to complete forwarding of a control signal and user data between the user equipment and a core network.

For example, the access network device in embodiments of this application may be any communication device that has a wireless transceiver function and that is configured to communicate with the user equipment. The network device mentioned in embodiments of this application may represent the access network device, and the access network device may be a base station. The base station may cover various names in a broad sense, or may be replaced with the following names, for example, NodeB (NodeB), evolved NodeB (evolved NodeB, eNB), next generation NodeB (next generation NodeB, gNB), relay station, access point, transmitting and receiving point (transmitting and receiving point, TRP), transmitting point (transmitting point, TP), master station, secondary station, motor slide retainer (motor slide retainer, MSR) node, home base station, network controller, access node, radio node, access point (access point, AP), transmission node, transceiver node, baseband unit (baseband unit, BBU), remote radio unit (remote radio unit, RRU), active antenna unit (active antenna unit, AAU), remote radio (remote radio head, RRH), central unit (central unit, CU), distributed unit (distributed unit, DU), positioning node, and the like. The base station may be a macro base station, a micro base station, a relay node, a donor node, or the like, or a combination thereof. The base station may be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the access network device mentioned in embodiments of this application may be a device including a CU or a DU, a device including a CU and a DU, or a device including a control plane CU node (central unit-control plane (central unit-control plane, CU-CP)), a user plane CU node (central unit-user plane (central unit-user plane, CU-UP)), and a DU node.

It may be understood that the access network device may be deployed on land, including indoor user equipment, outdoor user equipment, handheld user equipment, or vehicle-mounted user equipment, may be deployed on a water surface, or may be deployed on an airplane, a balloon, or a satellite in the air. A scenario in which the access network device is located is not limited in this embodiment of this application.

The 5GC includes at least the following network elements:
(1) A user plane network element is mainly configured to perform packet routing and forwarding, perform quality of service (quality of service, QoS) processing on user plane data, and the like.
   In a 5G communication system, the user plane network element may be a user plane function (user plane function, UPF) network element. In a future communication system, the user plane network element may still be the UPF network element, or may have another name. This is not limited in this application.
(2) An access management network element is mainly configured to perform functions such as access control, mobility management, and attach and detach.
   In the 5G communication system, the access management network element may be the access and mobility management function (access and mobility management function, AMF) network element. In a future communication system, the access management network element may still be an AMF network element, or may have another name. This is not limited in this application.
(3) A session management network element is mainly configured to select a user plane network element, redirect a user plane network element, allocate an internet protocol (internet protocol, IP) address to a terminal device, and perform session management in a mobile network, for example, session establishment, modification, and release, and QoS control.
   In the 5G communication system, the session management network element may be a session management function (session management function, SMF) network element. In a future communication system, the session management network element may still be the SMF network element, or may have another name. This is not limited in this application.
(4) A policy control network element is mainly configured to guide a unified policy framework for network behavior, and provides policy rule information and the like for a network element (for example, an AMF or an SMF network element) or a terminal device.
   In a 4G communication system, the policy control network element may be a policy and charging rules function (policy and charging rules function, PCRF) network element. In the 5G communication system, the policy control network element may be a policy control function (policy control function, PCF) network element. In a future communication system, the policy control network element may still be the PCF network element, or may have another name. This is not limited in this application.
(5) An application network element is mainly configured to perform application-affected data routing, access a network exposure function network element, and interact with a policy framework for policy control.
   In the 5G communication system, the application network element may be an application function (application function, AF) network element. In a future communication system, the application network element may still be the AF network element, or may have another name. This is not limited in this application.
(6) A network slice selection network element is configured to select a network slice instance for serving the user equipment.
   In the 5G communication system, the network slice selection network element may be a network slice selection function (network slice selection function, NSSF) network element. In a future communication system, the network slice selection function may still be the NSSF network element, or may have another name. This is not limited in this application.
(7) An authentication service network element is mainly for user authentication and the like.
   In the 5G communication system, the authentication service network element may be an authentication service function (authentication server function, AUSF) network element. In a future communication system, the authentication server function network element may still be an AUSF network element, or may have another name. This is not limited in this application.
(8) A data management network element is configured to process an identifier of a terminal device, perform access authentication, registration, and mobility management, and the like.

In the 5G communication system, the data management network element may be a unified data management (unified data management, UDM) network element. In the future communication system, the unified data management network element may still be the UDM network element, or may have another name. This is not limited in this application.

It may be understood that the foregoing network elements or functions may be understood as network elements configured to implement different functions, for example, may be combined into a network slice as required. These network elements may be independent devices, may be integrated into a same device to implement different functions, may be a network element in a hardware device, may be a software function running on dedicated hardware, or may be an instantiated virtualization function on a platform (for example, a cloud platform). A specific form of the network element is not limited in this application.

It should be noted that, in a current standard protocol, for example, technical specification (technical specification, TS) 23.501 and TS 23.502, the foregoing EES network element, EAS network element, and ECS network element may all be referred to as an application function (application function, AF) network element. Details are not described below.

In the network architecture shown in FIG. 1, an EDGE-8 reference point supports interaction between the edge configuration server and the core network, for example, supports: (1) access to a core network function and an application programming interface (application programming interface, API) for retrieving network capability information; (2) providing a service provisioning notification to the core network (for example, the SMF).

EDGE-1 is an interface between the EES and the EEC, and supports registration and deregistration of the EEC in the EES and discovery of the edge application server in the edge data network.

EDGE-2 is an interface between the EES and the 3GPP core network, and is used by the EES to obtain a 3GPP network capability.

EDGE-3 is an interface between the EES and the EAS, and supports registration/deregistration of the EES with/from the EAS, including EAS availability information, service scope information, and address information. The EES provides the EAS with 3GPP network capability information (such as location information).

EDGE-4 is an interface between the EEC and the ECS, and supports the ECS in providing/pushing configuration information to the EEC.

EDGE-5 is an interface between the AC and the EEC, and supports the AC in obtaining EAS information from the EEC.

EDGE-6 is an interface between the ECS and the EES, and supports configuration of EES information on the ECS.

EDGE-7 is an interface between the EAS and the 5GC, and supports the EAS in obtaining a 5G network capability.

EDGE-8 is an interface between the ECS and the 5GC, and supports the ECS in obtaining a 5G network capability.

EDGE-9 is an interface between different EESs across MEC nodes or within a same MEC node, and supports application relocation.

It should be noted that names of the network elements and the communication interfaces between the network elements in FIG. 1 are briefly described by using an example specified in a current protocol. However, this is not limited to that embodiments of this application can be applied only to a currently known communication system. Therefore, standard names that appear when the current protocol is used as an example for description are all function descriptions. A specific name of a network element, an interface, signaling, or the like is not limited in this application, only represents a function of the network element, the interface, or the signaling, and may be correspondingly extended to another system, for example, 4G or a future communication system.

It should be understood that functions or network elements such as the EAS, the EES, the ECS, and the EEC shown in FIG. 1 may be understood as network elements configured to implement different functions, for example, may be combined into a network slice as required. These network elements may be independent devices, may be integrated into a same device to implement different functions, may be a network element in a hardware device, may be a software function running on dedicated hardware, or may be an instantiated virtualization function on a platform (for example, a cloud platform). A specific form of the network element is not limited in this application.

It should be further understood that the foregoing names are defined merely for distinguishing between different functions, and should not constitute any limitation on this application. This application does not exclude a possibility of using other names in a 6G network and another future network. For example, in a 6G network, some or all of the foregoing network elements may still use terms in 5G, may use other names.

For ease of understanding of embodiments of this application, several basic concepts in embodiments of this application are briefly described.

It may be understood that basic concepts described below are briefly described by using a basic concept specified in a current protocol as an example, but this is not limited to that embodiments of this application can be applied only to a currently existing system. Therefore, names that appear when a current existing system is used as an example for description are all functional descriptions. A specific name is not limited, only represents a function, and may be correspondingly extended to another system, for example, 4G or a future communication system.

### 1. Application context (application context)

The application context may refer to running status information related to one user or a group of users, for example, a game progress, and historical data of ML. Optionally, the application context may further include a subscribed context of the one or more users on the EAS and the core network, for example, a subscribed transaction identifier. Optionally, the application context may further include a context of the one or more users on the EES, for example, a transaction identifier subscribed by the EAS for the one or more users.

### 2. EEC context (EEC context)

The EEC context may refer to user-related data stored in the EES.

The EEC context may include EEC-side information and EAS-EES subscription information. The EEC-side information may include EEC registration information and EEC subscription information (for example, EAS discovery subscription and EAS dynamic information subscription). The EAS-EES subscription information may include a UE location API, an application context relocation event, an AC information exposure API, a UE identity API, and a quality of service (quality of service, QoS) session API.

### 3. Application context relocation (application context relocation, ACR)

The application context relocation may also be referred to as application context relocation, and is not distinguished in this application.

In a running process of an edge application, when a terminal moves out of a current service area, an EAS that currently provides a service may not continue to provide a service for the currently running application, or an EAS that currently provides a service is no longer an optimal EAS that can provide a service for the terminal, and another EAS may be more suitable for serving the terminal. In this case, a new EAS may be selected to provide a service for the terminal. However, in a process in which the new edge application server replaces the edge application server that currently provides a service, an application service is temporarily suspended or interrupted, and transmission of the application service is affected.

Specifically, based on the network architecture shown in FIG. 1, application context relocation (application context relocation, ACR) may be performed.

For ease of description, the EAS that currently provides a service is referred to as a source EAS (source EAS, S-EAS), and the new EAS is referred to as a target EAS (target EAS, T-EAS).

As an example, an application context relocation procedure may be mainly divided into the following four phases.

### Phase 1: Detection of application context relocation

In this phase, it may be determined that context relocation may be required. For example, if a detecting entity detects a target event, the detecting entity determines that context relocation may be required. The target event may include a terminal location change, terminal user-plane path update, or the like.

### Phase 2: Decision-making on application context relocation

In this phase, a decision-making entity determines that context relocation is required.

### Phase 3: Execution of application context relocation

In this phase, an execution entity transfers an application context from the source EAS to the target EAS. Further, discovery of the target EAS is included. The terminal may be further notified of related information of the target EAS, and the EAS (which may be the source EAS and the target EAS) is notified to initiate application context transmission. The EES or the EAS executes application function (application function, AF) traffic influence (AF traffic influence) and carries N6 routing information of the T-EAS.

### Phase 4: Cleanup after application context relocation

In this phase, a plurality of entities are involved. The EAS notifies the EEC of an application context transmission result via the EES. The AC initiates a new socket connection to the target EAS and the like.

It should be noted that the foregoing entities may be a same entity, or may be different entities. This is not limited.

With reference to FIG. 2 to FIG. 7, the following describes several implementations (or several scenarios) of application context relocation applicable to embodiments of this application.

FIG. 2 is an implementation of application context relocation applicable to an embodiment of this application.

In this implementation, an EEC initiates ACR, and a conventional EAS discovery procedure is used. This implementation may include the following step 201 to step 208.

201. The EEC detects a target event.

In step 201, after detecting the target event, the EEC determines to trigger application context relocation.

The target event may include a UE location change, UE user-plane path update, or the like.

For example, the EEC detects UE location update (UE location update). This step may alternatively be triggered by an AC by invoking an ACR-related API provided by the EEC, or the AC detects the UE location change and provides a new location for the EEC, so that the EEC learns of the UE location change.

202. The EEC executes a service provisioning (service provisioning) procedure.

The EEC executes the service provisioning procedure to discover a T-EES. For step 202, refer to an existing protocol. This is not limited.

203. The EEC and the T-EES perform a T-EAS discovery procedure.

Currently, an EES platform discovery and EAS discovery (EAS discovery) procedure is defined in a standard. This procedure provides EES platform discovery and application instance discovery at an application layer. An EES can function as a local DNS server, and UE obtains an application instance address from an MEC platform. A two-level discovery mechanism is used in terms of architecture and function designs. An EES platform is discovered first, and then the EAS is discovered from the EES platform. For example, it is assumed that the EEC receives information about the EES, for example, an IP address of the EES. Second, an EAS discovery policy of an edge computing service provider (edge computing service provider, ECSP) is configured on the EES. The EAS discovery procedure includes the following steps.

For example, the EAS discovery procedure may include the following steps: (1) The EEC sends an EAS discovery request message to the T-EES. (2) After receiving the EAS discovery request sent by the EEC, the T-EES performs authorization checking and determines one or more EASs. (3) The T-EES sends an EAS discovery response message to the EEC. For details, refer to a conventional technology. This is not limited.

204. Perform T-EAS selection.

In step 204, the AC may select a T-EAS from one or more EASs discovered by the EEC.

205. The EEC sends an application context relocation request (application context relocation request) message to an S-EES.

206. The S-EES sends an application context relocation response (application context relocation response) message to the EEC.

207. The S-EAS and the T-EAS transmit an application context.

The AC interacts with the S-EAS to trigger the S-EAS to initiate transfer (transfer) of the application context.

208. After the application context is transmitted, each entity executes a cleanup procedure.

It can be learned from the foregoing that, in the implementation shown in FIG. 2, the EEC performs detection and decision-making, and determines the T-EES and the T-EAS, the EEC requests the S-EES to initiate user plane path modification, and the EEC or the AC initiates transmission of the application context.

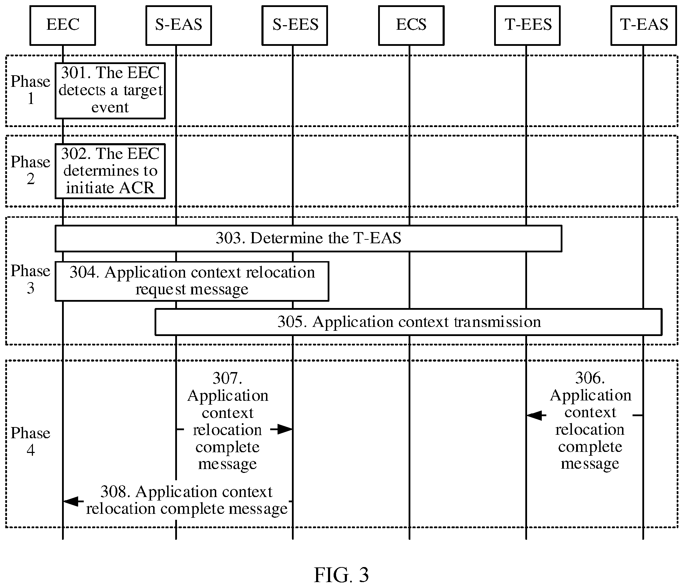

FIG. 3 is another implementation of application context relocation applicable to an embodiment of this application.

In this implementation, an EEC executes ACR via an S-EES.

301. The EEC detects a target event.

The target event may include a UE location change, UE user-plane path update, or the like. In this step, an AC may indicate, through an Edge-5 interface, the EEC to detect whether ACR needs to be performed.

302. The EEC determines to initiate application context relocation.

303. The EEC determines a T-EAS.

304. The EEC sends an application context relocation request message to the S-EES.

The application context relocation request message indicates the S-EES to further interact with an S-EAS, to trigger the S-EAS to perform context transfer (transfer).

305. The S-EAS and the T-EAS transmit an application context.

In step 305, the S-EES may indicate the S-EAS to transmit the application context, and the S-EAS and the T-EAS transmit the application context.

306. The T-EAS sends an application context relocation complete message to a T-EES.

After the application context transmission is completed, the T-EAS sends the application context relocation complete message to the T-EES, to indicate to the T-EES that the application context transmission is completed, and indicate an application context transmission result.

307. The S-EAS sends an application context relocation complete message to the S-EES.

After the application context transmission is completed, the S-EAS sends the application context relocation complete message to the S-EES, to indicate to the T-EES that the application context transmission is completed, and indicate an application context transmission result.

308. The S-EES sends the application context relocation complete message to the EEC.

After receiving the application context relocation complete message sent by the S-EAS, the S-EES sends the application context relocation complete message to the EEC, to indicating to the EEC that application context relocation is completed.

It can be learned from the foregoing that, in the implementation shown in FIG. 3, the EEC performs detection and decision-making, and determines the T-EES and the T-EAS, the EEC requests the S-EES to initiate user plane path modification, and the S-EES initiates transmission of the application context. For more specific descriptions of each phase shown in FIG. 3, refer to related descriptions in FIG. 2. Details are not described herein again. Different from the implementation shown in FIG. 2, in this implementation, the S-EES initiates transmission of the application context.

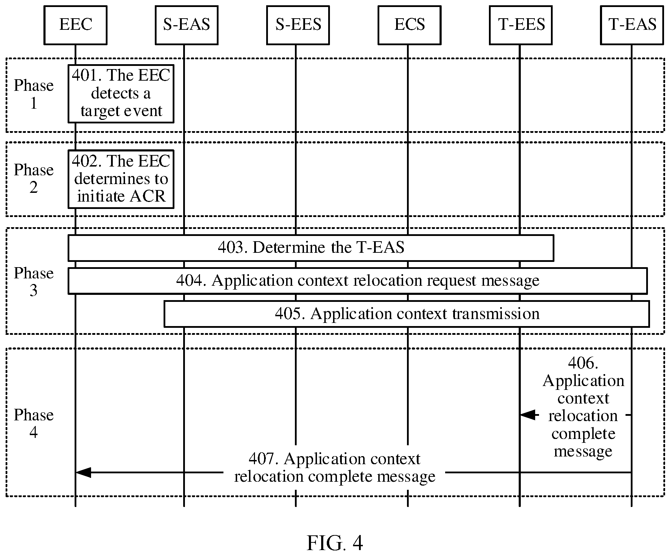

FIG. 4 is another implementation of application context relocation applicable to an embodiment of this application.

In this implementation, an EEC executes ACR via a T-EES.

401. The EEC detects a target event.

The target event may include a UE location change, UE user-plane path update, or the like.

402. The EEC determines to initiate application context relocation.

403. The EEC determines a T-EAS.

404. The EEC sends an application context relocation request message to the T-EES.

The application context relocation request message is for triggering application context transfer and user plane path update.

405. An S-EAS and the T-EAS transmit an application context.

In step 405, the T-EES indicates the T-EAS to request the application context from the S-EAS, and the S-EAS and the T-EAS transmit the application context.

406. The T-EAS sends an application context relocation complete message to the T-EES.

After the application context transmission is completed, the T-EAS sends the application context relocation complete message to the T-EES, to indicate to the T-EES that the application context transmission is completed, and indicate an application context transmission result.

407. The T-EES sends the application context relocation complete message to the EEC.

After receiving the application context relocation complete message sent by the T-EAS, the T-EES sends the application context relocation complete message to the EEC, to indicating to the EEC that application context relocation is completed.

It can be learned from the foregoing that, in the implementation shown in FIG. 4, the EEC performs detection and decision-making, and determines the T-EES and the T-EAS, the EEC requests the T-EES to initiate user plane path modification, and the T-EES notifies the T-EAS to initiate transmission of the application context. For more specific descriptions of each phase shown in FIG. 4, refer to related descriptions in FIG. 3. Details are not described herein again. Different from the implementation shown in FIG. 3, in this implementation, the T-EES initiates transmission of the application context.

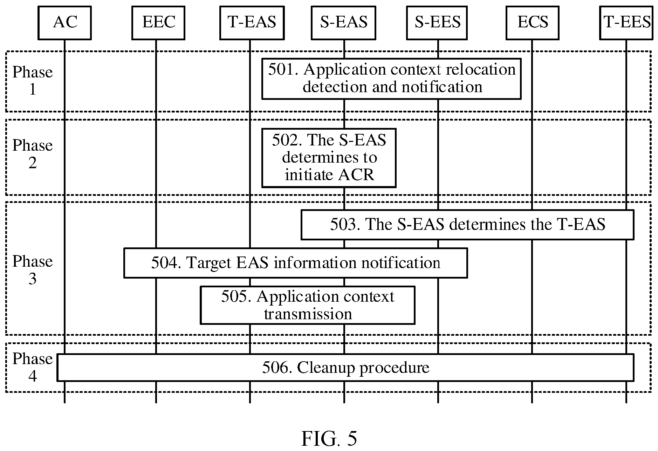

FIG. 5 is another implementation of application context relocation applicable to an embodiment of this application.

In this implementation, an S-EAS determines to initiate ACR.

501. The S-EAS detects a target event, or an S-EES detects a target event and notifies the S-EAS.

The target event may include a UE location change, UE user-plane path update, or the like.

502. The S-EAS determines to initiate application context relocation.

503. The S-EAS determines a T-EAS.

504. The S-EES notifies target EAS information.

505. The S-EAS and the T-EAS transmit an application context.

506. Each entity executes a cleanup procedure.

After the application context is transmitted, each entity executes the cleanup procedure.

It can be learned that, in the implementation shown in FIG. 5, the S-EAS or the S-EES performs detection, the S-EAS makes a decision and determines the T-EES and the T-EAS, the S-EAS initiates user plane path modification, and the S-EES initiates transmission of the application context.

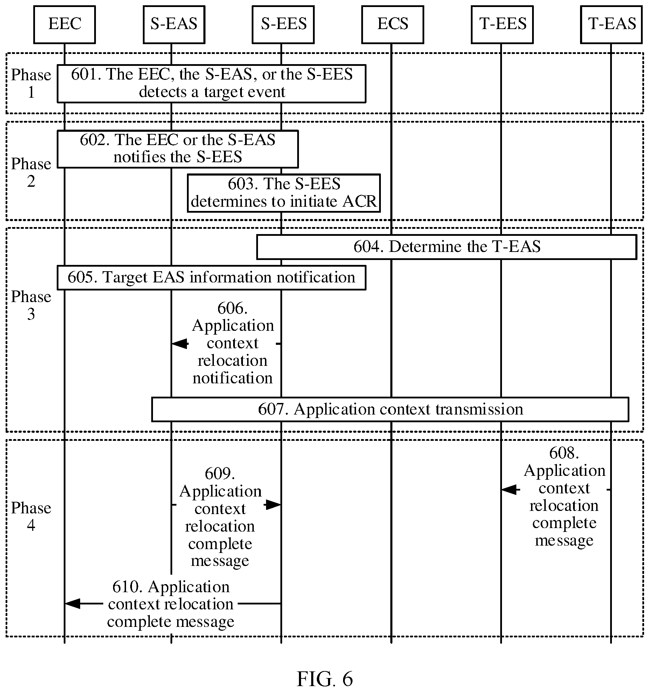

FIG. 6 is another implementation of application context relocation applicable to an embodiment of this application.

In this implementation, an S-EES executes ACR.

601. An EEC, an S-EAS, or the S-EES detects a target event.

The target event may include a UE location change, UE user-plane path update, or the like.

602. The EEC or the S-EAS notifies the S-EES that the target event is detected.

This step is an optional step. If the EEC or the S-EAS detects the target event, the EEC or the S-EAS needs to notify the S-EES that the target event is detected.

603. The S-EES determines to initiate application context relocation.

604. The S-EES determines a T-EAS.

605. The S-EES notifies target EAS information.

606. The S-EES sends an application context relocation notification to the S-EAS.

607. The S-EAS and the T-EAS transmit an application context.

608. The T-EAS sends an application context relocation complete message to a T-EES.

After the application context transmission is completed, the T-EAS sends the application context relocation complete message to the T-EES, to indicate to the T-EES that the application context transmission is completed, and indicate an application context transmission result.

609. The S-EAS sends an application context relocation complete message to the S-EES.

After the application context transmission is completed, the S-EAS sends the application context relocation complete message to the S-EES, to indicate to the T-EES that the application context transmission is completed, and indicate an application context transmission result.

610. The S-EES sends the application context relocation complete message to the EEC.

After receiving the application context relocation complete message sent by the S-EAS, the S-EES sends the application context relocation complete message to the EEC, to indicating to the EEC that application context relocation is completed.

It can be learned that, in the implementation shown in FIG. 6, the EEC, the S-EAS, or the S-EES performs detection, the S-EES makes a decision and determines the T-EES and the T-EAS, the S-EES initiates user plane path modification, and the S-EES notifies the S-EAS to initiate transmission of the application context.

It can be learned from the procedures shown in FIG. 2 to FIG. 6 that, function entities such as the EEC, the AC, the EES, and the EAS can all detect ACR events (such as UE mobility and EAS overload).

Therefore, at least the following two application context relocation modes may be included.

Mode 1: Single-ACR mode: The single-ACR mode indicates an ACR mode including one ACR scenario (for example, any ACR scenario in FIG. 2 to FIG. 6), or indicates that one ACR scenario is allowed. Alternatively, the single-ACR mode may indicate that a single function entity (for example, any one of the function entities such as the EEC, the AC, the EES, and the EAS) detects and triggers application context relocation. Alternatively, the single-ACR mode may indicate that, for an application (for example, an AC ID) or an ACR event (for example, UE mobility or EAS overload), one ACR scenario is used to detect and trigger execution of an ACR procedure.

Scenario 2: Multi-ACR mode: The multi-ACR mode indicates an ACR mode including at least two ACR scenarios (for example, at least two ACR scenarios in FIG. 2 to FIG. 6), or indicates that a plurality of ACR scenarios are allowed. Alternatively, the multi-ACR mode may indicate that a plurality of function entities (for example, a plurality of function entities in function entities such as the EEC, the AC, the EES, and the EAS) detect and trigger application context relocation. Alternatively, the multi-ACR mode may indicate that, for an application (for example, an AC ID) or an ACR event (for example, UE mobility or EAS overload), a plurality of ACR scenarios are used to detect and trigger execution of an ACR procedure.

If the single-ACR mode is selected for each application or each ACR event, for some applications, for example, an application that has a high service continuity requirement, ACR may not be detected and/or triggered in a timely manner, increasing an application interruption delay. If the multi-ACR mode is selected for each application or each ACR event, an ACR event may be repeatedly detected, and the T-EAS discovery procedure may be repeatedly executed, causing a large amount of wasted signaling.

In view of this, this application provides an implementation. A second device provides reference information for a first device. The reference information includes at least one of the following: a type of an application, a service continuity requirement of the application, an application context relocation ACR mode indicated by a client and/or a server, or information about at least one ACR scenario indicated by the client and/or the server. The second device determines, for the application based on the foregoing information, whether an ACR mode is a single-ACR mode or a multi-ACR mode. Based on the reference information, the first device can select an appropriate ACR mode for an application based on an actual situation. In this way, the selected ACR mode matches a capability of the application or a function entity, to achieve a balance between signaling overheads and an interruption delay. This can avoid, as much as possible, excessive signaling overheads caused by using a plurality of ACR scenarios for each application, and a large interruption delay caused by using one ACR scenario for each application.

For example, if the reference information includes the type of the application and/or the service continuity requirement of the application, when determining an ACR mode for the application, the first device may determine the ACR mode for the application based on the type of the application and/or the service continuity requirement of the application. In this way, the first device can select the ACR mode suitable for the application by considering a characteristic of the application and/or the service continuity requirement of the application.

For another example, if the reference information includes the ACR mode indicated by the client and/or the server or the at least one ACR scenario, when determining an ACR mode for the application, the first device may determine the ACR mode for the application based on an ACR mode preferred by or an ACR scenario (for example, an ACR scenario supported by a capability of each function entity or a preferred ACR scenario) indicated by each function entity (for example, the client and/or the server). In this way, the determined ACR mode matches the capability of each function entity. This prevents a large interruption delay caused by untimely triggering.

It may be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The following describes in detail a communication method provided in embodiments of this application with reference to the accompanying drawings. Embodiments provided in this application may be applied to the network architecture shown in FIG. 1. This is not limited. In the following embodiments, for ease of description, a device that determines an ACR mode based on reference information is denoted as a first device, and a device that provides the reference information is denoted as a second device.

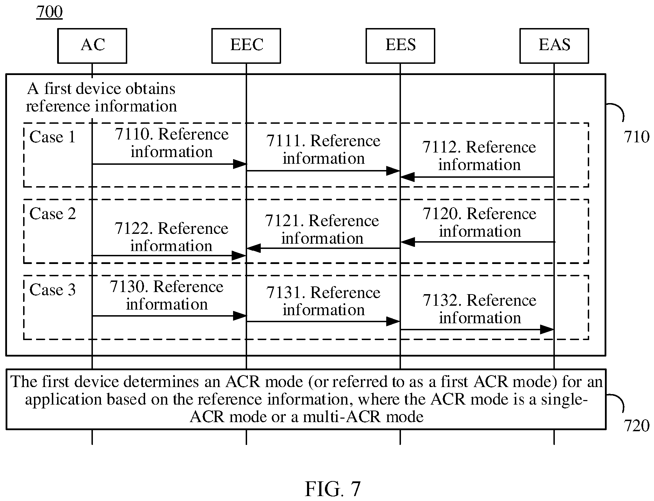

FIG. 7 is a schematic diagram of a communication method 700 according to an embodiment of this application. The method 700 may include the following steps.

710. A first device obtains reference information.

The reference information includes at least one of the following: a type of an application, a service continuity requirement of the application, an ACR mode indicated by a client, or an ACR mode indicated by a server. The following describes the foregoing information.
(1) The type of the application Indicates an application type. For example, the application type includes, for example, a call application, a video application, a game application, and a work application. A manner of classifying an application type is not limited.

As an example, the application type may reflect a service continuity requirement of an application. For example, different types of applications have different service continuity requirements. For example, a call application has a high service continuity requirement. In this embodiment of this application, the application type may be associated with the service continuity requirement of the application. In this way, the service continuity requirement of the application may be learned based on the application type.

(2) The service continuity requirement of the application may also be understood as a degree of acceptance (or a degree of tolerance) of the application for service discontinuity. It may be understood that any parameter that can reflect the service continuity requirement of the application is applicable to this embodiment of this application.

In a first example, the service continuity requirement of the application may be represented by maximum tolerance time of the application for service interruption. For example, if the maximum tolerance time of the application for the service interruption is greater than a preset threshold, it may be understood as that the application has a low service continuity requirement. In other words, that the application has a low service continuity requirement may be replaced with that the maximum tolerance time of the application for the service interruption is greater than the preset threshold. For another example, if the maximum tolerance time of the application for the service interruption is less than a preset threshold, it may be understood as that the application has a high service continuity requirement. In other words, that the application has a high service continuity requirement may be replaced with that the maximum tolerance time of the application for the service interruption is less than the preset threshold.

The preset threshold may be a specific value, or may be a value range. This is not limited herein. In addition, the threshold in this embodiment of this application, for example, the preset threshold and a preset value mentioned in the following third example, may be preconfigured, may be specified in a protocol, or may be agreed on in advance. This is not limited herein.

In a second example, the service continuity requirement of the application may be represented by an application type. In other words, the application type may reflect the service continuity requirement of the application. For example, if the application is a game application, it may be understood as that the application has a high service continuity requirement. Specifically, a game application may be considered to have a high service continuity requirement, and service interruption for a period of time has obvious impact on user experience. For another example, if the application is a chat application, it may be understood as that the application has a low service continuity requirement. Specifically, the chat application may be considered to have a low service continuity requirement, and service interruption for a period of time has no obvious impact on user experience.

In a third example, the service continuity requirement of the application may be represented by a data exchange amount within a unit time (which may also be considered as a bandwidth, where a larger bandwidth indicates faster data transmission). In other words, the data exchange amount within the unit time may reflect the service continuity requirement of the application. For example, if the data exchange amount in the unit time is greater than a preset value, it may be understood as that the application has a high service continuity requirement. In other words, that the application has a high service continuity requirement may be replaced with that the data exchange amount in the unit time is greater than the preset value. Specifically, for an application with a large data exchange amount in a unit time, a large amount of data is lost due to service interruption for a period of time, thereby significantly affecting service quality. For another example, if the data exchange amount in the unit time is less than a preset value, it may be understood as that the application has a low service continuity requirement. In other words, that the application has a low service continuity requirement may be replaced with that the data exchange amount in the unit time is less than the preset value. Specifically, for an application with a small data exchange amount in a unit time, a large amount of data is not lost due to service interruption for a period of time, thereby insignificantly affecting service quality.

The preset value may be a specific value, or may be a value range. This is not limited herein.

It may be understood that the foregoing three examples are examples for description, and all parameters that can reflect the service continuity requirement of the application are applicable to this embodiment of this application.

(3) ACR mode: In this embodiment of this application, the ACR mode may represent a mode to which an ACR scenario belongs, a mode of application context relocation, or a combination of ACR scenarios, to be specific, one ACR scenario or a plurality of ACR scenarios are allowed. As an example, the ACR mode may include two types: a single-ACR mode and a multi-ACR mode.

The single-ACR mode indicates an ACR mode including one ACR scenario, or indicates that one ACR scenario is allowed. Alternatively, the single-ACR mode may indicate that a single function entity (for example, any one of the function entities such as the EEC, the AC, the EES, and the EAS) detects and triggers application context relocation. Alternatively, the single-ACR mode may indicate that, for an application (for example, an AC ID) or an ACR event (for example, UE mobility or EAS overload), one ACR scenario is used to detect and trigger execution of an ACR procedure. For example, the ACR mode included in the single-ACR mode may be any ACR scenario in FIG. 2 to FIG. 6.

The multi-ACR mode indicates an ACR mode including at least two ACR scenarios, or indicates that a plurality of ACR scenarios are allowed. Alternatively, the multi-ACR mode may indicate that at least two function entities (for example, any one of the function entities such as the EEC, the AC, the EES, and the EAS) detect and trigger application context relocation. Alternatively, the multi-ACR mode may indicate that, for an application (for example, an AC ID) or an ACR event (for example, UE mobility or EAS overload), a plurality of ACR scenarios are used to detect and trigger execution of an ACR procedure. For example, the at least two ACR scenarios included in the multi-ACR mode may be at least two ACR scenarios in FIG. 2 to FIG. 6.

In this embodiment of this application, the indicated ACR mode (for example, the ACR mode indicated by the client, or the ACR mode indicated by the server) is mentioned for a plurality of times. The indicated ACR mode may indicate a supported ACR mode, may indicate an ACR mode determined (or selected or deduced) based on the supported ACR scenario, or may indicate an ACR mode determined based on the type of the application and/or the service continuity requirement of the application. Alternatively, the indicated ACR mode may further represent a preferred (or preferred, or specified) ACR mode. This is not limited. Details are not described again below. The indicated ACR mode and the supported ACR scenario may be different. For example, if the client supports a plurality of ACR scenarios, the ACR mode indicated by the client may be a single-ACR mode, or may be a multi-ACR mode.

(4) The ACR scenario is also referred to as an ACR method or an ACR execution mode. The following uses the ACR scenario as an example.

For example, the ACR scenario in this embodiment of this application includes at least one of the following: initiation by EEC using regular EAS discovery (initiation by EEC using regular EAS discovery) (the implementation shown in FIG. 2), EEC executed ACR via S-EES (EEC executed ACR via S-EES) (the implementation shown in FIG. 3), EEC executed ACR via T-EES (EEC executed ACR via T-EES) (the implementation shown in FIG. 4), S-EAS decided ACR scenario (S-EAS decided ACR scenario) (the implementation shown in FIG. 5), S-EES executed ACR (S-EES executed ACR) (the implementation shown in FIG. 6), and the like. It may be understood that the foregoing is an example for description, and improvements or variations of the foregoing ACR scenarios are all applicable to this embodiment of this application. For example, the ACR scenario in this embodiment of this application may further include an edge enable layer (edge enable layer, EEL) managed ACR (EEL Managed ACR) (that is, an EES is responsible for ACR detection and decision execution and a cleanup procedure).

In this embodiment of this application, the at least one ACR scenario in the reference information is an ACR scenario indicated by the client and/or the server. The at least one ACR scenario may include at least one of the following: an ACR scenario supported by the client and/or an ACR scenario supported by the server; an ACR scenario determined based on the ACR scenario supported by the client and/or an ACR scenario determined based on the ACR scenario supported by the server; or an ACR scenario determined based on the type of the application and/or the service continuity requirement of the application. The client is used as an example. The ACR scenario indicated by the client may be the ACR scenario supported by the client, may be the ACR scenario determined based on the ACR scenario supported by the client, may be the ACR scenario determined based on the type of application and/or the service continuity requirement of the application, or may be at least two of the foregoing ACR scenarios. This is not limited.

It may be understood that, in this embodiment of this application, the indicated ACR scenario may indicate a supported ACR scenario, may indicate an ACR scenario determined based on the supported ACR scenario, or may indicate an ACR scenario determined based on the type of the application and/or the service continuity requirement of the application. Alternatively, the indicated ACR scenario may further represent a preferred (or preferred, or specified) ACR scenario. This is not limited. Details are not described again below.

For example, the server includes at least one of the following: an ECS, an EES, or an EAS. For example, at least one of the following is included: an EEC and an AC. Specifically, descriptions are provided below with reference to the first device.

The client is used as an example to describe the ACR scenario determined based on the ACR scenario supported by the client. It may be understood that descriptions of the server are similar to those of the client, and details are not described herein again.

The ACR scenario determined based on the ACR scenario supported by the client may represent an ACR scenario selected or deduced from the ACR scenarios supported by the client. For example, the ACR scenario supported by the client includes: an ACR scenario 1, an ACR scenario 2, an ACR scenario 3, and an ACR scenario 4: The ACR scenario determined based on the ACR scenario supported by the client may be at least one of the ACR scenario 1, the ACR scenario 2, the ACR scenario 3, and the ACR scenario 4, or may be at least one ACR scenario deduced based on the ACR scenario 1, the ACR scenario 2, the ACR scenario 3, and the ACR scenario 4. The at least one ACR scenario deduced may also be different from the foregoing four ACR scenarios supported by the client.

The ACR scenario determined based on the type of the application may represent an ACR scenario determined based on the type of the application or the service continuity requirement reflected by the application. The ACR scenario determined based on the service continuity requirement of the application may represent an ACR scenario that is preferred (or specified, or preferred) based on the service continuity requirement of the application. For example, if the application type is a type #1, the ACR scenario determined for the application is the ACR scenario 1.

720. The first device determines an ACR mode (or may be referred to as a first ACR mode) for the application based on the reference information, where the ACR mode is a single-ACR mode or a multi-ACR mode.

Optionally, if the ACR mode (that is, the first ACR mode) is the single-ACR mode, the method 700 further includes: The first device determines one ACR scenario in the single-ACR mode for the application based on the reference information. Further, optionally, the first device sends the ACR scenario.

Optionally, if the ACR mode (that is, the first ACR mode) is the multi-ACR mode, the method 700 further includes: The first device determines at least two ACR scenarios in the multi-ACR mode for the application based on the reference information. Further, optionally, the first device sends the at least two ACR scenarios.

In this embodiment of this application, the first device determines, based on the reference information, whether the ACR mode is a single-ACR mode or a multi-ACR mode for the application. In this way, the first device can select an appropriate ACR mode based on an actual situation, so that the selected ACR mode matches a capability of the application or a function entity.

Optionally, the method 700 further includes: The first device sends the ACR mode determined for the application. Specifically, descriptions are provided below with reference to several cases of the first device.

In this embodiment of this application, the first device may represent a device configured to determine an ACR mode for an application. Optionally, the first device is any one of the following: an EES, an EEC, or an EAS. The following separately describes solutions applicable to this embodiment of this application with reference to different cases of the first device.

Case 1: The first device is the EES.

In the case 1, the second device may be at least one of an EEC, an AC, or an EAS. Step 710 may include step 7111 and/or step 7112.

7111. The EES receives the reference information from an EEC.

The reference information received by the EES from the EEC in step 7111 may include: the application type, the service continuity requirement of the application, an ACR mode indicated by the EEC, an ACR mode indicated by an AC, or information about at least one ACR scenario, where the at least one ACR scenario is an ACR scenario indicated by the EEC and/or the AC.

Optionally, before step 7111, the method 700 further includes step 7110: The AC sends the reference information to the EEC. The reference information sent by the AC to the EEC includes: the application type, the service continuity requirement of the application, the ACR mode indicated by the AC, or the ACR scenario indicated by the AC.

For example, the AC sends the application type and/or the service continuity requirement of the application to the EEC. After receiving the application type and/or the service continuity requirement of the application, the EEC may send the application type and/or the service continuity requirement of the application to the EES, and the EEC may further send, to the EES, the ACR scenario indicated by the EEC. For another example, the AC sends, to the EEC, the ACR scenario indicated by the AC. After receiving the ACR scenario indicated by the AC, the EEC may send, to the EES, the ACR scenario indicated by the AC, and the EEC may further send, to the EES, the ACR scenario indicated by the EEC. For another example, the EEC sends, to the EES, the ACR scenario indicated by the EEC.

The ACR scenario indicated by the EEC may include any one of the following: an ACR scenario supported by the EEC, an ACR scenario determined based on the ACR scenario supported by the EEC, and an ACR scenario determined based on the application type and/or the service continuity requirement of the application. The ACR scenario indicated by the EES may include any one of the following: an ACR scenario supported by the EES, an ACR scenario determined based on the ACR scenario supported by the EES, and an ACR scenario determined based on the application type and/or the service continuity requirement of the application. The ACR scenario indicated by the AC may include any one of the following: an ACR scenario supported by the AC, an ACR scenario determined based on the ACR scenario supported by the AC, and an ACR scenario determined based on the application type and/or the service continuity requirement of the application. For details, refer to the foregoing descriptions. Details are not described herein again.

7112. The EES receives the reference information from an EAS.

The reference information received by the EES from the EAS in step 7112 may include: an ACR mode indicated by the EAS and/or information about at least one ACR scenario, where the at least one ACR scenario is an ACR scenario indicated by the EAS.

The ACR scenario indicated by the EAS may include any one of the following: an ACR scenario supported by the EAS, an ACR scenario determined based on the ACR scenario supported by the EAS, and an ACR scenario determined based on the application type and/or the service continuity requirement of the application. For details, refer to the foregoing descriptions. Details are not described herein again.

The EES may determine the ACR mode for the application based on the received information, the ACR scenario determined (indicated) by the EES, and the ACR mode determined (indicated) by the EES.

In a first possible case, if the method 700 includes step 7111, in step 720, the EES may determine the ACR mode for the application based on at least one of the following: the application type, the service continuity requirement of the application, the ACR mode indicated by the EEC, the ACR mode indicated by the AC, the ACR mode indicated by the EES, the ACR scenario indicated by the EEC, the ACR scenario indicated by the AC, or the ACR scenario indicated by the EES. It may be understood that, if the EES itself also configures reference information (for example, the ACR mode indicated by the EES and/or the ACR scenario indicated by the EES), the EES may determine the ACR mode for the application based on information received from the EEC and the reference information configured by the EES itself.

In a second possible case, if the method 700 includes step 7112, in step 720, the EES may determine the ACR mode for the application based on at least one of the following: the ACR scenario indicated by the EAS, the ACR mode indicated by the EAS, the ACR mode indicated by the EES, or the ACR scenario indicated by the EES. It may be understood that, if the EES itself also configures reference information (for example, the ACR mode indicated by the EES and/or the ACR scenario indicated by the EES), the EES may determine the ACR mode for the application based on information received from the EAS and the reference information configured by the EES itself.

In a third possible case, if the method 700 includes step 7111 and step 7112, in step 720, the EES may determine the ACR mode for the application based on information received from the EEC and information received from the EAS. To be specific, the EES may determine the ACR mode for the application based on at least one of the following: the application type, the service continuity requirement of the application, the ACR scenario indicated by the EEC, the ACR scenario indicated by the AC, the ACR scenario indicated by the EAS, the ACR scenario indicated by the EES, the ACR mode indicated by the EEC, the ACR mode indicated by the AC, the ACR mode indicated by the EAS, or the ACR mode indicated by the EES. It may be understood that, if the EES itself also configures reference information (for example, the ACR mode indicated by the EES and/or the ACR scenario indicated by the EES), the EES may determine the ACR mode for the application based on information received from the EEC, information received from the EAS, and the reference information configured by the EES itself.

A specific manner of determining by the EES is described in detail below.

In the case 1, optionally, the method 700 further includes: The EES sends the ACR mode determined for the application to the EEC and/or the EAS, and/or the EES sends the ACR mode determined for the application to the AC via the EEC. That the EES sends the ACR mode determined for the application to the AC via the EEC may indicate (or may be replaced with) any one of the following: The EES sends the ACR mode determined for the application to the EEC, and the EEC directly forwards the ACR mode to the AC; or the EES sends the ACR mode determined for the application to the EEC, and the EEC forwards the ACR mode to the AC when determining that the AC needs the information. It may be understood that, if the EEC determines that the AC does not need the information, the EEC may not need to send the ACR mode to the AC.

In the case 1, optionally, if the ACR mode is the single-ACR mode, the method 700 further includes: The EES sends one ACR scenario in the single-ACR mode to the EEC and/or the EAS, and/or the EES sends one ACR scenario in the single-ACR mode to the AC via the EEC. For example, the EES determines one ACR scenario in the single-ACR mode for the application based on the reference information, and sends the ACR scenario to the EEC and/or the EAS. After receiving the ACR scenario, the EEC may send the ACR scenario to the AC.

In the case 1, optionally, if the ACR mode is the multi-ACR mode, the method 700 further includes: The EES sends at least two ACR scenarios in the multi-ACR mode to the EEC and/or the EAS, and/or the EES sends the at least two ACR scenarios in the multi-ACR mode to the AC via the EEC. For example, the EES determines at least two ACR scenarios in the multi-ACR mode for the application based on the reference information, and sends the at least two ACR scenarios to the EEC and/or the EAS. After receiving the at least two ACR scenarios, the EEC may send the at least two ACR scenarios to the AC. That the EEC may send the at least two ACR scenarios to the AC may include: The EEC directly sends the at least two ACR scenarios to the AC; or the EEC may send the at least two ACR scenarios to the AC when determining that the AC needs the foregoing information.

Case 2: The first device is the EEC.

In the case 2, step 710 may include step 7121 and/or step 7122.

7121. The EEC receives the reference information from an EES.

The reference information received by the EEC from the EES in step 7121 may include: an ACR mode indicated by the EES and/or information about at least one ACR scenario, where the at least one ACR scenario is an ACR scenario indicated by the EES and/or the EAS.

Optionally, before step 7121, the method 700 further includes step 7120: The EAS sends the reference information to the EES. The reference information sent by the EAS to the EES includes: the ACR scenario indicated by the EAS and/or an ACR mode indicated by the EAS.

For example, the EAS sends, to the EES, the ACR scenario indicated by the EAS. After receiving the ACR scenario indicated by the EAS, the EES may send, to the EEC, the ACR scenario indicated by the EAS, and the EES may further send, to the EEC, the ACR scenario indicated by the EES. For another example, the EES sends, to the EEC, the ACR scenario indicated by the EES.

7122. The EEC receives the reference information from an AC.

The reference information received by the EEC from the AC in step 7122 may include: the application type, the service continuity requirement of the application, an ACR mode indicated by the AC, or information about at least one ACR scenario, where the at least one ACR scenario is an ACR scenario indicated by the AC.

For example, the AC configures the application type and/or the service continuity requirement of the application, and sends, to the EEC, the ACR scenario indicated by the AC. For another example, the AC sends, to the EEC, the ACR scenario indicated by the AC.

The EEC may determine the ACR mode for the application based on the received information, the ACR scenario determined (indicated) by the EEC, and the ACR mode determined (indicated) by the EEC.

In a first possible case, if the method 700 includes step 7121, in step 720, the EEC may determine the ACR mode for the application based on at least one of the following: the ACR mode indicated by the EAS, the ACR mode indicated by the EES, the ACR mode indicated by the EEC, the ACR scenario indicated by the EAS, the ACR scenario indicated by the EES, or the ACR scenario indicated by the EEC. It may be understood that, if the EEC itself also configures reference information (for example, the ACR mode indicated by the EEC and/or the ACR scenario indicated by the EEC), the EEC may determine the ACR mode for the application based on information received from the EES and the reference information configured by the EEC itself.

In a second possible case, if the method 700 includes step 7122, in step 720, the EEC may determine the ACR mode for the application based on at least one of the following: the application type, the service continuity requirement of the application, the ACR mode indicated by the AC, the ACR mode indicated by the EEC, the ACR scenario indicated by the AC, or the ACR scenario indicated by the EEC. It may be understood that, if the EEC itself also configures reference information (for example, the ACR mode indicated by the EEC and/or the ACR scenario indicated by the EEC), the EEC may determine the ACR mode for the application based on information received from the AC and the reference information configured by the EEC itself.

In a third possible case, if the method 700 includes step 7121 and step 7122, in step 720, the EEC may determine the ACR mode for the application based on at least one of the following: the application type, the service continuity requirement of the application, the ACR mode indicated by the EEC, the ACR mode indicated by the AC, the ACR mode indicated by the EAS, the ACR mode indicated by the EES, the ACR scenario indicated by the EEC, the ACR scenario indicated by the AC, the ACR scenario indicated by the EAS, or the ACR scenario indicated by the EES. It may be understood that, if the EEC itself also configures reference information (for example, the ACR mode indicated by the EEC and/or the ACR scenario indicated by the EEC), the EEC may determine the ACR mode for the application based on information received from the AC, information received from the EES, and the reference information configured by the EEC itself.

In the case 2, optionally, the method 700 further includes: The EEC sends the ACR mode determined for the application to the EES and/or the AC, and/or the EEC sends the ACR mode determined for the application to the EAS via the EES. That the EEC sends the ACR mode determined for the application to the EAS via the EES indicates that the EEC sends the ACR mode determined for the application to the EES, and further, the EES sends the ACR mode to the EAS. That the EES sends the ACR mode to the EAS may include: The EES directly sends the ACR mode to the EAS; or the EES sends the ACR mode to the EAS when the EES determines (or determines) that the EAS needs information about the ACR mode.

In the case 2, optionally, if the ACR mode is the single-ACR mode, the method 700 further includes: The EEC sends one ACR scenario in the single-ACR mode to the EES and/or the AC, and/or the EEC sends one ACR scenario in the single-ACR mode to the EAS via the EES. For example, the EEC determines one ACR scenario in the single-ACR mode for the application based on the reference information, and sends the ACR scenario to the EES and/or the AC. After receiving the ACR scenario, the EES may send the ACR scenario to the EAS. That the EES sends the ACR scenario to the EAS after receiving the ACR scenario may include: The EES directly sends the ACR scenario to the EAS; or the EES sends the ACR scenario to the EAS when the EES determines (or determines) that the EAS needs information about the ACR scenario (for example, when the EAS subscribes to ACR mode information).

In the case 2, optionally, if the ACR mode is the multi-ACR mode, the method 700 further includes: The EEC sends at least two ACR scenarios in the multi-ACR mode to the EES and/or the AC, and/or the EEC sends the at least two ACR scenarios in the multi-ACR mode to the EAS via the EES. For example, the EEC determines at least two ACR scenarios in the multi-ACR mode for the application based on the reference information, and sends the at least two ACR scenarios to the EES and/or the AC. After receiving the at least two ACR scenarios, the EES may send the at least two ACR scenarios to the EAS. That the EES sends the at least two ACR scenarios to the EAS after receiving the at least two ACR scenarios may include: The EES directly sends the at least two ACR scenarios to the EAS; or the EES sends the at least two ACR scenarios to the EAS when the EES determines (or determines) that the EAS needs information about the at least two ACR scenarios (for example, when the EAS subscribes to ACR mode information).

Case 3: The first device is the EAS.

In the case 1, step 710 may include step 7132.

7132. The EAS receives the reference information from an EES.

The reference information received by the EAS from the EES in step 7132 may include: the application type, the service continuity requirement of the application, or information about at least one ACR scenario, where the at least one ACR scenario is an ACR scenario indicated by at least one of the following: an EEC, an AC, and the EES.

Optionally, before step 7132, the method 700 further includes step 7131: An EEC sends the reference information to the EES. The reference information sent by the EEC to the EES includes at least one of the following: the application type, the service continuity requirement of the application, an ACR mode indicated by the EEC, an ACR mode indicated by an AC, or information about at least one ACR scenario, where the at least one ACR scenario is an ACR scenario indicated by the EEC and/or the AC.

Optionally, before step 7131, the method 700 further includes step 7130: An AC sends the reference information to the EEC. The reference information sent by the AC to the EEC includes: the application type, the service continuity requirement of the application, the ACR mode indicated by the AC, or the ACR scenario indicated by the AC.

For example, the AC sends the application type and/or the service continuity requirement of the application to the EEC. After receiving the application type and/or the service continuity requirement of the application, the EEC may send the application type and/or the service continuity requirement of the application to the EES. After receiving the application type and/or the service continuity requirement of the application, the EES may send the application type and/or the service continuity requirement of the application to the EAS.

For another example, the AC sends, to the EEC, the ACR scenario indicated by the AC. After receiving the ACR scenario indicated by the AC, the EEC may send, to the EES, the ACR scenario indicated by the AC. After receiving the ACR scenario indicated by the AC, the EES may send, to the EAS, the ACR scenario indicated by the AC.

For another example, the EEC sends, to the EES, the ACR scenario indicated by the EEC. After receiving the ACR scenario indicated by the EEC, the EES may send, to the EAS, the ACR scenario indicated by the EEC, and may further send the ACR scenario indicated by the EES.

The foregoing is a simple example. It may be understood that this embodiment of this application is not limited thereto. The EES may send, to the EAS, at least one of the application type, the service continuity requirement of the application, the ACR scenario indicated by the EEC, the ACR scenario indicated by the AC, and the ACR scenario indicated by the EES.

The EAS may determine the ACR mode for the application based on the received information, the ACR scenario determined (indicated) by the EAS, and the ACR mode determined (indicated) by the EAS.

In a possible case, if the method 700 includes step 7132, in step 720, the EAS may determine the ACR mode for the application based on at least one of the following: the application type, the service continuity requirement of the application, the ACR mode indicated by the EEC, the ACR mode indicated by the AC, the ACR mode indicated by the EAS, the ACR mode indicated by the EES, the ACR scenario indicated by the EEC, the ACR scenario indicated by the AC, the ACR scenario indicated by the EAS, or the ACR scenario indicated by the EES. It may be understood that, if the EAS itself also configures reference information (for example, the ACR mode indicated by the EAS and/or the ACR scenario indicated by the EAS), the EAS may determine the ACR mode for the application based on information received from the EES and the reference information configured by the EAS itself.

The foregoing describes this embodiment of this application with reference to the three cases of the first device. It may be understood that in a process of transmitting the reference information, a message or signaling that carries the reference information is not limited in this embodiment of this application.

For example, when the EAS and the EES transmit the reference information (for example, the ACR scenario indicated by the EAS or the EES, or the ACR mode indicated by the EAS or the EES), the reference information may be carried in any message exchanged between the EAS and the EES. For example, the reference information sent by the EAS to the EES may be carried in any one of the following messages: an EAS registration request, an EAS registration update request, a UE location (UE location) subscription request, an ACR management subscription request, an AC information subscription request, a UE identity API subscription request, a QoS session creation subscription request, and an EDGE-3 related request (for example, a subscription request corresponding to EDGE-3 related subscription).

For another example, when the EES and the EEC transmit the reference information (for example, at least one of the application type, the service continuity requirement of the application, the ACR mode indicated by the AC, the ACR mode indicated by the EEC, the ACR mode indicated by the EES, the ACR mode indicated by the EAS, the ACR scenario indicated by the AC, the ACR scenario indicated by the EEC, the ACR scenario indicated by the EES, or the ACR scenario indicated by the EAS), the reference information may be carried in any message exchanged between the EES and the EEC. For example, the reference information sent by the EEC to the EES may be carried in any one of the following messages: an EEC registration request and an EEC registration update request.

For another example, when the AC and the EEC transmit the reference information (for example, at least one of the application type, the service continuity requirement of the application, the ACR mode indicated by the AC, or the ACR scenario indicated by the AC), the reference information may be carried in any message exchanged between the AC and the EEC. For example, the reference information sent by the AC to the EEC may be carried in any one of the following messages: an AC registration request and an AC registration update request.

The following describes a solution in which the first device determines the ACR mode for the application based on the reference information.

In step 720, the first device may determine the ACR mode for the application based on at least one of the following: the application type, the service continuity requirement of the application, the ACR mode indicated by the EEC, the ACR mode indicated by the AC, the ACR mode indicated by the EAS, the ACR mode indicated by the EES, the ACR scenario indicated by the EEC, the ACR scenario indicated by the AC, the ACR scenario indicated by the EAS, or the ACR scenario indicated by the EES. The following lists several examples with reference to several cases of the reference information.

Case 1: The reference information includes the application type.

It is assumed that the application type includes a type #1 and a type #2.

For example, if the type of the application is the type #1, the ACR mode determined by the first device for the application is the multi-ACR mode; or if the type of the application is the type #2, the ACR mode determined by the first device for the application is the single-ACR mode. In an example, the type #1 is a game type, and the type #2 is a chat type. Specifically, a game application may be considered to have a high service continuity requirement, and service interruption for a period of time has obvious impact on user experience. A chat application may be considered to have a low service continuity requirement, and service interruption for a period of time has no obvious impact on user experience.

Application types can be classified based on service continuity requirements. It is assumed that the type #1 has a high service continuity requirement (for example, maximum tolerance time of the type #1 for service interruption is less than a preset threshold, or a data exchange amount of the type #1 within a unit time is greater than a preset value), and the type #2 has a low service continuity requirement (for example, maximum tolerance time of the type #1 for service interruption is greater than the preset threshold, or a data exchange amount of the type #1 within the unit time is less than the preset value). In this case, if the type of the application is the type #1, the ACR mode determined by the first device for the application is the multi-ACR mode; or if the type of the application is the type #2, the ACR mode determined by the first device for the application is the single-ACR mode.

Case 2: The reference information includes the service continuity requirement of the application.

For example, if the application has a high service continuity requirement (for example, maximum tolerance time of the application for service interruption is less than a preset threshold, the application type is an application that has a high service continuity requirement, or a data exchange amount of the application within a unit time is greater than a preset value), the ACR mode determined by the first device for the application is the multi-ACR mode. If the application has a low service continuity requirement (for example, maximum tolerance time of the application for service interruption is greater than the preset threshold, the application type is an application that has a low service continuity requirement, or a data exchange amount of the application within the unit time is less than the preset value), the ACR mode determined by the first device for the application is the single-ACR mode. For details, refer to the foregoing explanation about the service continuity requirement of the application. Details are not described herein again.

Case 3: The reference information includes the at least one ACR scenario.

The at least one ACR scenario may include: an ACR scenario indicated by a part or all of function entities in the AC, the EEC, the EES, and the EAS. The first device may determine the ACR mode for the application based on the ACR scenario indicated by the part or all of function entities in the AC, the EEC, the EES, and the EAS.

For ease of understanding, the following uses an example in which the at least one ACR scenario is ACR scenarios indicated by the AC, the EEC, the EES, and the EAS for description.

Assuming that the at least one ACR scenario is the ACR scenarios indicated by the AC, the EEC, the EES, and the EAS, the first device may determine the ACR mode for the application based on the ACR scenarios indicated by the AC, the EEC, the EES, and the EAS.

For example, if there are a plurality of ACR scenarios in an intersection set of the ACR scenarios indicated by the AC, the EEC, the EES, and the EAS, the ACR mode determined by the first device for the application is the multi-ACR mode. Further, optionally, the first device determines at least two ACR scenarios in the multi-ACR mode for the application. For example, the at least two ACR scenarios determined by the first device for the application are an intersection set of the ACR scenarios indicated by the AC, the EEC, the EES, and the EAS, or the at least two ACR scenarios determined by the first device for the application are at least two ACR scenarios in an intersection set of the ACR scenarios indicated by the AC, the EEC, the EES, and the EAS.

For example, if the ACR scenario indicated by the AC includes an ACR scenario 1 and an ACR scenario 2, the ACR scenario indicated by the EEC includes the ACR scenario 1, the ACR scenario 2, and an ACR scenario 3, the ACR scenario indicated by the EES includes the ACR scenario 1, the ACR scenario 2, and an ACR scenario 4, and the ACR scenario indicated by the EAS includes the ACR scenario 1, the ACR scenario 2, and an ACR scenario 5, the intersection set of the ACR scenarios indicated by the AC, the EEC, the EES, and the EAS is the ACR scenario 1 and the ACR scenario 2. The at least two ACR scenarios in the multi-ACR mode determined by the first device for the application may be the ACR scenario 1 and the ACR scenario 2.

For another example, if there is one ACR scenario in an intersection set of the ACR scenarios indicated by the AC, the EEC, the EES, and the EAS, the ACR mode determined by the first device for the application is the single-ACR mode. Further, optionally, the first device determines one ACR scenario in the single-ACR mode for the application. For example, the ACR scenario determined by the first device for the application is the intersection set of the ACR scenarios indicated by the AC, the EEC, the EES, and the EAS.

For example, if the ACR scenario indicated by the AC includes an ACR scenario 1 and an ACR scenario 2, the ACR scenario indicated by the EEC includes the ACR scenario 1 and an ACR scenario 3, the ACR scenario indicated by the EES includes the ACR scenario 1, and the ACR scenario indicated by the EAS includes the ACR scenario 1, the intersection set of the ACR scenarios indicated by the AC, the EEC, the EES, and the EAS is the ACR scenario 1. The ACR scenario in the single-ACR mode determined by the first device for the application may be the ACR scenario 1.

For another example, if an intersection set of ACR scenarios indicated by the AC, the EEC, the EES, and the EAS is empty, the first device may return a failure response to each entity, where the failure response may be for notifying that the first device cannot determine an ACR mode or an ACR scenario for the AC (or the application), or cannot select an ACR scenario supported by each entity.

It may be understood that, when the at least one ACR scenario is an ACR scenario indicated by a part of function entities in the AC, the EEC, the EES, or the EAS, refer to the foregoing examples. Details are not described herein again.

Case 4: The reference information includes the ACR mode indicated by the client and/or the server.

The ACR mode indicated by the client and/or the server may include: an ACR mode indicated by a part or all of function entities in the AC, the EEC, the EES, and the EAS. The first device may determine the ACR mode for the application based on the ACR mode indicated by the part or all of function entities in the AC, the EEC, the EES, and the EAS.

Assuming that the ACR mode indicated by the client and/or the server is ACR modes indicated by the AC, the EEC, the EES, and the EAS, the first device may determine the ACR mode for the application based on the ACR modes indicated by the AC, the EEC, the EES, and the EAS.

For example, if the ACR modes indicated by the AC, the EEC, the EES, and the EAS are all multi-ACR modes, the ACR mode determined by the first device for the application is the multi-ACR mode. Further, optionally, the first device determines at least two ACR scenarios in the multi-ACR mode for the application.

For another example, if an ACR mode indicated by at least one function entity in the AC, the EEC, the EES, and the EAS is the single-ACR mode, the ACR mode determined by the first device for the application is the single-ACR mode. Further, optionally, the first device determines one ACR scenario in the single-ACR mode for the application.

For another example, if an ACR mode indicated by at least one function entity in the AC, the EEC, the EES, and the EAS is the multi-ACR mode, the ACR mode determined by the first device for the application is the multi-ACR mode. Further, optionally, the first device determines at least two ACR scenarios in the multi-ACR mode for the application.

Case 5: The reference information includes the application type and the at least one ACR scenario.

The at least one ACR scenario may include: an ACR scenario indicated by a part or all of function entities in the AC, the EEC, the EES, and the EAS. The first device may determine the ACR mode for the application based on the application type and the ACR scenario indicated by the part or all of function entities in the AC, the EEC, the EES, and the EAS.

Assuming that the at least one ACR scenario is the ACR scenarios indicated by the AC, the EEC, the EES, and the EAS, the first device may determine the ACR mode for the application based on the application type and the ACR scenarios indicated by the AC, the EEC, the EES, and the EAS.

For example, if the first device determines, based on the application type, that the application has a high service continuity requirement, and an intersection set or a union set of the ACR scenarios indicated by the AC, the EEC, the EES, and the EAS includes a plurality of ACR scenarios, the ACR mode determined by the first device for the application is the multi-ACR mode. Further, optionally, the first device determines at least two ACR scenarios in the multi-ACR mode for the application. The at least two ACR scenarios may belong to the intersection set or the union set of the ACR scenarios indicated by the AC, the EEC, the EES, and the EAS, or may be at least two ACR scenarios specified in the intersection set or the union set of the ACR scenarios indicated by the AC, the EEC, the EES, and the EAS.

For another example, if the first device determines, based on the application type, that the application has a high service continuity requirement, and an intersection set of the ACR scenarios indicated by the AC, the EEC, the EES, and the EAS includes one ACR scenario, the ACR mode determined by the first device for the application is the single-ACR mode. Further, optionally, the first device determines one ACR scenario in the single-ACR mode for the application. The ACR scenario may belong to the intersection set of the ACR scenarios indicated by the AC, the EEC, the EES, and the EAS.

For another example, if the first device determines, based on the application type, that the application has a high service continuity requirement, and an intersection set of the ACR scenarios indicated by the AC, the EEC, the EES, and the EAS is empty, the first device may return a failure response to each function entity (for example, at least one of the EEC, the EAS, and the AC; for another example, refer to the foregoing case 1 to case 3), where the failure response may be for notifying that the first device cannot determine the ACR mode or the ACR scenario for the application.

For another example, if the first device determines, based on the application type, that the application has a low service continuity requirement, the ACR mode determined by the first device for the application is the single-ACR mode. Further, optionally, the first device determines one ACR scenario in the single-ACR mode for the application. The ACR scenario may belong to an intersection set of the ACR scenarios indicated by the AC, the EEC, the EES, and the EAS.

It may be understood that the foregoing example is an example for description, and any variation that belongs to the foregoing example is applicable to this embodiment of this application. For example, when the at least one ACR scenario is an ACR scenario indicated by a part of function entities in the AC, the EEC, the EES, or the EAS, refer to the foregoing examples. Details are not described herein again.

Case 6: The reference information includes the ACR mode indicated by the client and/or the server, and the at least one ACR scenario.

The at least one ACR scenario may include an ACR scenario indicated by a part or all of function entities in the AC, the EEC, the EES, and the EAS. The ACR mode indicated by the client and/or the server may include an ACR mode indicated by a part or all of function entities in the AC, the EEC, the EES, and the EAS.

Assuming that the ACR mode indicated by the client and/or the server includes ACR modes indicated by the AC, the EEC, the EES, and the EAS, and the at least one ACR scenario includes ACR modes indicated by the AC, the EEC, the EES, and the EAS, the first device may determine the ACR mode for the application based on the ACR modes indicated by the AC, the EEC, the EES, and the EAS and based on that the at least one ACR scenario is the ACR modes indicated by the AC, the EEC, the EES, and the EAS.

For example, if the first device determines that the ACR modes indicated by the AC, the EEC, the EES, and the EAS are all multi-ACR modes, and an intersection set or a union set of ACR scenarios supported by the AC, the EEC, the EES, and the EAS includes a plurality of ACR scenarios, the first device determines that the ACR mode of the application (or the AC) is the multi-ACR mode. Optionally, the first device further determines at least two ACR scenarios in the multi-ACR mode. The at least two ACR scenarios may belong to the intersection set or the union set of the ACR scenarios supported by the AC, the EEC, the EES, and the EAS, or may be several ACR scenarios specified in the intersection set or the union set of the ACR scenarios supported by the AC, the EEC, the EES, and the EAS.

For another example, if the first device determines that the ACR modes indicated by the AC, the EEC, the EES, and the EAS are all multi-ACR modes, and an intersection set of ACR scenarios supported by the AC, the EEC, the EES, and the EAS includes one ACR scenario, the first device determines that the ACR mode of the application (or the AC) is the single-ACR mode. Optionally, the first device further determines one ACR scenario in the single-ACR mode. The ACR scenario may belong to the intersection set of the ACR scenarios supported by the AC, the EEC, the EES, and the EAS.

For another example, if the first device determines that the ACR modes indicated by the AC, the EEC, the EES, and the EAS are all multi-ACR modes, and an intersection set of ACR scenarios supported by the AC, the EEC, the EES, and the EAS is empty, the first device may return a failure response to each entity, where the failure response may be for notifying that the first device cannot determine an ACR mode or an ACR scenario for the AC (or the application), or cannot select an ACR scenario supported by each entity.

For another example, if the first device determines that an ACR mode indicated by at least one function entity in the AC, the EEC, the EES, and the EAS is the single-ACR mode, the first device determines that the ACR mode of the application (or the AC) is the single-ACR mode. Optionally, the first device further determines one ACR scenario in the single-ACR mode. The ACR scenario may be an ACR scenario belonging to the intersection set of the ACR scenarios supported by the AC, the EEC, the EES, and the EAS.

For another example, if the first device determines that an ACR mode indicated by at least one function entity in the AC, the EEC, the EES, and the EAS is a single-ACR mode, and an intersection set of ACR scenarios supported by the AC, the EEC, the EES, and the EAS is empty, the first device may return a failure response to each entity (for example, at least one of the EEC, the EAS, and the AC), where the failure response may be for notifying that the first device cannot determine an ACR mode or an ACR scenario for the AC (or the application), or cannot select an ACR scenario supported by each entity.

It may be understood that the foregoing example is an example for description, and any variation that belongs to the foregoing example is applicable to this embodiment of this application. For example, when the at least one ACR scenario is an ACR scenario indicated by a part of function entities in the AC, the EEC, the EES, or the EAS, and the ACR mode indicated by the client and/or the server is an ACR mode indicated by a part of function entities in the AC, the EEC, the EES, or the EAS, refer to the foregoing examples. Details are not described herein again.

It may be further understood that the foregoing case 1 to case 6 are merely examples for description, and this embodiment of this application is not limited thereto. The first device may determine the ACR mode for the application based on at least one of the application type, the service continuity requirement of the application, the ACR scenario indicated by the EEC, the ACR scenario indicated by the AC, the ACR scenario indicated by the EAS, the ACR scenario indicated by the EES, the ACR mode indicated by the EEC, the ACR mode indicated by the AC, the ACR mode indicated by the EAS, or the ACR mode indicated by the EES.

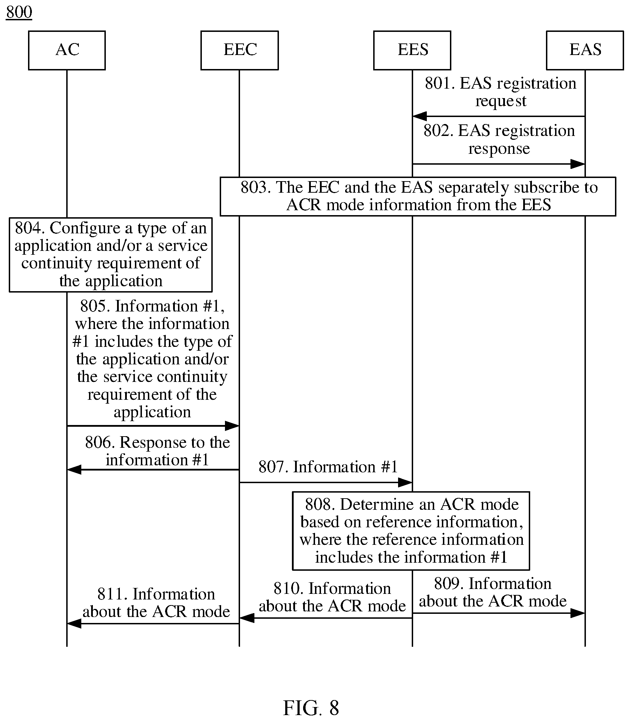

For ease of understanding, the following describes embodiments of this application by using examples with reference to FIG. 8 to FIG. 14. For details about involved steps and terms, refer to the foregoing descriptions.

FIG. 8 is a schematic flowchart of a communication method 800 according to an embodiment of this application. The method 800 may be for implementing a solution (for example, the case 1) in the method 700. For example, the method 800 may be used by an EES to determine an ACR mode and/or an ACR scenario in the ACR mode that are/is used for an application based on a type of the application and/or a service continuity requirement of the application. As an example, the method 800 may include the following steps.

801. An EAS sends an EAS registration request to an EES.

The EAS registration request includes an ACR scenario supported by the EAS. The ACR scenario supported by the EAS may include one or more ACR scenarios. This is not limited. As an example, the EAS registration request may include an EAS profile (profile), where the EAS profile includes the ACR scenario supported by the EAS. The ACR scenario supported by the EAS may be carried in EAS service continuity support (EAS service continuity support), that is, the EAS service continuity support may indicate the ACR scenario supported by the EAS.

It may be understood that, in this embodiment of this application, an example in which the EAS registration request sent by the EAS to the EES carries the ACR scenario supported by the EAS is used for description. A message carrying the ACR scenario supported by the EAS is not limited in this embodiment of this application. In a process of interaction between the EAS and the EES, any solution of notifying the EES of the ACR scenario supported by the EAS is applicable to this embodiment of this application. For example, the ACR scenario supported by the EAS may be carried in any one of the following messages: an EAS registration update request, a UE location subscription request, an ACR management subscription request, an AC information subscription request, a UE identity API subscription request, a QoS session creation subscription request, and an EDGE-3 related request (for example, a subscription request corresponding to EDGE-3 related subscription).

802. The EES sends an EAS registration response to the EAS.

The EAS registration response in step 802 may be understood as a response to the EAS registration request in step 801.

It may be understood that, in steps 801 and 802, the ACR scenario supported by the EAS is notified to the EES through an EAS registration procedure, as described in step 801. This is not limited. For example, alternatively, the ACR scenario supported by the EAS may be notified to the EES in an ACR mode information subscription procedure.

803. The EEC and the EAS separately subscribe to ACR mode information from the EES.

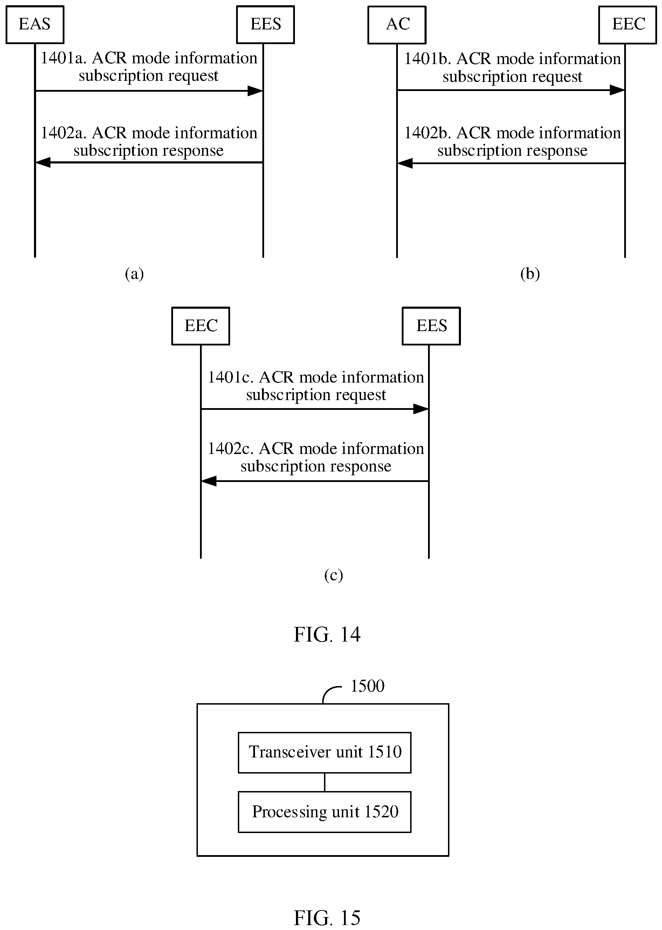

The solution in which each function entity (such as the EEC and the EAS) subscribes to the ACR mode information from the EES is described in detail below with reference to FIG. 14.

804. An AC configures a type of an application and/or a service continuity requirement of the application.

For the type of the application and the service continuity requirement of the application, refer to the descriptions in the method 700. Details are not described herein again.

In a possible implementation, the AC configures the type of the application and/or the service continuity requirement of the application in an AC configuration profile (AC profile). A specific storage location of the type of the application and a specific storage location of the service continuity requirement of the application are not limited in this embodiment of this application.

Optionally, the AC further determines an ACR scenario supported by the AC. The ACR scenario supported by the AC may include one or more ACR scenarios. This is not limited. For example, the AC is configured with AC service continuity support, and the AC service continuity support indicates the ACR scenario supported by the AC.

It may be understood that a quantity of applications is not limited in step 804, and the quantity of applications may be one or more.

It may be further understood that the EEC may alternatively directly configure the foregoing information, for example, at least one of the type of the application, the service continuity requirement of the application, or the ACR scenario supported by the AC. If the EEC directly configures the foregoing information, step 804 to step 806 may not be performed.

805. The AC sends information #1 to the EEC, where the information #1 includes the type of the application and/or the service continuity requirement of the application.

If the AC configures the type of the application in step 804, the information #1 in step 805 includes the type of the application. If the AC configures the service continuity requirement of the application in step 804, the information #1 in step 805 includes the service continuity requirement of the application. If the AC configures the type of the application and the service continuity requirement of the application in step 804, the information #1 in step 805 includes the type of the application and the service continuity requirement of the application.

Optionally, the AC further sends the ACR scenario supported by the AC to the EEC. The information #1 and the ACR scenario supported by the AC that are sent by the AC to the EEC may be carried in same signaling, or may be carried in different signaling. This is not limited.

In a possible implementation, the information #1 and/or the ACR scenario supported by the AC may be carried in an AC registration request (AC registration request). Specifically, the AC sends an AC registration request to the EEC, where the AC registration request carries the information #1 and/or the ACR scenario supported by the AC. It may be understood that, a message that carries the information #1 or the ACR scenario supported by the AC is not limited in this embodiment of this application. For example, the information #1 and/or the ACR scenario supported by the AC may be carried in any message exchanged between the AC and the EEC, for example, an AC registration update request (AC registration update request) or an ACR mode subscription request.

806. The EEC sends a response to the information #1 to the AC.

For example, if the AC sends the AC registration request to the EEC in step 805, the EEC sends an AC registration response (AC registration response) to the AC in step 806.

807. The EEC sends the information #1 to the EES.

Optionally, if the AC further sends the ACR scenario supported by the AC to the EEC in step 805, the EEC further sends the ACR scenario supported by the AC to the EES in step 807.

Optionally, the EEC further sends an ACR scenario supported by the EEC to the EES. The ACR scenario supported by the EEC may include one or more ACR scenarios. This is not limited.

The information #1, the ACR scenario supported by the AC, and the ACR scenario supported by the EEC that are sent by the EEC to the EES may be carried in same signaling, or may be carried in different signaling. This is not limited.

In a possible implementation, the information #1, the ACR scenario supported by the AC, and the ACR scenario supported by the EEC are carried in an EEC registration request (EEC registration request). For example, the EEC sends the EEC registration request to the EES, where the EEC registration request carries the information #1, the ACR scenario supported by the AC, and the ACR scenario supported by the EEC. It may be understood that a message that carries the information #1, the ACR scenario supported by the AC, or the ACR scenario supported by the EEC is not limited in this embodiment of this application. The information #1 is used as an example. For example, the information #1 may be carried in an EEC registration update request (EEC registration update request) or an ACR mode subscription request. For another example, the information #1 may alternatively be stored in an AC profile for transmission.

808. The EES determines an ACR mode for the application based on reference information, where the reference information includes the information #1.

The information #1 includes the type of the application and/or the service continuity requirement of the application. The ACR mode is a single-ACR mode or a multi-ACR mode. For example, it is assumed that a type #1 has a high service continuity requirement (for example, maximum tolerance time of the type #1 for service interruption is less than a preset threshold, or a data exchange amount of the type #1 within a unit time is greater than a preset value), and a type #2 has a low service continuity requirement (for example, maximum tolerance time of the type #1 for service interruption is greater than the preset threshold, or a data exchange amount of the type #1 within the unit time is less than the preset value).

Optionally, the EES determines an ACR scenario supported by the EES.

Optionally, the reference information further includes at least one of the following: the ACR scenario supported by the AC, the ACR scenario supported by the EEC, the ACR scenario supported by the EES, and the ACR scenario supported by the EAS.

The following provides an example description with reference to several cases. For the type of the application and the service continuity requirement of the application, refer to related descriptions in the method 700. Details are not described herein again.

In a first possible case, the reference information includes the information #1.

For example, if the EES determines, based on the information #1, that the application has a high service continuity requirement (for example, maximum tolerance time of the application for service interruption is less than a preset threshold, the application type is an application that has a high service continuity requirement, or a data exchange amount of the application within a unit time is greater than a preset value), the EES determines that the ACR mode of the application (or the AC) is the multi-ACR mode. Optionally, the EES further determines at least two ACR scenarios in the multi-ACR mode.

For another example, if the EES determines, based on the information #1, that the service continuity requirement of the application is low (for example, maximum tolerance time of the application for service interruption is greater than a preset threshold, the application type is an application that has a low service continuity requirement, and a data exchange amount of the application within a unit time is less than a preset value), the EES determines that the ACR mode of the application (or the AC) is the single-ACR mode. Optionally, the EES further determines one ACR scenario in the single-ACR mode.

For another example, it is assumed that a type #1 has a high service continuity requirement (for example, maximum tolerance time of the type #1 for service interruption is less than a preset threshold, or a data exchange amount of the type #1 within a unit time is greater than a preset value), and a type #2 has a low service continuity requirement (for example, maximum tolerance time of the type #1 for service interruption is greater than the preset threshold, or a data exchange amount of the type #1 within the unit time is less than the preset value). If the application type in the information #1 is the type #1, the ACR mode determined by the first device for the application is the multi-ACR mode; or if the application type in the information #1 is the type #2, the ACR mode determined by the first device for the application is the single-ACR mode.

In a second possible case, the reference information includes the information #1 and the ACR scenario supported by the AC.

For example, in step 807, the EEC further sends the ACR scenario supported by the AC to the EES. Therefore, the EES may determine the ACR mode of the application (or the AC) based on the information #1 and the ACR scenario supported by the AC.

For example, if the EES determines, based on the information #1, that the application has a low service continuity requirement, the EES determines that the ACR mode of the application (or the AC) is the single-ACR mode. Optionally, the EES further determines one ACR scenario in the single-ACR mode. The ACR scenario may be an ACR scenario in the ACR scenario supported by the AC.

For another example, if the EES determines, based on the information #1, that the application has a high service continuity requirement, and the EES determines that the ACR mode of the application (or the AC) is the multi-ACR mode. Optionally, the EES further determines at least two ACR scenarios in the multi-ACR mode. The at least two ACR scenarios may be at least two ACR scenarios belonging to the ACR scenario supported by the AC.

In a third possible case, the reference information includes the information #1, the ACR scenario supported by the AC, and the ACR scenario supported by the EEC.

For example, in step 807, the EEC further sends the ACR scenario supported by the AC and the ACR scenario supported by the EEC to the EES. Therefore, the EES may determine the ACR mode of the application (or the AC) based on the information #1, the ACR scenario supported by the AC, and the ACR scenario supported by the EEC.

For example, if the EES determines, based on the information #1, that the application has a high service continuity requirement, and an intersection set or a union set of the ACR scenario supported by the AC and the ACR scenario supported by the EEC includes a plurality of ACR scenarios, the EES determines that the ACR mode of the application (or the AC) is the multi-ACR mode. Optionally, the EES further determines at least two ACR scenarios in the multi-ACR mode. The at least two ACR scenarios may belong to the intersection set or the union set of the ACR scenario supported by the AC and the ACR scenario supported by the EEC, or may be several ACR scenarios specified in the intersection set or the union set of the ACR scenario supported by the AC and the ACR scenario supported by the EEC.

For another example, if the EES determines, based on the information #1, that the application has a high service continuity requirement, and an intersection set of the ACR scenario supported by the AC and the ACR scenario supported by the EEC is one ACR scenario, the EES determines that the ACR mode of the application (or the AC) is the single-ACR mode. Optionally, the EES further determines one ACR scenario in the single-ACR mode. The ACR scenario may belong to the intersection set of the ACR scenario supported by the AC and the ACR scenario supported by the EEC.

For another example, if the EES determines, based on the information #1, that the application has a high service continuity requirement, and an intersection set of the ACR scenario supported by the AC and the ACR scenario supported by the EEC is empty, the EES may return a failure response to each entity (for example, at least one of the EEC, the EAS, and the AC), where the failure response may be for notifying that the EES cannot determine an ACR mode or an ACR scenario for the AC (or the application), or cannot select an ACR scenario supported by each entity.

For another example, if the EES determines, based on the information #1, that the application has a low service continuity requirement, the EES determines that the ACR mode of the application (or the AC) is the single-ACR mode. The ACR scenario may be an ACR scenario belonging to the intersection set of the ACR scenario supported by the AC and the ACR scenario supported by the EEC.

In a fourth possible case, the reference information includes the information #1, the ACR scenario supported by the AC, the ACR scenario supported by the EEC, and the ACR scenario supported by the EAS.

For example, in step 807, the EEC further sends the ACR scenario supported by the AC and the ACR scenario supported by the EEC to the EES. Therefore, the EES may determine the ACR mode of the application (or the AC) based on the information #1, the ACR scenario supported by the AC, the ACR scenario supported by the EEC, and the ACR scenario that is supported by the EAS and that is received in step 801.

For example, if the EES determines, based on the information #1, that the application has a high service continuity requirement, and an intersection set or a union set of the ACR scenario supported by the AC, the ACR scenario supported by the EEC, and the ACR scenario supported by the EAS includes a plurality of ACR scenarios, the EES determines that the ACR mode of the application (or the AC) is the multi-ACR mode. Optionally, the EES further determines at least two ACR scenarios in the multi-ACR mode. The at least two ACR scenarios may belong to the intersection set or the union set of the ACR scenario supported by the AC, the ACR scenario supported by the EEC, and the ACR scenario supported by the EAS, or may be several ACR scenarios specified in the ACR scenario supported by the AC, the ACR scenario supported by the EEC, and the ACR scenario supported by the EAS.

For another example, if the EES determines, based on the information #1, that the application has a high service continuity requirement, and an intersection set of the ACR scenario supported by the AC, the ACR scenario supported by the EEC, and the ACR scenario supported by the EAS is one ACR scenario, the EES determines that the ACR mode of the application (or the AC) is the single-ACR mode. Optionally, the EES further determines one ACR scenario in the single-ACR mode. The ACR scenario may belong to the intersection set of the ACR scenario supported by the AC, the ACR scenario supported by the EEC, and the ACR scenario supported by the EAS.

For another example, if the EES determines, based on the information #1, that the application has a high service continuity requirement, and an intersection set of the ACR scenario supported by the AC, the ACR scenario supported by the EEC, and the ACR scenario supported by the EAS is empty, the EES may return a failure response to each entity (for example, at least one of the EEC, the EAS, and the AC), where the failure response may be for notifying that the EES cannot determine an ACR mode or an ACR scenario for the AC (or the application), or cannot select an ACR scenario supported by each entity.

For another example, if the EES determines, based on the information #1, that the application has a low service continuity requirement, the EES determines that the ACR mode of the application (or the AC) is the single-ACR mode. Optionally, the EES further determines one ACR scenario in the single-ACR mode. The ACR scenario may be a scenario belonging to an intersection set of the ACR scenario supported by the AC, the ACR scenario supported by the EEC, and the ACR scenario supported by the EAS.

In a fifth possible case, the reference information includes the information #1, the ACR scenario supported by the AC, the ACR scenario supported by the EEC, the ACR scenario supported by the EAS, and the ACR scenario supported by the EES.

For example, in step 807, the EEC further sends the ACR scenario supported by the AC and the ACR scenario supported by the EEC to the EES. Therefore, the EES may determine the ACR mode of the application (or the AC) based on the information #1, the ACR scenario supported by the AC, the ACR scenario supported by the EEC, the ACR scenario that is supported by the EAS and that is received in step 801, and the ACR scenario supported by the EES.

For example, if the EES determines, based on the information #1, that the application has a high service continuity requirement, and an intersection set or a union set of the ACR scenario supported by the AC, the ACR scenario supported by the EEC, the ACR scenario supported by the EAS, and the ACR scenario supported by the EES includes a plurality of ACR scenarios, the EES determines that the ACR mode of the application (or the AC) is the multi-ACR mode. Optionally, the EES further determines at least two ACR scenarios in the multi-ACR mode. The at least two ACR scenarios may belong to the intersection set or the union set of the ACR scenario supported by the AC, the ACR scenario supported by the EEC, the ACR scenario supported by the EAS, and the ACR scenario supported by the EES, or may be several ACR scenarios specified in the intersection set or the union set of the ACR scenario supported by the AC, the ACR scenario supported by the EEC, the ACR scenario supported by the EAS, and the ACR scenario supported by the EES.

For another example, if the EES determines, based on the information #1, that the application has a high service continuity requirement, and an intersection set of the ACR scenario supported by the AC, the ACR scenario supported by the EEC, the ACR scenario supported by the EAS, and the ACR scenario supported by the EES is one ACR scenario, the EES determines that the ACR mode of the application (or the AC) is the single-ACR mode. Optionally, the EES further determines one ACR scenario in the single-ACR mode. The ACR scenario may belong to the intersection set of the ACR scenario supported by the AC, the ACR scenario supported by the EEC, the ACR scenario supported by the EAS, and the ACR scenario supported by the EES.

For another example, if the EES determines, based on the information #1, that the application has a high service continuity requirement, and an intersection set of the ACR scenario supported by the AC, the ACR scenario supported by the EEC, the ACR scenario supported by the EAS, and the ACR scenario supported by the EES is empty, the EES may return a failure response to each entity (for example, at least one of the EEC, the EAS, and the AC), where the failure response may be for notifying that the EES cannot determine an ACR mode or an ACR scenario for the AC (or the application), or cannot select an ACR scenario supported by each entity.

For another example, if the EES determines, based on the information #1, that the application has a low service continuity requirement, the EES determines that the ACR mode of the application (or the AC) is the single-ACR mode. Optionally, the EES further determines one ACR scenario in the single-ACR mode. The ACR scenario may be an ACR scenario belonging to the intersection set of the ACR scenario supported by the AC, the ACR scenario supported by the EEC, the ACR scenario supported by the EAS, and the ACR scenario supported by the EES.

It may be understood that the foregoing cases are examples for description, and any variation of the foregoing cases is applicable to this embodiment of this application.

It may be further understood that, in the foregoing cases, that the EES determines, based on the information #1, that the application has a low service continuity requirement may be replaced with that the EES determines, based on the information #1, that the maximum tolerance time of the application for service interruption is greater than the preset threshold; that the EES determines, based on the information #1, that the application has a high service continuity requirement may be replaced with that the EES determines, based on the information #1, that the maximum tolerance time of the application for service interruption is less than the preset threshold.

809. The EES sends information about the ACR mode to the EAS.

The information about the ACR mode may be carried in a message exchanged between the EES and the EAS. This is not limited. As an example, the information about the ACR mode may be carried in any one of the following messages: an ACR mode information notification, a UE location response, a UE location notification, an ACR management response, an ACR management notification, an AC information subscription response, an AC information subscription notification, a UE identity API response, a UE identity API notification, a QoS session creation response, a QoS session creation notification, an ACR management event response, an ACR management event notification, a response corresponding to EDGE-3 related subscription, an EDGE-3 related notification, an ACR mode subscription notification, or the like.

As an example, the information about the ACR mode may include the ACR mode and/or the ACR scenario in the ACR mode. To be specific, step 809 may include that the EES sends the ACR mode to the EAS; and/or step 809 may include that the EES sends the ACR scenario in the ACR mode to the EAS.

If the ACR mode is the single-ACR mode, the ACR scenario in the ACR mode is one ACR scenario. If the ACR mode is the multi-ACR mode, the ACR scenario in the ACR mode is at least two ACR scenarios.

As an example, the information about the ACR mode may further include information about an ACR trigger event and information about the ACR mode and/or the ACR scenario in the ACR mode. The ACR trigger event may include, for example, one or more of UE movement, server overload, a DNAI change, QoS quality degradation, and the like. It may be understood that, in different ACR trigger events, ACR scenarios may be the same or may be different. For example, for a same application, one ACR mode and an ACR scenario in the ACR mode may be determined, and the ACR scenario may be applicable to all trigger events corresponding to the application. For another example, for a same application, one ACR mode and different ACR scenarios in the ACR mode may be determined, and the different ACR scenarios may respectively correspond to different trigger events for the application.

It may be understood that the foregoing is an example for description. This is not limited.

810. The EES sends the information about the ACR mode to the EEC.

For example, if the EEC sends the EEC registration request to the EES in step 807, the EES returns an EEC registration response (EEC registration response) to the EEC in step 810, where the EEC registration response includes the information about the ACR mode.

It may be understood that a message carrying the information about the ACR mode is not limited in this embodiment of this application, and the information about the ACR mode may be carried in any message exchanged between the EES and the EEC. As an example, the information about the ACR mode may be carried in any one of the following messages: an ACR mode information notification, an EAS discovery notification (EAS discovery notification), an EAS discovery response (EAS discovery response), another EDGE-1 message, and the like.

For the information about the ACR mode, refer to the descriptions in step 809. Details are not described herein again.

811. The EEC sends the information about the ACR mode to the AC.

For example, the AC subscribes to ACR mode information from the EEC, and the EEC sends an ACR mode information notification to the AC, where the ACR mode information notification carries the information about the ACR mode.

It may be understood that a message carrying the information about the ACR mode is not limited in this embodiment of this application, and the information about the ACR mode may be carried in any message exchanged between the EEC and the AC. As an example, the information about the ACR mode may be carried in any one of the following messages: an AC registration response, another EDGE-5 message, and the like.

For the information about the ACR mode, refer to the descriptions in step 809. Details are not described herein again.

Based on the foregoing technical solution, the EES may obtain the type of the application and/or the service continuity requirement of the application from the AC (for example, the AC sends the type of the application and/or the service continuity requirement of the application to the EEC, and the EES receives the type of the application and/or the service continuity requirement of the application from the EEC), to determine the ACR mode for the application and/or determine the ACR scenario in the ACR mode based on the type of the application and/or the service continuity requirement of the application. In addition, when the ACR mode or the ACR scenario in the ACR mode is determined, the ACR scenario supported by each function entity may be further considered, so that an appropriate ACR mode and/or an appropriate ACR scenario can be selected based on an actual situation. In this way, it can be ensured that ACR is triggered in a timely manner, and unnecessary repeated detection and a target EAS discovery procedure can be reduced.

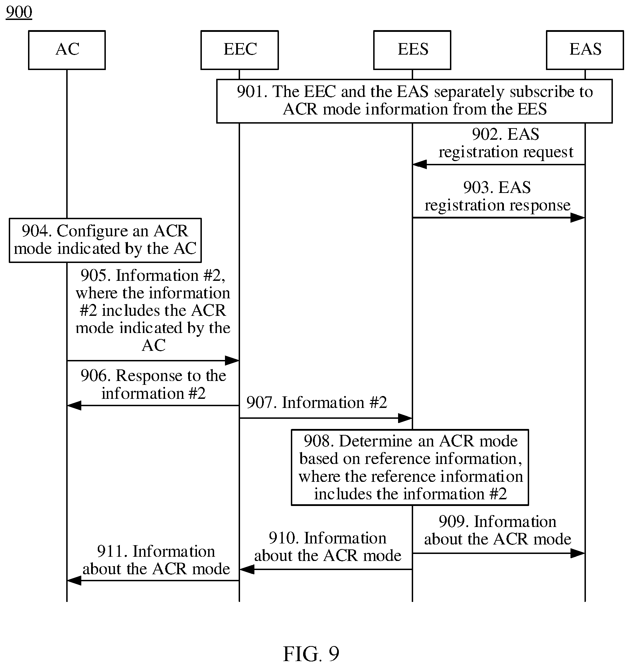

FIG. 9 is a schematic flowchart of a communication method 900 according to an embodiment of this application. The method 900 may be for implementing a solution (for example, the case 1) in the method 700. For example, the method 900 may be used by an EES to determine an ACR mode and/or an ACR scenario in the ACR mode that are/is used for an application based on an ACR mode indicated by each function entity. As an example, the method 900 may include the following steps.

901. An EEC and an EAS separately subscribe to ACR mode information from an EES.

The solution in which each function entity (such as the EEC and the EAS) subscribes to the ACR mode information from the EES is described in detail below with reference to FIG. 14.

902. The EAS sends an EAS registration request to the EES.

The EAS registration request includes an ACR scenario indicated (or preferred, or preferred) by the EAS. The ACR scenario specified by the EAS may include one or more ACR scenarios. This is not limited. As an example, the EAS registration request may include an EAS profile, where the EAS profile includes an ACR scenario specified by the EAS. For example, the EAS profile includes EAS service continuity support, and the EAS service continuity support includes the ACR scenario specified by the EAS.

Optionally, the EAS registration request may further include an ACR scenario supported by the EAS. For example, the EAS service continuity support may further include the ACR scenario supported by the EAS.

An ACR mode indicated by the EAS may indicate an ACR scenario determined based on the ACR scenario supported by the EAS, or may indicate an ACR scenario determined based on a type of an application and/or a service continuity requirement of the application. For example, the ACR mode indicated by the EAS may be deduced based on the ACR scenario supported by the EAS in the EAS service continuity support parameter, or may be inconsistent with the ACR scenario supported by the EAS in the EAS service continuity support parameter. For the ACR mode indicated by the EAS, refer to the descriptions in the method 700. Details are not described herein again.

903. The EES sends an EAS registration response to the EAS.

The EAS registration response in step 903 may be understood as a response to the EAS registration request in step 902.

It may be understood that, in steps 902 and 903, the EES is notified, through an EAS registration procedure, of the ACR mode indicated by the EAS and the ACR scenario supported by the EAS. This is not limited. For example, alternatively, the ACR mode indicated by the EAS and the ACR scenario supported by the EAS may be notified to the EES in an ACR mode information subscription procedure.

904. An AC configures an ACR mode indicated by the AC.

In a possible implementation, the AC configures, in an AC profile, the ACR mode indicated by the AC. A specific storage location of the ACR mode indicated by the AC is not limited in this embodiment of this application.

For example, the ACR mode indicated by the AC may be deduced based on an ACR scenario supported by the AC in an AC service continuity support parameter, or may be inconsistent with the ACR scenario supported by the AC in the AC service continuity support parameter. For example, the AC supports a plurality of ACR scenarios, and the ACR mode indicated by the AC is a single-ACR mode.

Optionally, the AC further determines an ACR scenario supported by the AC. The ACR scenario supported by the AC may include one or more ACR scenarios. This is not limited. For example, the AC is configured with AC service continuity support, and the AC service continuity support indicates the ACR scenario supported by the AC.

Optionally, the AC further configures a type of an application and/or a service continuity requirement of the application.

It may be further understood that the EEC may alternatively directly configure the foregoing information, for example, at least one of the type of the application, the service continuity requirement of the application, the ACR mode indicated by the AC, or the ACR scenario supported by the AC. If the EEC directly configures the foregoing information, step 904 to step 906 may not be performed.

905. The AC sends information #2 to the EEC, where the information #2 includes the ACR mode indicated by the AC.

For example, the AC sends an AC registration request to the EEC, where the AC registration request carries the information #2. It may be understood that a message carrying the information #2 is not limited in this embodiment of this application. For example, the information #2 may be carried in any message exchanged between the AC and the EEC, such as an AC registration update request (AC registration update request) or an ACR mode subscription request.

Optionally, the AC further sends at least one of the following information to the EEC: the ACR scenario supported by the AC, the type of the application, or the service continuity requirement of the application. The at least one of information and the information #2 may be carried in same signaling, or may be carried in different signaling. This is not limited.

906. The EEC sends a response to the information #2 to the AC.

For example, if the AC sends the AC registration request to the EEC in step 905, the EEC sends an AC registration response to the AC in step 906.

907. The EEC sends the information #2 to the EES.

In a possible implementation, the information #2 is carried in an EEC registration request. For example, the EEC sends an EEC registration request to the EES, where the EEC registration request carries the information #2. It may be understood that a message carrying the information #2 is not limited in this embodiment of this application.

Optionally, if the AC further sends at least one of the following information to the EEC in step 905: the ACR scenario supported by the AC, the type of the application, or the service continuity requirement of the application, the EEC further sends at least one of the following information to the EES in step 907: the ACR scenario supported by the AC, the type of the application, or the service continuity requirement of the application.

Optionally, the EEC further sends, to the EES, an ACR scenario supported by the EEC and/or an ACR mode indicated by the EEC. The ACR mode indicated by the EEC may be deduced from an ACR scenario supported by the EEC in an EEC service continuity support parameter, or may be inconsistent with the ACR scenario supported by the EEC in the EEC service continuity support parameter.

It may be understood that the foregoing information and the information #2 may be carried in same signaling, or may be carried in different signaling. This is not limited.

908. The EES determines an ACR mode for the application based on reference information, where the reference information includes the information #2.

The information #2 includes the ACR mode indicated by the AC.

Optionally, the EES determines an ACR scenario supported by the EES and/or an ACR mode indicated by the EES.

Optionally, the reference information further includes at least one of the following: the ACR scenario supported by the AC, the ACR scenario supported by the EEC, the ACR scenario supported by the EES, the ACR scenario supported by the EAS, the ACR mode indicated by the EEC, the ACR mode indicated by the EES, and the ACR mode indicated by the EAS.

The following provides an example description with reference to several cases.

In a first possible case, the reference information includes the information #2.

For example, if the EES determines, based on the information #2, that the ACR mode indicated by the AC is a multi-ACR mode, the EES determines that the ACR mode of the application (or the AC) is the multi-ACR mode. Optionally, the EES further determines at least two ACR scenarios in the multi-ACR mode.

For another example, if the EES determines, based on the information #2, that the ACR mode indicated by the AC is a single-ACR mode, the EES determines that the ACR mode of the application (or the AC) is the single-ACR mode. Optionally, the EES further determines one ACR scenario in the single-ACR mode.

In a second possible case, the reference information includes the ACR mode indicated by the EEC, the EES, the EAS, and the information #2.

For example, if the EES determines that the ACR modes indicated by the AC, the EEC, the EES, and the EAS are all multi-ACR modes, the EES determines that the ACR mode of the application (or the AC) is the multi-ACR mode. Optionally, the EES further determines at least two ACR scenarios in the multi-ACR mode.

For another example, if the EES determines that an ACR mode indicated by at least one function entity in the AC, the EEC, the EES, and the EAS is the single-ACR mode, the EES determines that the ACR mode of the application (or the AC) is the single-ACR mode. Optionally, the EES further determines one ACR scenario in the single-ACR mode.

In a third possible case, the reference information includes the ACR scenarios supported by the AC, the EEC, the EES, and the EAS, and the ACR modes indicated by the EEC, the EES, the AC, and the EAS.

For example, if the EES determines that the ACR modes indicated by the AC, the EEC, the EES, and the EAS are all multi-ACR modes, and an intersection set or a union set of ACR scenarios supported by the AC, the EEC, the EES, and the EAS includes a plurality of ACR scenarios, the EES determines that the ACR mode of the application (or the AC) is the multi-ACR mode. Optionally, the EES further determines at least two ACR scenarios in the multi-ACR mode. The at least two ACR scenarios may belong to the intersection set or the union set of the ACR scenarios supported by the AC, the EEC, the EES, and the EAS, or may be several ACR scenarios specified in the intersection set or the union set of the ACR scenarios supported by the AC, the EEC, the EES, and the EAS.

For another example, if the EES determines that the ACR modes indicated by the AC, the EEC, the EES, and the EAS are all multi-ACR modes, and an intersection set of the ACR scenarios supported by the AC, the EEC, the EES, and the EAS includes one ACR scenario, the EES determines that the ACR mode of the application (or the AC) is the single-ACR mode. Optionally, the EES further determines one ACR scenario in the single-ACR mode. The ACR scenario may belong to the intersection set of the ACR scenarios supported by the AC, the EEC, the EES, and the EAS.

For another example, if the EES determines that the ACR modes indicated by the AC, the EEC, the EES, and the EAS are all multi-ACR modes, and an intersection set of the ACR scenarios supported by the AC, the EEC, the EES, and the EAS is empty, the EES may return a failure response to each entity (for example, at least one of the EEC, the EAS, and the AC), where the failure response may be for notifying that the EES cannot determine an ACR mode or an ACR scenario for the AC (or the application), or cannot select an ACR scenario supported by each entity.

For another example, if the EES determines that an ACR mode indicated by at least one function entity in the AC, the EEC, the EES, and the EAS is the single-ACR mode, the EES determines that the ACR mode of the application (or the AC) is the single-ACR mode. Optionally, the EES further determines one ACR scenario in the single-ACR mode. The ACR scenario may be an ACR scenario belonging to the intersection set of the ACR scenarios supported by the AC, the EEC, the EES, and the EAS.

For another example, if the EES determines that an ACR mode indicated by at least one function entity in the AC, the EEC, the EES, and the EAS is a single-ACR mode, and an intersection set of the ACR scenarios supported by the AC, the EEC, the EES, and the EAS is empty, the EES may return a failure response to each entity (for example, at least one of the EEC, the EAS, and the AC), where the failure response may be for notifying that the EES cannot determine an ACR mode or an ACR scenario for the AC (or the application), or cannot select an ACR scenario supported by each entity.

It may be understood that the foregoing cases are examples for description, and any variation of the foregoing cases is applicable to this embodiment of this application. For example, the EES may alternatively determine the ACR mode based on an ACR mode indicated by one or more function entities in the AC, the EEC, the EES, and the EAS. For another example, the EES may alternatively determine the ACR mode based on an ACR mode indicated by one or more function entities in the AC, the EEC, the EES, and the EAS, and an ACR scenario supported by the one or more function entities.

909. The EES sends information about the ACR mode to the EAS.

910. The EES sends the information about the ACR mode to the EEC.

911. The EEC sends the information about the ACR mode to the AC.

Steps 909 to 911 are similar to steps 809 to 811. Details are not described herein again.

Based on the foregoing technical solution, the EES may obtain an ACR mode indicated by each function entity (for example, the AC sends, to the EEC, the ACR mode indicated by the AC, and the EES receives, from the EEC, the ACR mode indicated by the AC and the ACR mode indicated by the EEC; for another example, the EES receives, from the EAS, the ACR mode indicated by the EAS), to determine the ACR mode for the application and/or determine the ACR scenario in the ACR mode based on the ACR mode indicated by each function entity. In addition, when the ACR mode or the ACR scenario in the ACR mode is determined, the ACR scenario supported by each function entity may be further considered, so that an appropriate ACR mode and/or an appropriate ACR scenario can be selected based on an actual situation. In this way, it can be ensured that ACR is triggered in a timely manner, and unnecessary repeated detection and a target EAS discovery procedure can be reduced.

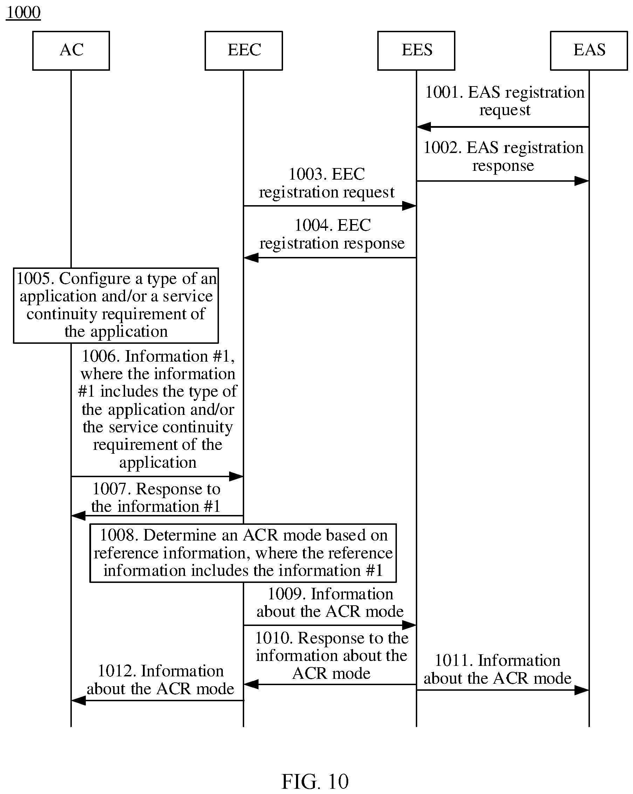

FIG. 10 is a schematic flowchart of a communication method 1000 according to an embodiment of this application. The method 1000 may be for implementing a solution (for example, the case 2) in the method 700. For example, the method 1000 may be used by an EEC to determine an ACR mode and/or an ACR scenario in the ACR mode that are/is used for an application based on a type of the application and/or a service continuity requirement of the application. As an example, the method 1000 may include the following steps.

1001. An EAS sends an EAS registration request to an EES.

1002. The EES sends an EAS registration response to the EAS.

Steps 1001 and 1002 are similar to steps 801 and 802. Details are not described herein again.

1003. An EEC sends an EEC registration request to the EES.

It may be understood that the EEC registration request in step 1003 is an example for description. This embodiment of this application is not limited thereto. For example, in step 1003, the EEC may send an EEC registration update request or an ACR mode subscription request to the EES.

1004. The EES sends an EEC registration response to the EEC.

The EEC registration response includes an ACR scenario supported by the EES. The ACR scenario supported by the EES may include one or more ACR scenarios. This is not limited. As an example, the EEC registration response may include EES service continuity support, that is, the EES service continuity support may indicate the ACR scenario supported by the EES.

Optionally, the EEC registration response includes an ACR scenario supported by the EAS. The ACR scenario supported by the EAS may include one or more ACR scenarios. This is not limited. As an example, the EEC registration response may include EAS service continuity support, that is, the EAS service continuity support may indicate the ACR scenario supported by the EAS.

It may be understood that, in steps 1003 and 1004, the ACR scenario supported by the EES and the ACR scenario supported by the EAS are notified to the EEC through an EEC registration procedure. This is not limited. For example, alternatively, the ACR scenarios supported by the EES and the ACR scenarios supported by the EAS may be notified to the EEC in an ACR mode information subscription procedure.

1005. An AC configures a type of an application and/or a service continuity requirement of the application.

1006. The AC sends information #1 to the EEC, where the information #1 includes the type of the application and/or the service continuity requirement of the application.

1007. The EEC sends a response to the information #1 to the AC.

Steps 1005 to 1007 are similar to steps 804 to 806. Details are not described herein again.

1008. The EEC determines an ACR mode for the application based on reference information, where the reference information includes the information #1.

The information #1 includes the type of the application and/or the service continuity requirement of the application.

Optionally, the EEC determines an ACR scenario supported by the EEC.

Optionally, the reference information further includes at least one of the following: the ACR scenario supported by the AC, the ACR scenario supported by the EEC, the ACR scenario supported by the EES, and the ACR scenario supported by the EAS.

For determining the ACR mode by the EEC based on the reference information, refer to the descriptions of determining the ACR mode by the EES based on the reference information in step 808. Details are not described herein again.

1009. The EEC sends information about the ACR mode to the EES.

For the information about the ACR mode, refer to the descriptions in step 809. Details are not described herein again.

The information about the ACR mode may be carried in a message exchanged between the EEC and the EES. This is not limited. As an example, the information about the ACR mode may be carried in any one of the following messages: an EEC registration request, an EEC registration update request, an EAS discovery request, an EAS discovery subscription request (EAS discovery subscription request), an EAS discovery subscription update request (EAS discovery subscription update request), and the like. Alternatively, if the EES subscribes to the information about the ACR mode from the EEC, after determining the ACR mode, the EEC may send the determined ACR mode to the EES by using an ACR mode information notification message.

1010. The EES sends a response to the information about the ACR mode to the EEC.

After receiving the information about the ACR mode, the EES returns the response to the EEC.

1011. The EES sends the information about the ACR mode to the EAS.

For step 1011, refer to the descriptions of step 809. Details are not described herein again.

1012. The EEC sends the information about the ACR mode to the AC.

For step 1012, refer to the descriptions of step 811. Details are not described herein again.

Based on the foregoing technical solution, the EEC may obtain the type of the application and/or the service continuity requirement of the application from the AC (for example, the AC sends the type of the application and/or the service continuity requirement of the application to the EEC), to determine the ACR mode for the application and/or determine the ACR scenario in the ACR mode based on the type of the application and/or the service continuity requirement of the application. In addition, when the ACR mode or the ACR scenario in the ACR mode is determined, the ACR scenario supported by each function entity may be further considered, so that an appropriate ACR mode and/or an appropriate ACR scenario can be selected based on an actual situation. In this way, it can be ensured that ACR is triggered in a timely manner, and unnecessary repeated detection and a target EAS discovery procedure can be reduced.

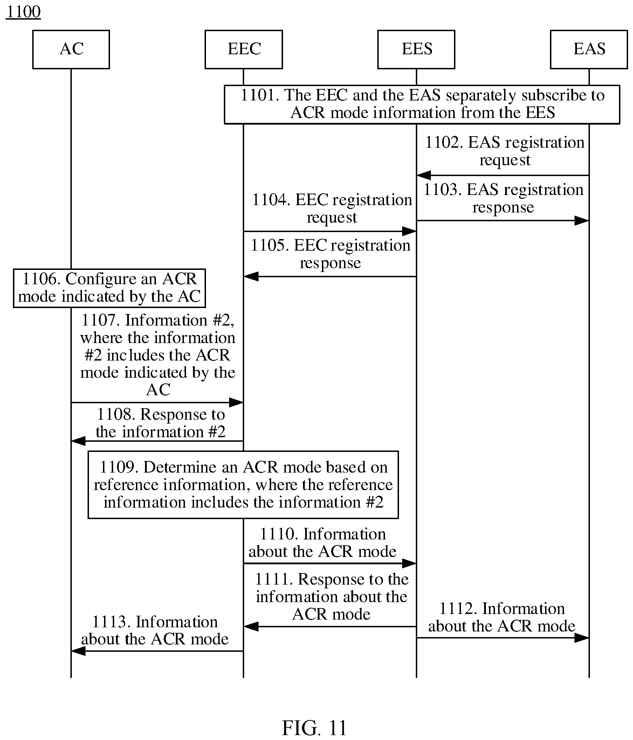

FIG. 11 is a schematic flowchart of a communication method 1100 according to an embodiment of this application. The method 1100 may be for implementing a solution (for example, the case 2) in the method 700. For example, the method 1100 may be used by an EEC to determine an ACR mode and/or an ACR scenario in the ACR mode that are/is used for an application based on an ACR mode indicated by each function entity. As an example, the method 1100 may include the following steps.

1101. An EEC and an EAS separately subscribe to ACR mode information from an EES.

1102. The EAS sends an EAS registration request to an EES.

1103. The EES sends an EAS registration response to the EAS.

Steps 1101 to 1103 are similar to steps 901 to 903. Details are not described herein again.

1104. The EEC sends an EEC registration request to the EES.

It may be understood that the EEC registration request in step 1104 is an example for description. This embodiment of this application is not limited thereto. For example, in step 1104, the EEC may send an EEC registration update request to the EES.

1105. The EES sends an EEC registration response to the EEC.

The EEC registration response includes an ACR mode indicated by the EES. As an example, the EEC registration response may include EES service continuity support, that is, the EES service continuity support may indicate the ACR mode indicated by the EES. Optionally, the EES service continuity support may further include the EAS.

Optionally, the EEC registration response may further include an ACR scenario supported by the EES. For example, the EES service continuity support may further include the ACR scenario supported by the EES.

Optionally, the EEC registration response includes an ACR mode indicated by the EAS and/or an ACR scenario supported by the EAS. The ACR scenario supported by the EAS may include one or more ACR scenarios. This is not limited.

It may be understood that, in steps 1104 and 1105, at least one of the ACR mode indicated by the EAS, the ACR scenario supported by the EAS, the ACR mode indicated by the EES, or the ACR scenario supported by the EES is notified to the EEC through an EEC registration procedure. This is not limited. For example, alternatively, at least one of the ACR mode indicated by the EAS, the ACR scenario supported by the EAS, the ACR mode indicated by the EES, or the ACR scenario supported by the EES may be notified to the EEC in an ACR mode information subscription procedure.

1106. An AC configures an ACR mode indicated by the AC.

1107. The AC sends information #2 to the EEC, where the information #2 includes the ACR mode indicated by the AC.

1108. The EEC sends a response to the information #2 to the AC.

Steps 1106 to 1108 are similar to steps 904 to 906. Details are not described herein again.

1109. The EEC determines an ACR mode for the application based on reference information, where the reference information includes the information #2.

The information #2 includes the ACR mode indicated by the AC.

Optionally, the EEC determines an ACR scenario supported by the EEC and/or an ACR mode indicated (or preferred) by the EEC.

Optionally, the reference information further includes at least one of the following: the ACR scenario supported by the AC, the ACR scenario supported by the EEC, the ACR scenario supported by the EES, the ACR scenario supported by the EAS, the ACR mode indicated by the EEC, the ACR mode indicated by the EES, and the ACR mode indicated by the EAS.

For determining the ACR mode by the EEC based on the reference information, refer to the descriptions of determining the ACR mode by the EES based on the reference information in step 908. Details are not described herein again.

1110. The EEC sends the information about the ACR mode to the EES.

1111. The EES sends a response to the information about the ACR mode to the EEC.

1112. The EES sends the information about the ACR mode to the EAS.

1113. The EEC sends the information about the ACR mode to the AC.

Steps 1110 to 1113 are similar to steps 1009 to 1012. Details are not described herein again.

Based on the foregoing technical solution, the EEC may obtain an ACR mode indicated by each function entity (for example, the AC sends, to the EEC, the ACR mode indicated by the AC, and the EEC receives, from the EES, the ACR mode indicated by the EES and the ACR mode indicated by the EAS), to determine the ACR mode for the application and/or determine the ACR scenario in the ACR mode based on the ACR mode indicated by each function entity. In addition, when the ACR mode or the ACR scenario in the ACR mode is determined, the ACR scenario supported by each function entity may be further considered, so that an appropriate ACR mode and/or an appropriate ACR scenario can be selected based on an actual situation. In this way, it can be ensured that ACR is triggered in a timely manner, and unnecessary repeated detection and a target EAS discovery procedure can be reduced.

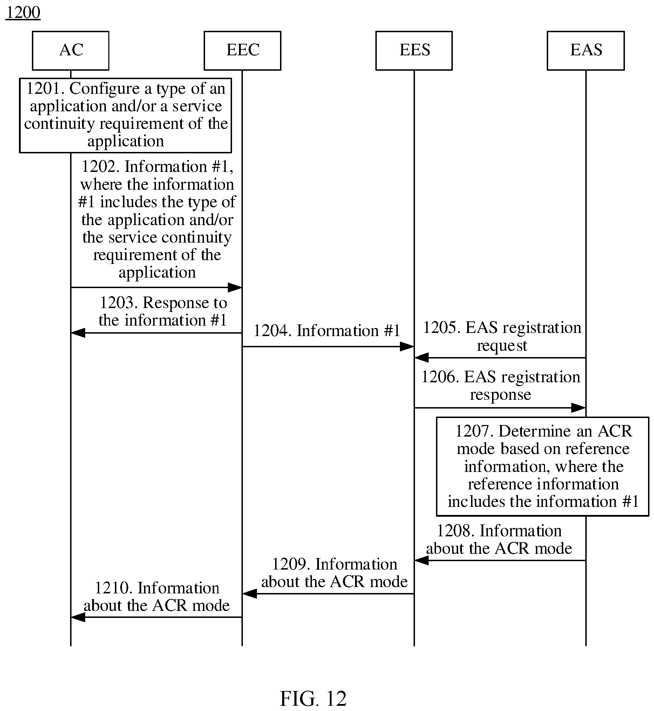

FIG. 12 is a schematic flowchart of a communication method 1200 according to an embodiment of this application. The method 1200 may be for implementing a solution (for example, the case 3) in the method 700. For example, the method 1200 may be used by an EAS to determine an ACR mode and/or an ACR scenario in the ACR mode that are/is used for an application based on a type of the application and/or a service continuity requirement of the application. As an example, the method 1200 may include the following steps.

1201. An AC configures a type of an application and/or a service continuity requirement of the application.

1202. The AC sends information #1 to an EEC, where the information #1 includes the type of the application and/or the service continuity requirement of the application.

1203. The EEC sends a response to the information #1 to the AC.

Steps 1201 to 1203 are similar to steps 804 to 806. For specific descriptions, refer to the descriptions of steps 804 to 806. Details are not described herein again.

1204. The EEC sends the information #1 to an EES.

Optionally, the EEC further sends an ACR scenario supported by the EEC to the EES.

Step 1204 is similar to step 807. Details are not described herein again.

1205. The EAS sends an EAS registration request to the EES.

It may be understood that the EAS registration request in step 1205 is an example for description. This embodiment of this application is not limited thereto. For example, in step 1205, the EAS may send an EAS registration update request or an ACR mode subscription request to the EES.

1206. The EES sends an EAS registration response to the EAS.

The EAS registration response includes the information #1. Optionally, the EAS registration response further includes at least one of the following: an ACR scenario supported by the AC, the ACR scenario supported by the EEC, and an ACR scenario supported by the EES.

It may be understood that, in steps 1205 and 1206, the foregoing information is notified to the EAS through an EAS registration process. This is not limited. For example, the foregoing information may alternatively be notified to the EAS in an ACR mode subscription procedure.

1207. The EAS determines an ACR mode for the application based on reference information, where the reference information includes the information #1.

The information #1 includes the type of the application and/or the service continuity requirement of the application. The ACR mode is a single-ACR mode or a multi-ACR mode.

Optionally, the EAS determines an ACR scenario supported by the EAS.

Optionally, the reference information further includes at least one of the following: the ACR scenario supported by the AC, the ACR scenario supported by the EEC, the ACR scenario supported by the EES, and the ACR scenario supported by the EAS.

For determining the ACR mode by the EAS based on the reference information, refer to the descriptions of determining the ACR mode by the EES based on the reference information in step 808. Details are not described herein again.

1208. The EAS sends information about the ACR mode to the EES.

For step 1208, refer to the descriptions of step 809. A difference lies in that in step 809, the EES sends the information about the ACR mode to the EAS, and in step 1208, the EAS sends the information about the ACR mode to the EES. Details are not described herein again.

1209. The EES sends the information about the ACR mode to the EEC.

1210. The EEC sends the information about the ACR mode to the AC.

For steps 1209 and 1210, refer to steps 810 and 811. Details are not described herein again.

Based on the foregoing technical solution, the EAS may obtain the type of the application and/or the service continuity requirement of the application from the AC (for example, the AC sends the type of the application and/or the service continuity requirement of the application to the EEC, and the EES receives the type of the application and/or the service continuity requirement of the application from the EEC, and sends the type of the application and/or the service continuity requirement of the application to the EAS), to determine the ACR mode for the application and/or determine the ACR scenario in the ACR mode based on the type of the application and/or the service continuity requirement of the application. In addition, when the ACR mode or the ACR scenario in the ACR mode is determined, the ACR scenario supported by each function entity may be further considered, so that an appropriate ACR mode and/or an appropriate ACR scenario can be selected based on an actual situation. In this way, it can be ensured that ACR is triggered in a timely manner, and unnecessary repeated detection and a target EAS discovery procedure can be reduced.

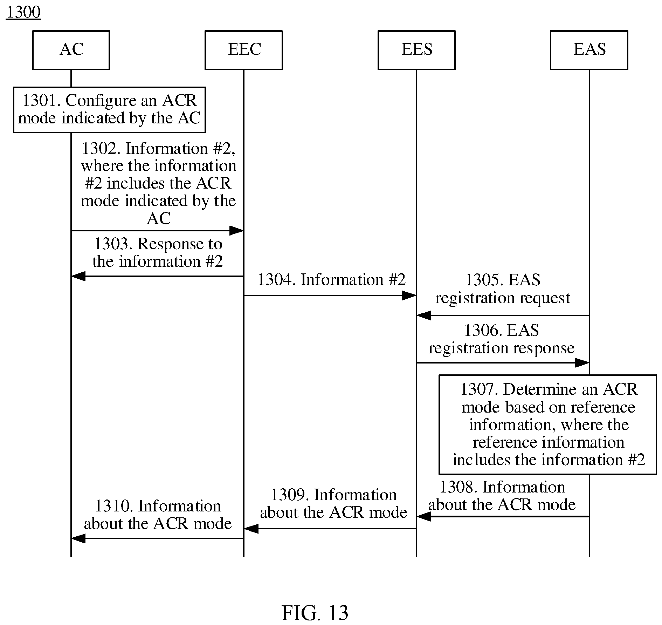

FIG. 13 is a schematic flowchart of a communication method 1300 according to an embodiment of this application. The method 1300 may be for implementing a solution (for example, the case 3) in the method 700. For example, the method 1300 may be used by an EAS to determine an ACR mode and/or an ACR scenario in the ACR mode that are/is used for an application based on an ACR mode indicated by each function entity. As an example, the method 1300 may include the following steps.

1301. An AC configures an ACR mode indicated by the AC.

1302. The AC sends information #2 to an EEC, where the information #2 includes the ACR mode indicated by the AC.

1303. The EEC sends a response to the information #2 to the AC.

Steps 1301 to 1303 are similar to steps 904 to 906. For specific descriptions, refer to the descriptions of steps 904 to 906. Details are not described herein again.

1304. The EEC sends the information #2 to an EES.

Optionally, the EEC further sends, to the EES, an ACR scenario supported by the EEC and/or an ACR mode indicated by the EEC.

Step 1304 is similar to step 907. Details are not described herein again.

1305. An EAS sends an EAS registration request to the EES.

It may be understood that the EAS registration request in step 1305 is an example for description. This embodiment of this application is not limited thereto. For example, in step 1305, the EAS may send an EAS registration update request or an ACR mode information subscription request to the EES.

1306. The EES sends an EAS registration response to the EAS.

The EAS registration response includes the information #2. Optionally, the EAS registration response further includes at least one of the following: an ACR scenario supported by the AC, the ACR scenario supported by the EEC, an ACR scenario supported by the EES, the ACR mode indicated by the EEC, an ACR mode indicated by the EES, a type of an application, or a service continuity requirement of the application.

It may be understood that, in steps 1305 and 1306, the foregoing information is notified to the EAS through an EAS registration process. This is not limited. For example, the foregoing information may alternatively be notified to the EAS in an ACR mode subscription procedure.

1307. The EAS determines an ACR mode for the application based on reference information, where the reference information includes the information #2.

The information #2 includes the ACR mode indicated by the AC.

Optionally, the EAS determines an ACR scenario supported by the EAS and/or an ACR mode indicated by the EAS.

Optionally, the reference information further includes at least one of the following: the ACR scenario supported by the AC, the ACR scenario supported by the EEC, the ACR scenario supported by the EES, the ACR scenario supported by the EAS, the ACR mode indicated by the EEC, the ACR mode indicated by the EES, the ACR mode indicated by the EAS, the type of the application, or the service continuity requirement of the application.

For determining the ACR mode by the EAS based on the reference information, refer to the descriptions of determining the ACR mode by the EES based on the reference information in step 908. Details are not described herein again.

1308. The EAS sends information about the ACR mode to the EES.

For step 1308, refer to the descriptions of step 809. A difference lies in that in step 809, the EES sends the information about the ACR mode to the EAS, and in step 1308, the EAS sends the information about the ACR mode to the EES. Details are not described herein again.

1309. The EES sends the information about the ACR mode to the EEC.

1310. The EEC sends the information about the ACR mode to the AC.

For steps 1309 and 1310, refer to steps 810 and 811. Details are not described herein again.

Based on the foregoing technical solution, the EAS may obtain an ACR mode indicated by each function entity (for example, the AC sends, to the EEC, the ACR mode indicated by the AC, the EES receives the ACR mode indicated by the AC and the ACR mode indicated by the EEC from the EEC, and the EES sends, to the EAS, the ACR mode indicated by the AC, the ACR mode indicated by the EEC, and the ACR mode indicated by the EES), to determine the ACR mode for the application and/or determine the ACR scenario in the ACR mode based on the ACR mode indicated by each function entity. In addition, when the ACR mode or the ACR scenario in the ACR mode is determined, the ACR scenario supported by each function entity may be further considered, so that an appropriate ACR mode and/or an appropriate ACR scenario can be selected based on an actual situation. In this way, it can be ensured that ACR is triggered in a timely manner, and unnecessary repeated detection and a target EAS discovery procedure can be reduced.

It may be understood that FIG. 8 to FIG. 13 are examples for description, and embodiments of this application are not limited thereto. For example, the AC may also make a decision. For example, the AC may select (or determine) the ACR mode and/or the ACR scenario in the ACR mode; and the AC notifies each function entity (such as the EEC, the EES, and the EAS) of the ACR mode and/or the ACR scenario in the ACR mode. For example, the AC may select, based on the ACR mode and/or the ACR scenario in the ACR mode, a function entity (such as the EEC, the EES, and the EAS) that supports the ACR mode and/or the ACR scenario in the ACR mode, and the AC notifies the function entity (such as the EEC, the EES, and the EAS) of the ACR mode and/or the ACR scenario in the ACR mode. For the ACR mode and/or the ACR scenario in the ACR mode selected by the AC, refer to related descriptions of the ACR mode and/or the ACR scenario in the ACR mode indicated by the AC. Details are not described herein again.

FIG. 14 is a schematic diagram of subscribing to an ACR mode according to an embodiment of this application. The following method for subscribing to an ACR mode may be applicable to embodiments shown in FIG. 7 to FIG. 13.

(a) in FIG. 14 is a schematic diagram of subscribing to an ACR mode by an EAS. The subscribing to the ACR mode by the EAS may include steps 1401a and 1402a.

1401a. The EAS sends an ACR mode information subscription request to an EES.

In this step, the EAS may subscribe to ACR mode information from the EES. For example, the EAS sends the ACR mode information subscription request to the EES, where the ACR mode information subscription request is for subscribing to the ACR mode information. The ACR mode information includes a single-ACR mode or a multi-ACR mode.

Optionally, the ACR mode information subscription request includes reference information, where the reference information includes at least one of the following: an ACR mode indicated by the EAS and an ACR scenario indicated by the EAS.

It may be understood that the foregoing is an example for description, and this embodiment of this application is not limited thereto. For example, the EAS subscribes to ACR scenario information from the EES, and implicitly indicates the EES or an EEC to select an ACR mode for the EAS. For another example, the ACR mode information subscription request includes indication information, where the indication information indicates the EES or an EEC to determine an ACR mode for the EAS.

In a possible implementation, the EES determines the ACR mode information. Based on this implementation, after receiving the ACR mode information subscription request of the EAS, the EES may determine the ACR mode for the EAS based on the ACR mode information subscription request of the EAS.

In another possible implementation, the EEC determines the ACR mode information. Based on this implementation, after receiving the ACR mode information subscription request of the EAS, the EES may send the ACR mode information subscription request of the EAS to the EEC, and the EEC determines the ACR mode information for the EAS based on the ACR mode information subscription request of the EAS.

1402a. The EES sends an ACR mode information subscription response to the EAS.

After the EES receives the ACR mode information subscription request of the EAS, the EES determines the ACR mode information of the EAS or the EES receives the ACR mode information of the EAS from the EEC, and the EES sends the ACR mode information subscription response to the EAS. The response may include a subscription result, for example, a subscription success or a subscription failure. Optionally, the ACR mode information subscription response may further include information such as the ACR mode information and a subscription ID.

(b) in FIG. 14 is a schematic diagram of subscribing to an ACR mode by an AC. The subscribing to the ACR mode by the AC may include steps 1401b and 1402b.

1401b. The AC sends an ACR mode information subscription request to an EEC.

In this step, the AC subscribes to ACR mode information from the EEC. For example, the AC sends the ACR mode information subscription request to the EEC, where the ACR mode information subscription request is for subscribing to the ACR mode information. The ACR mode information includes a single-ACR mode or a multi-ACR mode.

Optionally, the ACR mode information subscription request includes reference information, where the reference information includes at least one of the following: an ACR mode indicated by the AC and an ACR scenario indicated by the AC.

It may be understood that the foregoing is an example for description, and this embodiment of this application is not limited thereto. For example, the AC subscribes to ACR scenario information from the EEC, and implicitly indicates an EES or an EEC to select an ACR mode for the AC. For another example, the ACR mode information subscription request includes indication information, where the indication information indicates the EES or the EEC to determine an ACR mode for the AC.

In a possible implementation, the EEC determines the ACR mode information. Based on this implementation, after receiving the ACR mode information subscription request of the AC, the EEC may determine the ACR mode for the AC based on the ACR mode information subscription request of the AC.

In another possible implementation, the EES determines the ACR mode information. Based on this implementation, after receiving the ACR mode information subscription request of the AC, the EEC may send the ACR mode information subscription request of the AC to the EES, and the EES determines the ACR mode for the AC based on the ACR mode information subscription request of the AC.

1402b. The EEC sends an ACR mode information subscription response to the AC.

After the EEC receives the ACR mode information subscription request of the AC, the EEC determines the ACR mode information of the AC or the EEC receives the ACR mode information of the AC from the EES, and the EEC sends the ACR mode information subscription response to the AC. The response may include a subscription result, for example, a subscription success or a subscription failure. Optionally, the ACR mode information subscription response may further include information such as the ACR mode information and a subscription ID.

(c) in FIG. 14 is a schematic diagram of subscribing to an ACR mode by an EEC. The subscribing to the ACR mode by the EEC may include steps 1401c and 1402c.

1401c. The EEC sends an ACR mode information subscription request to an EES.

In this step, the EEC may subscribe to ACR mode information from the EES. For example, the EEC sends the ACR mode information subscription request to the EES, where the ACR mode information subscription request is for subscribing to the ACR mode information. The ACR mode information includes a single-ACR mode or a multi-ACR mode. Optionally, the ACR mode information subscription request includes reference information, where the reference information includes at least one of the following: an ACR mode indicated by the EEC and an ACR scenario indicated by the EEC.

It may be understood that the foregoing is an example for description, and this embodiment of this application is not limited thereto. For example, the EEC subscribes to ACR scenario information from the EES, and implicitly indicates the EES to select an ACR mode for the EAS. For another example, the ACR mode information subscription request includes indication information, where the indication information indicates the EES to determine an ACR mode for the EAS.

Optionally, before step 1401c, the method further includes: The EEC receives the ACR mode information subscription request from an AC. In this case, when sending the ACR mode information subscription request to the EES, the EEC may further subscribe to the ACR mode information for the AC. Specifically, refer to the solution in which the AC subscribes to the ACR mode. Details are not described herein again.

1402c. The EES sends an ACR mode information subscription response to the EEC.

Optionally, the EEC may further notify the AC of the ACR mode information subscription response.

It may be understood that the examples in FIG. 8 to FIG. 14 in embodiments of this application are merely intended to help a person skilled in the art understand embodiments of this application, and are not intended to limit embodiments of this application to a specific scenario shown in the examples. A person skilled in the art may apparently make various equivalent modifications or changes based on the examples shown in FIG. 8 to FIG. 14, and such modifications or changes also fall within the scope of embodiments of this application. For example, an ACR scenario supported by a function entity (such as the EEC, the AC, the EES, or the EAS) in the method 800 or the method 1000 may be replaced with an ACR scenario indicated by the function entity. For the ACR scenario indicated by the function entity, refer to the descriptions in the method 700. Details are not described herein again.

It may be further understood that, in some of the foregoing embodiments, examples in which the function entities are the EEC, the EES, the EAS, and the AC are mainly used for description. It may be understood that embodiments of this application are not limited thereto. For example, the function entity may also be another function entity in an edge data network.

It may be further understood that, in some of the foregoing embodiments, a message name is merely an example, and does not constitute a limitation on the protection scope of embodiments of this application. For example, a query message may also be replaced with a request message.

It may be further understood that, in some of the foregoing embodiments, message sending is mentioned for a plurality of times. For example, A sends a message to B. That A sends a message to B may include that A directly sends a message to B, or may include that A sends a message to B via another device or network element. This is not limited.

It may be further understood that, in some of the foregoing embodiments, the reference information (or the ACR mode determined based on the reference information, or the ACR scenario in the ACR mode determined based on the reference information) may be transmitted by using the registration procedure, may be transmitted by using the ACR mode subscription procedure, or may be transmitted by using another message exchanged between two devices. This is not limited.

It may be further understood that, in embodiments of this application, the determining the ACR mode by the first device is mentioned for a plurality of times. It may be understood that determining an ACR mode by the first device may be replaced with determining an ACR scenario by the first device, or determining an ACR scenario in an ACR mode by the first device.

It may be further understood that, in some of the foregoing embodiments, that A sends a message to C by using B is mentioned for a plurality of times. "The EES sends the ACR mode determined for the application to the AC via the EEC" is used as an example. It may indicate (or may be understood as): The EES sends the ACR mode determined for the application to the EEC, and the EEC directly forwards the ACR mode to the AC. Alternatively, it may indicate: The EES sends the ACR mode determined for the application to the EEC, and the EEC forwards the ACR mode to the AC when determining (or determining) that the AC needs the ACR mode.

It may be further understood that some optional features in embodiments of this application may not depend on another feature in some scenarios, or may be combined with another feature in some scenarios. This is not limited.

It may be further understood that the solutions in embodiments of this application may be properly combined for use, and explanations or descriptions of terms in embodiments may be mutually referenced or explained in embodiments. This is not limited.

It may be further understood that values of various numeric sequence numbers in embodiments of this application do not mean execution sequences, are merely for differentiation for ease of description, and should not constitute any limitation on an implementation process of embodiments of this application.

It may be further understood that, in the foregoing method embodiments, methods and operations implemented by a device may also be implemented by a component (for example, a chip or a circuit) of the device.

Corresponding to the methods provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

FIG. 15 is a schematic diagram of a communication apparatus 1500 according to an embodiment of this application. The apparatus 1500 includes a transceiver unit 1510 and a processing unit 1520. The transceiver unit 1510 may be configured to implement a corresponding communication function. The transceiver unit 1510 may also be referred to as a communication interface or a communication unit. The processing unit 1520 may be configured to implement a corresponding processing function, for example, determining an ACR mode.

Optionally, the apparatus 1500 further includes a storage unit. The storage unit may be configured to store instructions and/or data. The processing unit 1520 may read the instructions and/or the data in the storage unit, so that the apparatus implements actions of a device or a network element in the foregoing method embodiments.

In a first design, the apparatus 1500 may be the first device (for example, the first device in FIG. 7, the EES in FIG. 8 or FIG. 9, the EEC in FIG. 10 or FIG. 11, or the EAS in FIG. 12 or FIG. 13) in the foregoing embodiments, or may be a component (for example, a chip) of the first device. The apparatus 1500 may implement steps or procedures performed by the first device in the foregoing method embodiments. The transceiver unit 1510 may be configured to perform receiving and sending related operations of the first device in the foregoing method embodiments. The processing unit 1520 may be configured to perform processing related operations of the first device in the foregoing method embodiments.

In a possible implementation, the transceiver unit 1510 is configured to obtain reference information, where the reference information includes at least one of the following: a type of an application, a service continuity requirement of the application, an application context relocation ACR mode indicated by a client, an ACR mode indicated by a server, an ACR scenario indicated by the client, and an ACR scenario indicated by the server. The processing unit 1520 is configured to determine a first ACR mode for the application based on the reference information, where the first ACR mode is a single-ACR mode or a multi-ACR mode.

Optionally, the first ACR mode is the multi-ACR mode, and the processing unit 1520 is further configured to determine at least two ACR scenarios in the multi-ACR mode for the application based on the reference information. Alternatively, the first ACR mode is the single-ACR mode, and the processing unit 1520 is further configured to determine one ACR scenario in the single-ACR mode for the application based on the reference information.

Optionally, the processing unit 1520 is further configured to determine at least two ACR scenarios in the multi-ACR mode for the application based on the reference information. The transceiver unit 1510 is further configured to send the at least two ACR scenarios.

Optionally, the processing unit 1520 is further configured to determine one ACR scenario in the single-ACR mode for the application based on the reference information. The transceiver unit 1510 is further configured to send the ACR scenario.

Optionally, the transceiver unit 1510 is further configured to send the first ACR mode.

For example, the ACR scenario indicated by the client includes at least one of the following: an ACR scenario supported by the client, an ACR scenario determined based on the ACR scenario supported by the client, and an ACR scenario determined based on the type of the application and/or the service continuity requirement of the application; and/or the ACR scenario indicated by the server includes at least one of the following: an ACR scenario supported by the server, an ACR scenario determined based on the ACR scenario supported by the server, and an ACR scenario determined based on the type of the application and/or the service continuity requirement of the application.

For example, the first device is an edge enabler server EES.

Optionally, the transceiver unit 1510 is specifically configured to: receive at least one of the following from an edge enabler client EEC: the type of the application, the service continuity requirement of the application, the ACR mode indicated by the client, or the ACR scenario indicated by the client, where the client is the EEC and/or an application client AC; and/or receive the ACR scenario indicated by the server and/or the ACR mode indicated by the server from an edge application server EAS, where the server is the EAS.

Optionally, the processing unit 1520 is further configured to configure the ACR scenario indicated by the server and/or the ACR mode indicated by the server, where the server is the EES.

Optionally, the transceiver unit 1510 is further configured to perform at least one of the following: sending the first ACR mode to the EAS and/or the EEC; sending the first ACR mode to the AC via the EEC; sending the at least two ACR scenarios in the multi-ACR mode to the EAS and/or the EEC, or sending, by the EES, the one ACR scenario in the single-ACR mode to the EAS and/or the EEC; or sending the at least two ACR scenarios in the multi-ACR mode to the AC via the EEC, or sending, by the EES, the one ACR scenario in the single-ACR mode to the AC via the EEC.

For example, the first device is an edge enabler client EEC.

Optionally, the transceiver unit 1510 is specifically configured to: receive the ACR mode indicated by the server and/or the ACR scenario indicated by the server from an edge enabler server EES, where the server is the EES and/or an edge application server EAS; and/or receive at least one of the following from an application client AC: the type of the application, the service continuity requirement of the application, the ACR mode indicated by the client, or the ACR scenario indicated by the client, where the client is the AC.

Optionally, the processing unit 1520 is further configured to configure the ACR scenario indicated by the client and/or the ACR mode indicated by the server, where the client is the EEC.

Optionally, the transceiver unit 1510 is further configured to perform at least one of the following: sending the first ACR mode to the EES and/or the AC; sending, by the EEC, the first ACR mode to the EAS via the EES; the EEC sends the at least two ACR scenarios in the multi-ACR mode to the EES and/or the AC, or the EEC sends the one ACR scenario in the single-ACR mode to the EES and/or the AC; or the EEC sends the at least two ACR scenarios in the multi-ACR mode to the EAS via the EES, or the EEC sends the one ACR scenario in the single-ACR mode to the EAS via the EES.

For example, the first device is an edge application server EAS.

Optionally, the transceiver unit 1510 is specifically configured to receive at least one of the following from an edge enabler server EES: the type of the application, the service continuity requirement of the application, the ACR mode indicated by the client, the ACR mode indicated by the server, the ACR scenario indicated by the client, and the ACR scenario indicated by the server, where the client is an application client AC and/or an edge enabler client ECS, and the server is the EES.

Optionally, the processing unit 1520 is further configured to configure the ACR mode indicated by the server and/or the ACR scenario indicated by the server, where the server is the EAS.

Optionally, the transceiver unit 1510 is further configured to perform at least one of the following: sending the first ACR mode to the EES; sending, by the EAS, the first ACR mode to the EEC via the EES; sending the first ACR mode to the AC via the EES and the EEC; sending the at least two ACR scenarios in the multi-ACR mode to the EES, or sending the one ACR scenario in the single-ACR mode to the EES; sending the at least two ACR scenarios in the multi-ACR mode to the EEC via the EES, or sending the one ACR scenario in the single-ACR mode to the EEC via the EES; or sending the at least two ACR scenarios in the multi-ACR mode to the AC via the EES and the EEC, or sending the one ACR scenario in the single-ACR mode to the AC via the EES and the EEC.

In a second design, the apparatus 1500 may be the second device (for example, the second device in FIG. 7, and at least one of the following in FIG. 8 or FIG. 9: the AC, the EEC, and the EAS; at least one of the following in FIG. 10 or FIG. 11: the AC, the EES, and the EAS; at least one of the following in FIG. 12 or FIG. 13: the AC, the EEC, and the EES) in the foregoing embodiments, or may be a component (for example, a chip) of the second device. The apparatus 1500 may implement steps or procedures performed by the second device in the foregoing method embodiments. The transceiver unit 1510 may be configured to perform receiving and sending related operations of the second device in the foregoing method embodiments. The processing unit 1520 may be configured to perform processing related operations of the second device in the foregoing method embodiments.

In a possible implementation, the transceiver unit 1510 is configured to obtain reference information, where the reference information includes at least one of the following: a type of an application, a service continuity requirement of the application, an application context relocation ACR mode indicated by a client, an ACR mode indicated by a server, an ACR scenario indicated by the client, and an ACR scenario indicated by the server. The transceiver unit 1510 is further configured to send the reference information. Optionally, the transceiver unit 1510 is further configured to receive a first ACR mode from a first device, where the first ACR mode is determined based on the reference information, and the first ACR mode is a single-ACR mode or a multi-ACR mode.

Optionally, the first ACR mode is the multi-ACR mode, and the transceiver unit 1510 is further configured to receive at least two ACR scenarios in the multi-ACR mode from the first device; or the first ACR mode is the single-ACR mode, and the transceiver unit 1510 is further configured to receive one ACR scenario in the single-ACR mode from the first device.

For example, the ACR scenario indicated by the client includes at least one of the following: an ACR scenario supported by the client, an ACR scenario determined based on the ACR scenario supported by the client, and an ACR scenario determined based on the type of the application and/or the service continuity requirement of the application; and/or the ACR scenario indicated by the server includes at least one of the following: an ACR scenario supported by the server, an ACR scenario determined based on the ACR scenario supported by the server, and an ACR scenario determined based on the type of the application and/or the service continuity requirement of the application.

For example, the second device is an application client AC.

Optionally, the processing unit 1520 is configured to configure at least one of the following: the type of the application, the service continuity requirement of the application, the ACR mode indicated by the client, or the ACR scenario indicated by the client, where the client is the AC.

Optionally, the first device is any one of the following: an edge enabler client EEC, an edge enabler server EES, or an edge application server EAS. The transceiver unit 1510 is specifically configured to: when the first device is the EEC, send the reference information to the EEC; or when the first device is the EES, send the reference information to the EES via the EEC; or when the first device is the EAS, send the reference information to the EAS via the EEC and the EES.

Optionally, the first device is any one of the following: an edge enabler client EEC, an edge enabler server EES, or an edge application server EAS. The transceiver unit 1510 is specifically configured to: when the first device is the EEC, receive the first ACR mode from the EEC; when the first device is the EES, receive the first ACR mode from the EES via the EEC; or when the first device is the EAS, receive the first ACR mode from the EAS via the EEC and the EES.

For example, the second device is an edge enabler client EEC.

Optionally, the processing unit 1520 is configured to configure the ACR mode indicated by the client and/or the ACR scenario indicated by the client, where the client is the EEC; and/or the transceiver unit 1510 is further configured to receive at least one of the following from an application client AC: the type of the application, the service continuity requirement of the application, the ACR mode indicated by the client, or the ACR scenario indicated by the client, where the client is the AC.

Optionally, the first device is an edge enabler server EES or an edge application server EAS. The transceiver unit 1510 is specifically configured to: when the first device is the EES, send the reference information to the EES; or when the first device is the EAS, send the reference information to the EAS via the EES.

Optionally, the first device is an edge enabler server EES or an edge application server EAS. The transceiver unit 1510 is specifically configured to: when the first device is the EES, receive the reference information from the EES; or when the first device is the EAS, receive the reference information from the EAS via the EES.

Optionally, the transceiver unit 1510 is further configured to send the first ACR mode to the AC.

For example, the second device is an edge application server EAS.

Optionally, the processing unit 1520 is configured to configure the ACR mode indicated by the server and/or the ACR scenario indicated by the server, where the server is the EAS.

Optionally, the first device is an edge enabler server EES or an edge enabler client EEC. The transceiver unit 1510 is specifically configured to: when the first device is the EES, send the reference information to the EES; or when the first device is the EEC, send the reference information to the EEC via the EES.

Optionally, the first device is an edge enabler server EES or an edge enabler client EEC. The transceiver unit 1510 is specifically configured to: when the first device is the EES, receive the reference information from the EES; or when the first device is the EEC, receive the reference information from the EEC via the EES.

For example, the second device is an edge enabler server EES.

Optionally, the processing unit 1520 is configured to configure the ACR mode indicated by the server and/or the ACR scenario indicated by the server, where the server is the EES.

Optionally, the transceiver unit 1510 is specifically configured to: receive the ACR mode indicated by the server and/or the ACR scenario indicated by the server from an edge application server EAS, where the server is the EAS; and/or receive at least one of the following from an edge enabler client EEC: the type of the application, the service continuity requirement of the application, the ACR mode indicated by the client, or the ACR scenario indicated by the client, where the client is the EEC and/or an application client AC.

Optionally, the transceiver unit 1510 is specifically configured to send, by the EES, the reference information to the EEC or the EAS.

Optionally, the first device is an edge enabler client EEC or an edge application server EAS. The transceiver unit 1510 is specifically configured to: when the first device is the EEC, after receiving the first ACR mode from the EEC, send the first ACR mode to the EAS; or when the first device is the EAS, after receiving the first ACR mode from the EAS, send the first ACR mode to the EEC, and/or send the first ACR mode to an AC via the EEC.

It should be understood that a specific process in which the units perform the foregoing corresponding steps is described in detail in the foregoing method embodiments. For brevity, details are not described herein.

It should be understood that the apparatus 1500 herein is embodied in a form of a function unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1500 may be specifically the first device in the foregoing embodiments, and may be configured to perform procedures and/or steps corresponding to the first device in the foregoing method embodiments. Alternatively, the apparatus 1500 may be specifically the second device in the foregoing embodiments, and may be configured to perform procedures and/or steps corresponding to the second device in the foregoing method embodiments. To avoid repetition, details are not described herein again.

The apparatus 1500 in each of the foregoing solutions has a function of implementing corresponding steps performed by a device (for example, the first device or the second device) in the foregoing methods. The function may be implemented by hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit such as a processing unit may be replaced with a processor, to separately perform sending and receiving operations and a related processing operation in the method embodiments.

In addition, the transceiver unit 1510 may alternatively be a transceiver circuit (for example, the transceiver circuit may include a receiver circuit and a transmitter circuit), and the processing unit may be a processing circuit.

It should be noted that the apparatus in FIG. 15 may be a network element or a device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

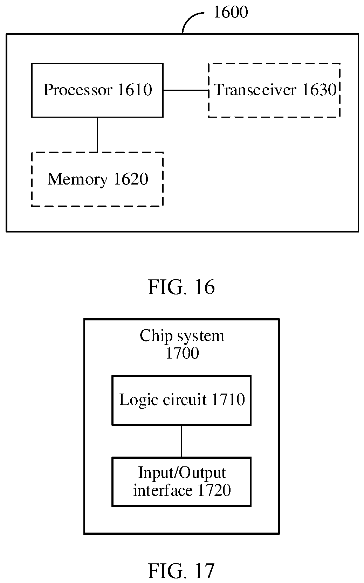

FIG. 16 is a schematic diagram of another communication apparatus 1600 according to an embodiment of this application. The apparatus 1600 includes a processor 1610. The processor 1610 is configured to: execute a computer program or instructions stored in a memory 1620, or read data/signaling stored in the memory 1620, to perform the methods in the foregoing method embodiments. Optionally, there are one or more processors 1610.

Optionally, as shown in FIG. 16, the apparatus 1600 further includes the memory 1620, and the memory 1620 is configured to store a computer program or instructions and/or data. The memory 1620 and the processor 1610 may be integrated together, or may be disposed separately. Optionally, there are one or more memories 1620.

Optionally, as shown in FIG. 16, the apparatus 1600 further includes a transceiver 1630. The transceiver 1630 is configured to receive and/or send a signal. For example, the processor 1610 is configured to control the transceiver 1630 to receive and/or send signals.

In a solution, the apparatus 1600 is configured to implement operations performed by the first device in the foregoing method embodiments.

For example, the processor 1610 is configured to execute the computer program or the instructions stored in the memory 1620, to implement related operations of the first device in the foregoing method embodiments, for example, the method performed by the first device in a home network in the embodiment shown in FIG. 7, the method performed by the EES in either of the embodiments shown in FIG. 8 and FIG. 9, the method performed by the EEC in either of the embodiments shown in FIG. 10 and FIG. 11, or the method performed by the EAS in either of the embodiments shown in FIG. 12 and FIG. 13.

In another solution, the apparatus 1600 is configured to implement operations performed by the second device in the foregoing method embodiments.

For example, the processor 1610 is configured to execute the computer program or the instructions stored in the memory 1620, to implement related operations of the first device in the foregoing method embodiments, for example, the method performed by the second device in a home network in the embodiment shown in FIG. 7, the method performed by the EEC and the EAS in either of the embodiments shown in FIG. 8 and FIG. 9, the method performed by the EES and the AC in either of the embodiments shown in FIG. 10 and FIG. 11, or the method performed by the EES, the EEC, and the AC in either of the embodiments shown in FIG. 12 and FIG. 13.

It should be understood that, the processor in this embodiment of this application may be a central processing unit (central processing unit, CPU), or may further be another general-purpose processor, a digital signal processor (digital signal processor, DSP), an application-specific integrated circuit (application specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

FIG. 17 is a schematic diagram of a chip system 1700 according to an embodiment of this application. The chip system 1700 (or may be referred to as a processing system) includes a logic circuit 1710 and an input/output interface (input/output interface) 1720.

The logic circuit 1710 may be a processing circuit in the chip system 1700. The logic circuit 1710 may be coupled to a storage unit, to invoke instructions in the storage unit, so that the chip system 1700 can implement the methods and functions in embodiments of this application. The input/output interface 1720 may be an input/output circuit in the chip system 1700, and outputs information processed by the chip system 1700, or inputs to-be-processed data or signaling information to the chip system 1700 for processing.

Specifically, for example, if the chip system 1700 is installed in the first device, and the logic circuit 1710 is coupled to the input/output interface 1720, the logic circuit 1710 may send a first ACR mode through the input/output interface 1720, where the first ACR mode may be determined by the logic circuit 1710 based on reference information; or the input/output interface 1720 may input reference information to the logic circuit 1710 for processing. For another example, if the chip system 1700 is installed in the second device, and the logic circuit 1710 is coupled to the input/output interface 1720, the logic circuit 1710 may send reference information to an H-SMF through the input/output interface 1720. The reference information may be generated by the logic circuit 1710.

In a solution, the chip system 1700 is configured to implement operations performed by the first device in the foregoing method embodiments.

For example, the logic circuit 1710 is configured to implement a processing related operation performed by the first device in the foregoing method embodiments, for example, a processing related operation performed by the first device in the embodiment shown in FIG. 7, a processing related operation performed by the EES in either of the embodiments shown in FIG. 8 and FIG. 9, a processing related operation performed by the EEC in either of the embodiments shown in FIG. 10 and FIG. 11, or a processing related operation performed by the EAS in either of the embodiments shown in FIG. 12 and FIG. 13. The input/output interface 1720 is configured to implement a sending and/or receiving related operation performed by the first device in the foregoing method embodiments, for example, a sending and/or receiving related operation performed by the first device in the embodiment shown in FIG. 7, a sending and/or receiving related operation performed by the EES in either of the embodiments shown in FIG. 8 and FIG. 9, a sending and/or receiving related operation performed by the EEC in either of the embodiments shown in FIG. 10 and FIG. 11, or a sending and/or receiving related operation performed by the EAS in either of the embodiments shown in FIG. 12 and FIG. 13.

In another solution, the chip system 1700 is configured to implement operations performed by the second device in the foregoing method embodiments.

For example, the logic circuit 1710 is configured to implement a processing related operation performed by the second device in the foregoing method embodiments, for example, a processing related operation performed by the second device in the embodiment shown in FIG. 7, a processing related operation performed by the EEC and the EAS in either of the embodiments shown in FIG. 8 and FIG. 9, a processing related operation performed by the EES and the AC in either of the embodiments shown in FIG. 10 and FIG. 11, or a processing related operation performed by the EES, the AC, and the EEC in either of the embodiments shown in FIG. 12 and FIG. 13. The input/output interface 1720 is configured to implement a sending and/or receiving related operation performed by the second device in the foregoing method embodiments, for example, a sending and/or receiving related operation performed by the second device in the embodiment shown in FIG. 7, a sending and/or receiving related operation performed by the EEC and the EAS in either of the embodiments shown in FIG. 8 and FIG. 9, a sending and/or receiving related operation performed by the EEC and the AC in either of the embodiments shown in FIG. 10 and FIG. 11, or a sending and/or receiving related operation performed by the EES, the AC, and the EEC in either of the embodiments shown in FIG. 12 and FIG. 13.

An embodiment of this application further provides a computer-readable storage medium, where the computer-readable storage medium stores computer instructions for implementing the method performed by a device in the foregoing method embodiments.

For example, when the computer program is executed by a computer, the computer is enabled to implement the method performed by the first device in the foregoing method embodiments.

For another example, when the computer program is executed by a computer, the computer is enabled to implement the method performed by the second device in the foregoing method embodiments.

An embodiment of this application further provides a computer program product, including instructions. When the instructions are executed by a computer, the method performed by a device (for example, the first device or the second device) in the foregoing method embodiments is implemented.

An embodiment of this application further provides a communication system, including the foregoing first device and second device. Optionally, the system further includes a device that communicates with the first device and/or the second device.

An embodiment of this application further provides a communication system, including at least one of the foregoing devices such as the AC, the EEC, the EES, and the EAS. For example, the AC is configured to perform the method performed on an AC side in the foregoing method embodiments (for example, the embodiments shown in FIG. 7 to FIG. 14). The EEC is configured to perform the method performed on an EEC side in the foregoing method embodiments (for example, the embodiments shown in FIG. 7 to FIG. 14). The EES is configured to perform the method performed on an EES side in the foregoing method embodiments (for example, the embodiments shown in FIG. 7 to FIG. 14). The EAS is configured to perform the method performed on an EAS side in the foregoing method embodiments (for example, the embodiments shown in FIG. 7 to FIG. 14).

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a first device, reference information, wherein the reference information comprises at least one of the following information: a type of an application, a service continuity requirement of the application, an application context relocation ACR mode indicated by a client, an ACR mode indicated by a server, an ACR scenario indicated by the client, and an ACR scenario indicated by the server; and
determining, by the first device, a first ACR mode for the application based on the reference information, wherein the first ACR mode is a single-ACR mode or a multi-ACR mode.

2. The method according to claim 1, wherein
the first ACR mode is the multi-ACR mode, and the method further comprises: determining, by the first device, at least two ACR scenarios in the multi-ACR mode for the application based on the reference information; or
the first ACR mode is the single-ACR mode, and the method further comprises: determining, by the first device, one ACR scenario in the single-ACR mode for the application based on the reference information.

3. The method according to claim 2, wherein the method further comprises:
determining, by the first device, the at least two ACR scenarios in the multi-ACR mode for the application based on the reference information, wherein the method further comprises: sending, by the first device, the at least two ACR scenarios; or
determining, by the first device, the one ACR scenario in the single-ACR mode for the application based on the reference information, wherein the method further comprises: sending, by the first device, the ACR scenario.

4. The method according to any one of claims 1 to 3, wherein the method further comprises:
sending, by the first device, the first ACR mode.

5. The method according to any one of claims 1 to 4, wherein
the ACR scenario indicated by the client comprises at least one of the following: an ACR scenario supported by the client, an ACR scenario determined based on the ACR scenario supported by the client, and an ACR scenario determined based on the type of the application and/or the service continuity requirement of the application; and/or
the ACR scenario indicated by the server comprises at least one of the following: an ACR scenario supported by the server, an ACR scenario determined based on the ACR scenario supported by the server, and an ACR scenario determined based on the type of the application and/or the service continuity requirement of the application.

6. The method according to any one of claims 1 to 5, wherein the first device is an edge enabler server EES.

7. The method according to claim 6, wherein the obtaining, by a first device, reference information comprises at least one of the following:
receiving, by the EES, at least one of the following information from an edge enabler client EEC: the type of the application, the service continuity requirement of the application, the ACR mode indicated by the client, or the ACR scenario indicated by the client, wherein the client is the EEC and/or an application client AC;
receiving, by the EES, the ACR scenario indicated by the server and/or the ACR mode indicated by the server from an edge application server EAS, wherein the server is the EAS; or
configuring, by the EES, the ACR scenario indicated by the server and/or the ACR mode indicated by the server, wherein the server is the EES.

8. The method according to claim 6 or 7, wherein the method further comprises at least one of the following:
sending, by the EES, the first ACR mode to the EAS and/or the EEC;
sending, by the EES, the first ACR mode to the AC via the EEC;
sending, by the EES, the at least two ACR scenarios in the multi-ACR mode to the EAS and/or the EEC, or sending, by the EES, the one ACR scenario in the single-ACR mode to the EAS and/or the EEC; or
sending, by the EES, the at least two ACR scenarios in the multi-ACR mode to the AC via the EEC, or sending, by the EES, the one ACR scenario in the single-ACR mode to the AC via the EEC.

9. The method according to any one of claims 1 to 5, wherein the first device is an edge enabler client EEC.

10. The method according to claim 9, wherein the obtaining, by a first device, reference information comprises at least one of the following:
receiving, by the EEC, the ACR mode indicated by the server and/or the ACR scenario indicated by the server from an edge enabler server EES, wherein the server is the EES and/or an edge application server EAS;
receiving, by the EEC, at least one of the following information from an application client AC: the type of the application, the service continuity requirement of the application, the ACR mode indicated by the client, or the ACR scenario indicated by the client, wherein the client is the AC; or
configuring, by the EEC, the ACR scenario indicated by the client and/or the ACR mode indicated by the server, wherein the client is the EEC.

11. The method according to claim 9 or 10, wherein the method further comprises at least one of the following:
sending, by the EEC, the first ACR mode to the EES and/or the AC;
sending, by the EEC, the first ACR mode to the EAS via the EES;
sending, by the EEC, the at least two ACR scenarios in the multi-ACR mode to the EES and/or the AC, or sending, by the EEC, the one ACR scenario in the single-ACR mode to the EES and/or the AC; or
sending, by the EEC, the at least two ACR scenarios in the multi-ACR mode to the EAS via the EES, or sending, by the EEC, the one ACR scenario in the single-ACR mode to the EAS via the EES.

12. The method according to any one of claims 1 to 5, wherein the first device is an edge application server EAS.

13. The method according to claim 12, wherein the obtaining, by a first device, reference information comprises:
receiving, by the EAS, at least one of the following information from an edge enabler server EES: the type of the application, the service continuity requirement of the application, the ACR mode indicated by the client, the ACR mode indicated by the server, the ACR scenario indicated by the client, and the ACR scenario indicated by the server, wherein the client is an application client AC and/or an edge enabler client ECS, and the server is the EES; and/or
configuring, by the EAS, the ACR mode indicated by the server and/or the ACR scenario indicated by the server, wherein the server is the EAS.

14. The method according to claim 12 or 13, wherein the method further comprises at least one of the following:
sending, by the EAS, the first ACR mode to the EES;
sending, by the EAS, the first ACR mode to the EEC via the EES;
sending, by the EAS, the first ACR mode to the AC via the EES and the EEC;
sending, by the EAS, the at least two ACR scenarios in the multi-ACR mode to the EES, or sending, by the EAS, the one ACR scenario in the single-ACR mode to the EES;
sending, by the EAS, the at least two ACR scenarios in the multi-ACR mode to the EEC via the EES, or sending, by the EAS, the one ACR scenario in the single-ACR mode to the EEC via the EES; or
sending, by the EAS, the at least two ACR scenarios in the multi-ACR mode to the AC via the EES and the EEC, or sending, by the EAS, the one ACR scenario in the single-ACR mode to the AC via the EES and the EEC.

15. A communication method, wherein the method comprises:
obtaining, by a second device, reference information, wherein the reference information comprises at least one of the following: a type of an application, a service continuity requirement of the application, an application context relocation ACR mode indicated by a client, an ACR mode indicated by a server, an ACR scenario indicated by the client, and an ACR scenario indicated by the server;
sending, by the second device, the reference information to a first device; and
receiving, by the second device, a first ACR mode from the first device, wherein the first ACR mode is determined based on the reference information, and the ACR mode is a single-ACR mode or a multi-ACR mode.

16. The method according to claim 15, wherein
the first ACR mode is the multi-ACR mode, and the method further comprises: receiving, by the second device, at least two ACR scenarios in the multi-ACR mode from the first device; or
the first ACR mode is the single-ACR mode, and the method further comprises: receiving, by the second device, one ACR scenario in the single-ACR mode from the first device.

17. The method according to claim 15 or 16, wherein
the ACR scenario indicated by the client comprises at least one of the following: an ACR scenario supported by the client, an ACR scenario determined based on the ACR scenario supported by the client, and an ACR scenario determined based on the type of the application and/or the service continuity requirement of the application; and/or
the ACR scenario indicated by the server comprises at least one of the following: an ACR scenario supported by the server, an ACR scenario determined based on the ACR scenario supported by the server, and an ACR scenario determined based on the type of the application and/or the service continuity requirement of the application.

18. The method according to any one of claims 15 to 17, wherein the second device is an application client AC.

19. The method according to claim 18, wherein the obtaining, by a second device, reference information comprises:
configuring, by the AC, at least one of the following information: the type of the application, the service continuity requirement of the application, the ACR mode indicated by the client, or the ACR scenario indicated by the client, wherein the client is the AC; or

20. The method according to claim 19, wherein the first device is any one of the following: an edge enabler client EEC, an edge enabler server EES, or an edge application server EAS, and the sending, by the second device, the reference information to a first device comprises at least one of the following:
when the first device is the EEC, sending, by the AC, the reference information to the EEC;
when the first device is the EES, sending, by the AC, the reference information to the EES via the EEC; or
when the first device is the EAS, sending, by the AC, the reference information to the EAS via the EEC and the EES.

21. The method according to claim 19 or 20, wherein the first device is any one of the following: the edge enabler client EEC, the edge enabler server EES, or the edge application server EAS, and the receiving, by the second device, a first ACR mode from the first device comprises at least one of the following:
when the first device is the EEC, receiving, by the AC, the first ACR mode from the EEC;
when the first device is the EES, receiving, by the AC, the first ACR mode from the EES via the EEC; or
when the first device is the EAS, receiving, by the AC, the first ACR mode from the EAS via the EEC and the EES.

22. The method according to any one of claims 15 to 17, wherein the second device is an edge enabler client EEC.

23. The method according to claim 22, wherein the obtaining, by a second device, reference information comprises:
configuring, by the EEC, the ACR mode indicated by the client and/or the ACR scenario indicated by the client, wherein the client is the EEC; and/or
receiving, by the EEC, at least one of the following information from an application client AC: the type of the application, the service continuity requirement of the application, the ACR mode indicated by the client, or the ACR scenario indicated by the client, wherein the client is the AC.

24. The method according to claim 22 or 23, wherein the first device is an edge enabler server EES or an edge application server EAS; and
the sending, by the second device, the reference information to a first device comprises:
when the first device is the EES, sending, by the EEC, the reference information to the EES; or
when the first device is the EAS, sending, by the EEC, the reference information to the EAS via the EES.

25. The method according to any one of claims 22 to 24, wherein the first device is the edge enabler server EES or the edge application server EAS, and the receiving, by the second device, a first ACR mode from the first device comprises:
when the first device is the EES, receiving, by the EEC, the first ACR mode from the EES; or
when the first device is the EAS, receiving, by the EEC, the first ACR mode from the EAS via the EES.

26. The method according to any one of claims 22 to 25, wherein after the receiving, by the second device, a first ACR mode from the first device, the method further comprises:
sending, by the EEC, the first ACR mode to the AC.

27. The method according to any one of claims 15 to 17, wherein the second device is an edge application server EAS.

28. The method according to claim 27, wherein the obtaining, by a second device, reference information comprises:
configuring, by the EAS, the ACR mode indicated by the server and/or the ACR scenario indicated by the server, wherein the server is the EAS.

29. The method according to claim 27 or 28, wherein the first device is an edge enabler server EES or an edge enabler client EEC; and
the sending, by the second device, the reference information to a first device comprises:
when the first device is the EES, sending, by the EAS, the reference information to the EES; or
when the first device is the EEC, sending, by the EAS, the reference information to the EEC via the EES.

30. The method according to any one of claims 27 to 29, wherein the first device is the edge enabler server EES or the edge enabler client EEC, and the receiving, by the second device, a first ACR mode from the first device comprises:
when the first device is the EES, receiving, by the EAS, the first ACR mode from the EES; or
when the first device is the EEC, receiving, by the EAS, the first ACR mode from the EEC via the EES.

31. The method according to any one of claims 15 to 17, wherein the second device is an edge enabler server EES.

32. The method according to claim 31, wherein the obtaining, by a second device, reference information comprises at least one of the following:
configuring, by the EES, the ACR mode indicated by the server and/or the ACR scenario indicated by the server, wherein the server is the EES;
receiving, by the EES, the ACR mode indicated by the server and/or the ACR scenario indicated by the server from an edge application server EAS, wherein the server is the EAS; or
receiving, by the EES, at least one of the following information from an edge enabler client EEC: the type of the application, the service continuity requirement of the application, the ACR mode indicated by the client, or the ACR scenario indicated by the client, wherein the client is the EEC and/or an application client AC.

33. The method according to claim 31 or 32, wherein the first device is the edge enabler client EEC or the edge application server EAS, and the sending, by the second device, the reference information to a first device comprises:
sending, by the EES, the reference information to the EEC or the EAS.

34. The method according to any one of claims 31 to 33, wherein the first device is the edge enabler client EEC or the edge application server EAS, and the method further comprises:
when the first device is the EEC, after the EES receives the first ACR mode from the EEC, sending, by the EES, the first ACR mode to the EAS; or
when the first device is the EAS, after the EES receives the first ACR mode from the EAS, sending, by the EES, the first ACR mode to the EEC, and/or sending, by the EES, the first ACR mode to the AC via the EEC.

35. A communication apparatus, comprising:
a processor, configured to execute a computer program stored in a memory, so that the apparatus performs the method according to any one of claims 1 to 14, or performs the method according to any one of claims 15 to 34.

36. The apparatus according to claim 35, wherein the apparatus further comprises the memory.

37. A computer-readable storage medium, wherein the computer-readable storage medium stores a computer program; and when the computer program is run on a computer, the computer is enabled to perform the method according to any one of claims 1 to 14, or the computer is enabled to perform the method according to any one of claims 15 to 34.

38. A computer program product, wherein the computer program product comprises instructions for performing the method according to any one of claims 1 to 14, or the computer program product comprises instructions for performing the method according to any one of claims 15 to 34.

39. A communication system, comprising a first device and a second device, wherein
the first device is configured to perform the method according to any one of claims 1 to 14, and the second device is configured to perform the method according to any one of claims 15 to 34.
